(19) **Europäisches Patentamt European Patent Office Office européen des brevets**

(11) **EP 4 773 070 A1**

(12) **EUROPEAN PATENT APPLICATION**
published in accordance with Art. 153(4) EPC

(43) Date of publication:
**08.07.2026 Bulletin 2026/28**

(21) Application number: **24890991.3**

(22) Date of filing: **29.05.2024**

(51) International Patent Classification (IPC):
***G06Q 50/06*** *(2024.01)*

(52) Cooperative Patent Classification (CPC):
**G06Q 40/049; G06Q 40/04;** G06Q 50/06

(86) International application number:
**PCT/JP2024/019709**

(87) International publication number:
**WO 2025/104944 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.11.2023 JP 2023195913**

(71) Applicant: **D-Sharing Co., Ltd.**
**Tokyo 158-0082 (JP)**

(72) Inventor: **SAKAI, Naoki**
**Tokyo 158-0082 (JP)**

(74) Representative: **JD&P Patent Attorneys**
**Joanna Dargiewicz & Partners**
**ul. Mysliborska 93A/50**
**03-185 Warszawa (PL)**

(54) **DEVICE, METHOD AND PROGRAM FOR CONTROLLING TRANSACTION OF POWER OR ENVIRONMENTAL CERTIFICATE**

(57) Provided is a device, a method, and a program for enabling tracking of power supply and demand of renewable energy while separating an unsuccessful delivery risk of power with high severity from an unsuccessful delivery risk of a renewable energy value and securing delivery of power with high accuracy by simultaneously and continuously trading power and environmental certificates.

Based on information such as power demand-supply plan information, future transaction information, power demand-supply performance information, and physical transaction information, a future transaction and a physical transaction of power and environmental certificates are contracted and cleared by sequentially duplicating power selling note data, power purchasing note data, environmental certificate selling note data, and environmental certificate purchasing note data each associated with a time stamp, a par amount, and a holder ID, and rewriting the par amount and the holder ID thereof.

FIG.1

# EP 4 773 070 A1

**Description**

Technical Field

The present invention relates to a control device, a control method, and a program for transaction of power or environmental certificates.

Background Art

In recent years, in order to spread renewable energy (renewable energy) such as solar power generation, a transaction method has been common in which an environmental value possessed by power derived from renewable energy is separated from a value of the power itself and converted into environmental certificates, a renewable energy power supplier sells the power and the environmental certificate to different power consumers, and a power consumer combines and offsets power and environmental certificates purchased from different power suppliers to regard a CO2 emission amount due to power consumption as zero.

As a type of device that supports the transaction method, for example, Patent Literature 1 discloses an environmental value management device that predicts a required amount of environmental value to be procured using a demander's request regarding the environmental value of supply power and a predicted value of the demander's power demand, and creates a procurement plan for procuring an environmental value certificate corresponding to the required amount within a predetermined plan period.

Citation List

Patent Literature

Patent Literature 1: JP 2023-98446 A

Summary of Invention

Technical Problem

However, in such a mechanism as described above, since the offset between power and environmental certificates created in different time zones is possible, power generated by thermal power generation at night when renewable energy is insufficient is offset by environmental certificates of solar power generation which inexpensively generates and creates power in large amount in the daytime, and the difference of the renewable energy across time zones is increased more and more, and output control of randomly stopping the power generation of a solar power plant in the daytime is frequently performed.

Therefore, a stricter method has been newly proposed in which power consumption performed in a specific time zone (for example, one hour) on a specific date can be offset only by environmental certificates (time-stamped environmental certificate) created by renewable energy power generation in the time zone and in which the time zone is inscribed.

However, in principle, since a time-stamped environmental certificate is created only after power generation and consumption, it is difficult to reliably obtain a required amount of the environmental certificate by physical transaction after power consumption. Furthermore, it is difficult for a renewable energy power generator to predict the demand of the certificate, and a price adjustment function of the supply and demand does not work, so that unsold products and a risk of buying back increase. In a certificate transaction, it is generally difficult for a supplier to track how offset is made after delivery.

Therefore, there are many power consumers who prefer renewable energy power (bundled renewable energy power) from which its environmental value is not separated, to power (unbundled renewable energy power) obtained by combining a certificate and power from different power generators, and attempts have been made to trade the bundled renewable energy power. However, in general, since the deviation risk between a prior predicted value and an actual value of renewable energy power generation amount exceeds that of thermal power generation or nuclear power generation, there is a risk that the power consumers cannot secure the power itself and cause a supply-demand shortage type power outage, or conversely, there is a risk that the supply exceeds and rolling output shutdowns frequently occur at power plants.

Therefore, an object of the present invention is to provide a device, a method, and a program for enabling tracking of supply and demand of renewable energy while separating an unsuccessful delivery risk of power with high severity from an unsuccessful delivery risk of a renewable energy value and securing transfer of power with high accuracy by simultaneously and continuously trading power and environmental certificates.

Solution to Problem

[1] A control device including: a processor; a storage unit; and a transmission/reception unit, in which

the processor generates, based on power demand-supply plan information indicating a power generation plan and a power consumption plan for each time zone,
environmental certificate selling note data associated with a time stamp, a par amount, and a holder ID, and environmental certificate purchasing note data associated with a time stamp, a par amount, and a holder ID, and stores the data in the storage unit;
makes a contract of a future transaction of environmental certificates by,
based on future transaction information received by the transmission/reception unit,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit;
clears the future transaction of the environmental certificate by,
based on power demand-supply performance information received by the transmission/reception unit, rewriting the par amounts of the environmental certificate selling note data and the environmental certificate purchasing note data to actual values; and
makes a contract of a physical transaction of the environmental certificate by,
based on physical transaction information received by the transmission/reception unit,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit.

[2] A control device including: a processor; a storage unit; and a transmission/reception unit, in which

the processor generates, based on power demand-supply plan information indicating a power generation plan and a power consumption plan for each time zone,
power selling note data associated with a time stamp, a par amount, and a holder ID,
power purchasing note data associated with a time stamp, a par amount, and a holder ID,
environmental certificate selling note data associated with a time stamp, a par amount, and a holder ID, and environmental certificate purchasing note data associated with a time stamp, a par amount, and a holder ID, and stores the data in the storage unit;
makes a contract of a future transaction of power and environmental certificates by,
based on future transaction information received by the transmission/reception unit,
duplicating the power selling note data, rewriting the par amount of the duplicated power selling note data to the same value as a contract amount, rewriting the holder ID of the duplicated power selling note data to the same value as a purchaser ID, and storing the data in the storage unit,
duplicating the power purchasing note data, rewriting the par amount of the duplicated power purchasing note data to the same value as a contract amount, rewriting the holder ID of the duplicated power purchasing note data to the same value as a seller ID, and storing the data in the storage unit;
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit;

clears the future transaction of the power and the environmental certificate by,

based on power demand-supply performance information received by the transmission/reception unit, rewriting the par amount of the power selling note data, the power purchasing note data, the environmental certificate selling note data, and the environmental certificate purchasing note data to an actual value;

makes a contract of a physical transaction of the environmental certificate by,

based on physical transaction information received by the transmission/reception unit,

duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and

duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit; and

makes a contract of a retrospective swap transaction of power by,

based on swap transaction information received by the transmission/reception unit,

rewriting the holder IDs of the power selling note data and the power purchasing note data, and storing the data in the storage unit.

[3] The control device according to [2], in which
the processor further issues a consumption certificate of renewable energy power according to a result of searching the storage unit for the power selling note data satisfying a condition corresponding to the environmental certificate selling note data based on environmental certificate invalidation information received by the transmission/reception unit.

[4] The control device according to [2], in which
the processor further issues supply certificate data of renewable energy power according to a result of searching the storage unit for the power purchasing note data satisfying a condition corresponding to the environmental certificate purchasing note data based on supply certificate issuance information received by the transmission/reception unit.

[5] The control device according to [1] or [2], in which

the processor further makes a contract of a secondary physical transaction of the environmental certificate by, based on secondary physical transaction information received by the transmission/reception unit,

duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit,

duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit, and

deleting the time stamps in the duplicated environmental certificate selling note data and the duplicated environmental certificate purchasing note data.

[6] The control device according to [2], in which

the processor further, based on output control information and the future transaction information received by the transmission/reception unit,

calculates a renewable energy power unit price for each power consumer or for each power supplier based on a contract unit price of power and a contract unit price of environmental certificates corresponding to the power, and selects a control target facility of the power consumer or the power supplier in ascending order of the renewable energy power unit price until a value obtained by adding a contract power amount reaches a required amount of output control; and

the transmission/reception unit transmits an output control signal to a smart meter attached to the control target facility selected by the processor.

[7] A method causing a computer to perform:

generating, based on power demand-supply plan information when the power demand-supply plan information indicating a power generation plan and a power consumption plan for each time zone is received, environmental certificate selling note data associated with a par amount and a holder ID, and environmental certificate purchasing note data associated with a par amount and a holder ID, and storing the data in the storage unit;
making a contract of a future transaction of environmental certificates by,
based on future transaction information when the future transaction information is received,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit;
rewriting, based on power demand-supply performance information when the power demand-supply performance information is received, par amounts of the environmental value selling note data and the environmental value purchasing note data to actual values; and
making a contract of a physical transaction of the environmental certificate by,
based on physical transaction information when the physical transaction information is received,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit.

[8] A program causing a computer to perform:

generating, based on power demand-supply plan information when the power demand-supply plan information indicating a power generation plan and a power consumption plan for each time zone is received, environmental certificate selling note data associated with a par amount and a holder ID, and environmental certificate purchasing note data associated with a par amount and a holder ID, and storing the data in the storage unit;
making a contract of a future transaction of environmental certificates by,
based on future transaction information when the future transaction information is received,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit;
rewriting, based on power demand-supply performance information when the power demand-supply performance information is received, par amounts of the environmental value selling note data and the environmental value purchasing note data to actual values; and
making a contract of a physical transaction of the environmental certificate by,
based on physical transaction information when the physical transaction information is received,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit.

[9] A recording medium on which a program is recorded, the program causing a computer to perform:

generating, based on power demand-supply plan information when the power demand-supply plan information indicating a power generation plan and a power consumption plan for each time zone is received, environmental certificate selling note data associated with a par amount and a holder ID, and environmental certificate purchasing note data associated with a par amount and a holder ID, and storing the data in the storage unit;
making a contract of a future transaction of environmental certificates by,
based on future transaction information when the future transaction information is received,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit;
rewriting, based on power demand-supply performance information when the power demand-supply performance information is received, par amounts of the environmental value selling note data and the environmental value purchasing note data to actual values; and
making a contract of a physical transaction of the environmental certificate by,
based on physical transaction information when the physical transaction information is received,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit.

[10] The control device according to any one of [1] to [6], in which

the processor, based on order information received by the transmission/reception unit,
generates order data including at least information on an order ID, an ID of note data to be traded, an ID of a purchaser or seller who transmitted an order, an order of arrival, a desired transaction unit price, a desired transaction amount, and a desired priority order for each order, and stores the data in the storage unit; and
the processor further generates priority order information for each order based on the information on the order of arrival, the desired transaction unit price, the desired transaction amount, or the desired priority order for each order included in the order data, and adds them to the order data to determine the priority order of each order; and
makes a contract of the future transaction or the physical transaction using the priority order of each order based on the order data and the future transaction information or the physical transaction information.

[11] The control device according to [10], in which

the processor extracts order status information including information on an upper limit, a lower limit, an average value or a median value of the desired transaction unit price or an upper limit, a lower limit, an average value or a median value of the desired transaction amount based on the order data stored in the storage unit, and adds the information to the order data; and
the processor further transmits the order data to a terminal of the seller or the purchaser via the transmission/reception unit.

[12] The control device according to any one of [1] to [6] or any one of [10] and [11], in which

the processor generates information on a transaction non-establishment risk for each order based on the priority order of each order included in the order data, power generation/consumption performance data, transaction performance data, and weather data stored in the storage unit, and adds the information to the order data; and the processor further transmits the order data to a terminal of the seller or the purchaser via the transmission/-reception unit.

[13] The control device according to any one of [1] to [6] or any one of [10] to [12], or claim 1 or 2, in which the processor adds a collective transaction ID to each piece of note and certificate data included in a set of a plurality of pieces of note and certificate data to be traded, and processes the set of the plurality of pieces of note and certificate data to which the collective transaction ID is added as a single piece of note and certificate data associated with the collective transaction ID.

Advantageous Effects of Invention

According to the present invention, there is provided a device, a method, and a program for enabling tracking of supply and demand of renewable energy while separating an unsuccessful delivery risk of power with high severity from an unsuccessful delivery risk of a renewable energy value and securing transfer of power with high accuracy by simultaneously and continuously trading power and environmental certificates.

Brief Description of Drawings

Fig. 1 is a diagram illustrating a configuration example of a network to which a transaction/control platform is connected.
Fig. 2 is a diagram illustrating a configuration example of a network to which the transaction/control platform is connected.
Fig. 3 is a sequence diagram illustrating a flow of processing related to a transaction.
Fig. 4 is a conceptual diagram illustrating a flow of transaction of a power selling note and a power purchasing note.
Fig. 5 is a conceptual diagram illustrating a flow of transaction of environmental certificates selling note and environmental certificates purchasing note.
Fig. 6 is a sequence diagram illustrating a procedure of transaction participant registration processing.
Fig. 7 is a sequence diagram illustrating a procedure of note issuance processing.
Fig. 8 is a sequence diagram illustrating a procedure of future transaction processing (power).
Fig. 9 is a sequence diagram illustrating a procedure of future transaction processing (environmental certificate).
Fig. 10 is a sequence diagram illustrating a procedure of future note reconciliation processing.
Fig. 11 is a sequence diagram illustrating a procedure of output control processing.
Fig. 12 is a diagram illustrating a procedure example of output control processing.
Fig. 13 is a diagram illustrating a procedure example of output control processing.
Fig. 14 is a sequence diagram illustrating a procedure of clearing processing of a future transaction.
Fig. 15 is a sequence diagram illustrating a procedure of a physical transaction of environmental certificates.
Fig. 16 is a sequence diagram illustrating a procedure of a retrospective swap transaction of power.
Fig. 17 is a conceptual diagram of a retrospective swap transaction of power.
Fig. 18 is a sequence diagram illustrating a procedure of environmental certificates invalidation processing.
Fig. 19 is a sequence diagram illustrating a procedure of supply certificate issuance processing.
Fig. 20 is a sequence diagram illustrating a procedure of secondary physical transaction of environmental certificates.
Fig. 21 is a diagram illustrating an example of the power selling note.
Fig. 22 is a diagram illustrating an example of the power purchasing note.
Fig. 23 is a diagram illustrating an example of the environmental certificate selling note.
Fig. 24 is a diagram illustrating an example of the environmental certificate purchasing note.
Fig. 25 is a diagram illustrating a transaction example in the transaction/control platform.
Fig. 26 is a diagram illustrating another transaction example in the transaction/control platform.
Fig. 27 is a diagram illustrating another transaction example in the transaction/control platform.
Fig. 28 is a main flowchart of priority transaction in the transaction/control platform.
Fig. 29 is a diagram illustrating a flow B of the priority transaction in the transaction/control platform.
Fig. 30 is a sequence diagram illustrating a procedure of accepting or updating a transaction order.
Fig. 31 is a sequence diagram illustrating a procedure of calculating and extracting information indicating an order status from each order information and notifying each user.

Fig. 32 is a sequence diagram illustrating execution of transaction processing.
Fig. 33 is a diagram illustrating transaction categories that can be realized by the transaction/control platform.
Fig. 34 is a diagram illustrating an example of a commodity transaction in the transaction/control platform.

Description of Embodiments

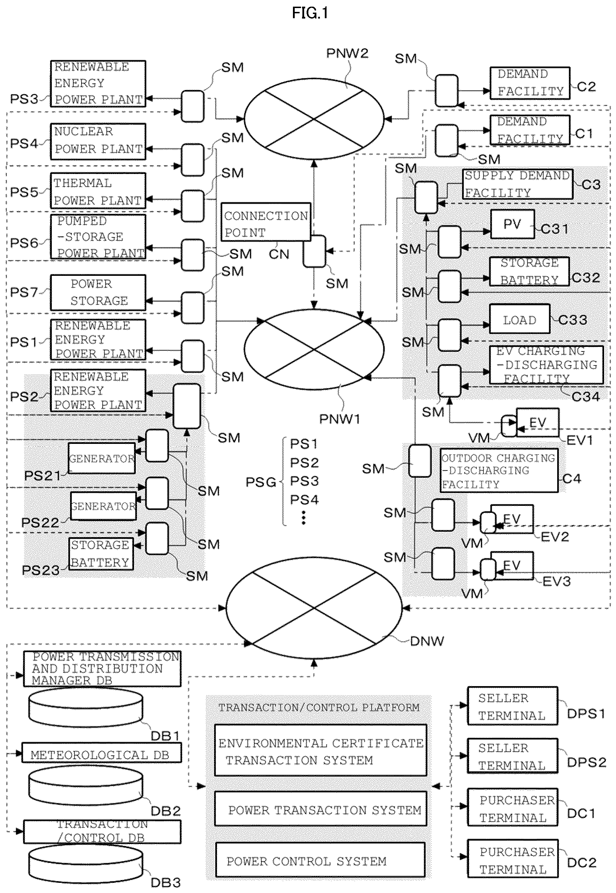

Hereinafter, a control platform according to embodiments of the present invention will be described with reference to Figs. 1 to 34. Note that the following embodiments are examples of the present invention, and the present invention is not limited to the following embodiments, and various other configurations can be adopted.

In addition, the terms "note" and "certificate" used in the present specification refer to a concept including "note data" and "certificate data" having information equivalent thereto.

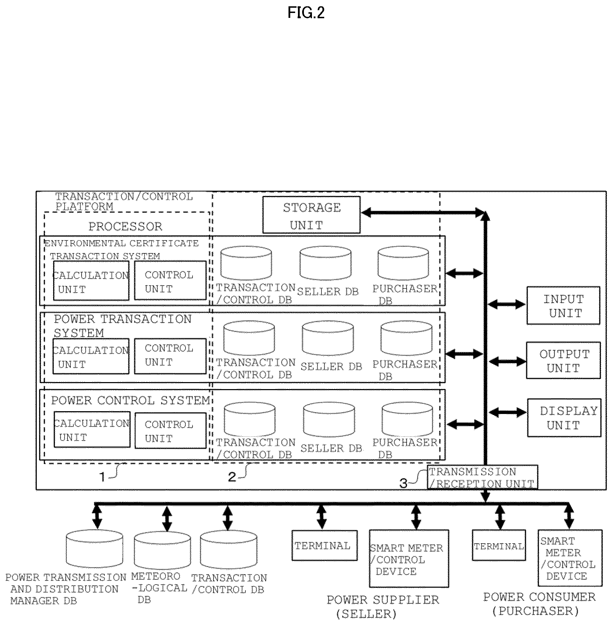

Figs. 1 and 2 are diagrams illustrating a configuration example of a transaction/control platform and a network to which environmental certificates transaction system, a power transaction system, and a power control system which are components thereof are connected. Note that a dash-dotted line connecting the components indicates the flow of power transmission and distribution, and a dotted line connecting the components indicates the flow of signals or data by wire or wirelessly. Note that, for some components, the fact that there may be a plurality of components of the same type other than those illustrated is indicated by... in the drawing. Note that there may be a plurality of power transaction markets and environmental certificate transaction markets other than this platform.

In addition, the transaction/control platform is a concept including any of a device that exhibits a similar function, a program that causes a computer to execute a similar function, and a storage medium that stores the program.

Power transmission and distribution networks PNW1 and PNW2 are networks that connect a power supplier, a power plant, a storage battery, a power consumer, and a charging and discharging facility for an electric vehicle (EV), which exist in predetermined regions, to each other.

The power transmission and distribution network PNW1 is connected to a power supply group PSG including various power supplies such as renewable energy power plants PS1 to 3, a nuclear power plant PS4, a thermal power plant PS5, a pumped-storage power plant PS6, and a power storage PS7, and transmits and distributes power generated by each power supply.

Note that each power plant may have, in the premises, segmented generators PS21 and 22 and a segmented storage battery PS23 for which metering is segmented. In addition, the power supply group PSG may have a power supply other than PS1 to PS4.

The renewable energy power plants PS1 to 3 refer to power supplies capable of performing power generation without $CO_2$ emission associated with power generation, storage batteries using renewable energy power supplies, or pumped-storage power plants. When an environmental value such as local production local consumption power generation or low carbon thermal power generation is recognized, the renewable energy may include all the power supply types having such an environmental value.

The generated power by the renewable energy power generation is supplied to power consumers (demand facilities) C1 to C4 via the power transmission and distribution network PNW1. Note that there may be many power consumers (demand facilities) other than the above C1 to C4, and electric vehicles EV1 to 3 that are charged and discharged from EV charging-discharging facilities C4 and C34 may be regarded as independent power supply consumers. In addition, the power supply consumer (supply demand facility) C3 can also return power generated in-house by a photovoltaic facility (PV) or the like in the demander premises to the power transmission and distribution network PNW1.

Note that the power consumer may have, in the premises, a PV (C31), a storage battery C32, a power consumption load C33, and the EV discharging-charging facility C34 for which metering is segmented. In addition, the electric vehicles EV1 to 3 may be charged and discharged by any charging-discharging facility.

The status of power consumption/charging, power generation/discharging, and distribution described above is transmitted to a communication network DNW at regular time intervals (for example, every 30 minutes or the like) by a smart meter SM installed in a power plant or a power consumer's premises, a home energy management system (HEMS) device, an in-vehicle meter VM built in the EV, and the like, and is stored in a database DB1 or a seller DB and a purchaser DB in the transaction/control platform. Note that the database DB1 is, for example, a database managed by a power transmission and distribution company, and stores data including a power generation amount and a power consumption amount per unit time for each supplier and consumer, and a distribution power amount at a power transmission and distribution network boundary point measured by the smart meter SM at a connection point in association with each power supplier ID, power consumer ID, facility ID, and the like.

The smart meter SM has a function of controlling a current and an output of a device remotely, automatically, and in real time through the communication network DNW.

A database DB2 is, for example, a database managed by the Meteorological Agency, and stores data including weather data per unit time.

A database DB3 stores various kinds of transaction data of power and environmental certificates, output control data, and the like by the transaction/control platform.

The communication network DNW can be made accessible to databases of various related organizations in addition to the databases DB1, DB2, and DB3 described above. For example, it is possible to optionally access a database or the like of Organization for Cross-regional Coordination of Transmission Operators, Japan, Japan Electric Power Exchange, and the like.

The transaction/control platform includes functions of environmental certificates transaction system A1, a power transaction system A2, and a power control system A3 as functions.

The environmental certificate transaction system A1 provides a function for executing a transaction of a time-stamped time stamped environmental certificate (environmental certificate) in a time zone in which an environmental value is created by renewable energy power generation. The power transaction system A2 provides a function for executing a power transaction. The power control system A3 provides a function for adjusting an output of a generator or a load using an output control device such as the smart meter.

As illustrated in Fig. 2, the transaction/control platform includes at least a processor, a storage unit, and a transmission/reception unit as a hardware configuration. As illustrated in Fig. 2, each of the systems A1, A2, and A3 may share the processor, the storage unit, an input/output unit, a display unit, the transmission/reception unit, a transaction/-control DB, the seller DB, and the purchaser DB, and operate in conjunction with each other.

The transmission/reception unit can receive a metering result by the smart meter SM and the in-vehicle meter VM through the communication network DNW, and the storage unit can store these pieces of information.

The processor can acquire past and latest metering results by the smart meter SM and the in-vehicle meter VM as actual values of the power generation amount of a power supplier and a power consumption of the power consumer, calculate predicted values of a generated power amount and a power consumption amount in each future time zone (for example, 30 minutes or 1 hour) based on the acquired actual value and the predicted value of Meteorological Agency data, and formulate a power generation plan and a power consumption plan (power demand-supply plan) of power in each time zone.

The transmission/reception unit can receive transaction information (future transaction information, physical transaction information, swap transaction information, secondary transaction information, and the like) transmitted from a seller terminal and a purchaser terminal through the communication network DNW, and the storage unit can store these pieces of information in the transaction/control DB.

The transmission/reception unit can receive output control information stored in a power transmission/distribution manager DB through the communication network DNW.

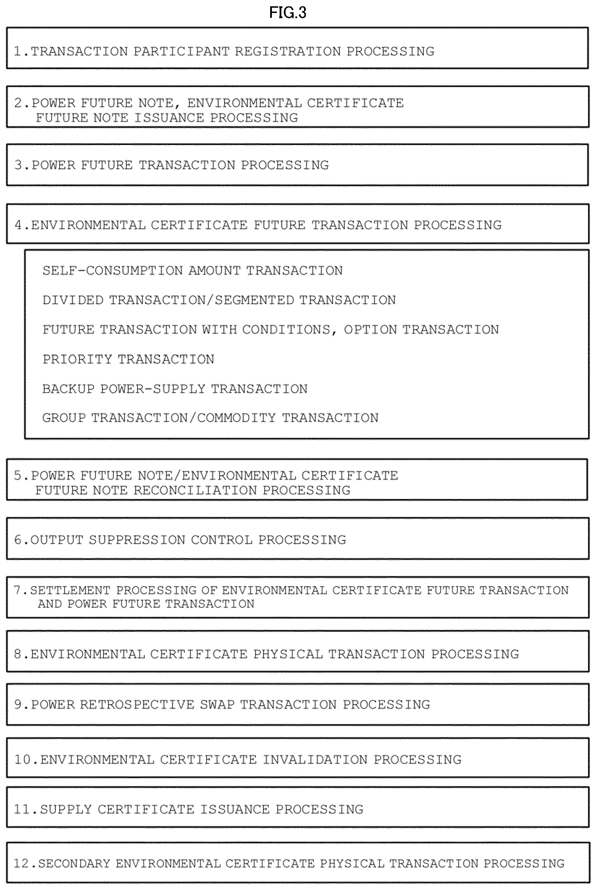

As illustrated in Fig. 3, the transaction/control platform can perform processing including transaction participant registration processing, future note issuance processing, power future transaction processing, environmental certificate future transaction processing, future note reconciliation processing, output control auction processing, future transaction clearing processing, environmental certificate physical transaction processing, power retrospective swap transaction processing, environmental certificate invalidation processing, supply certificate issuance processing, and environmental certificate secondary physical transaction processing.

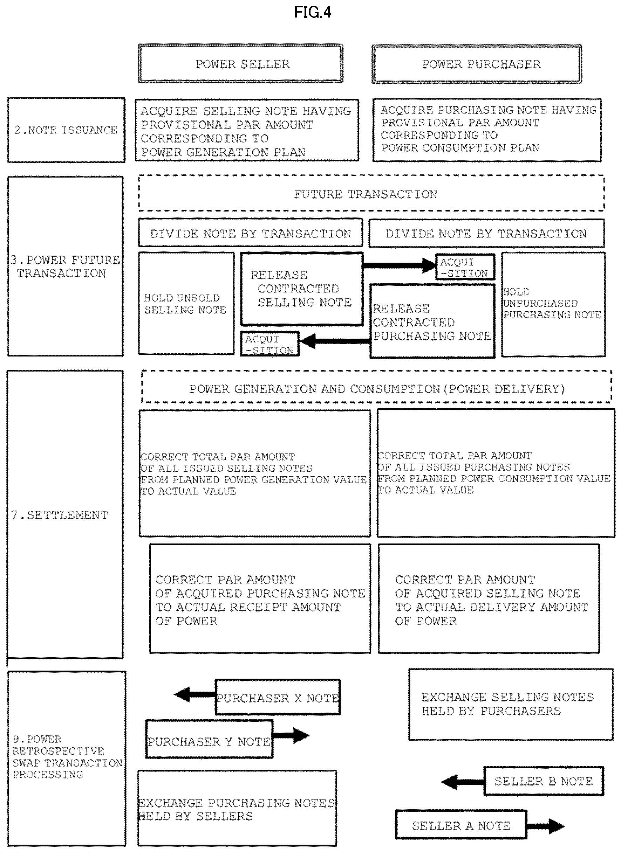

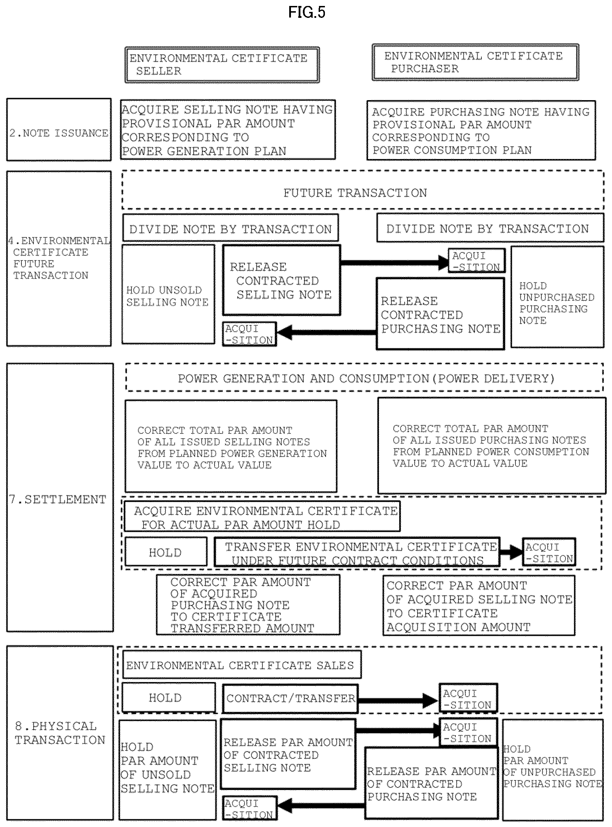

Fig. 4 is a conceptual diagram illustrating a flow of power transaction performed by the transaction/control platform. Also, Fig. 5 is a conceptual diagram illustrating a flow of environmental certificate transaction performed by the transaction/control platform.

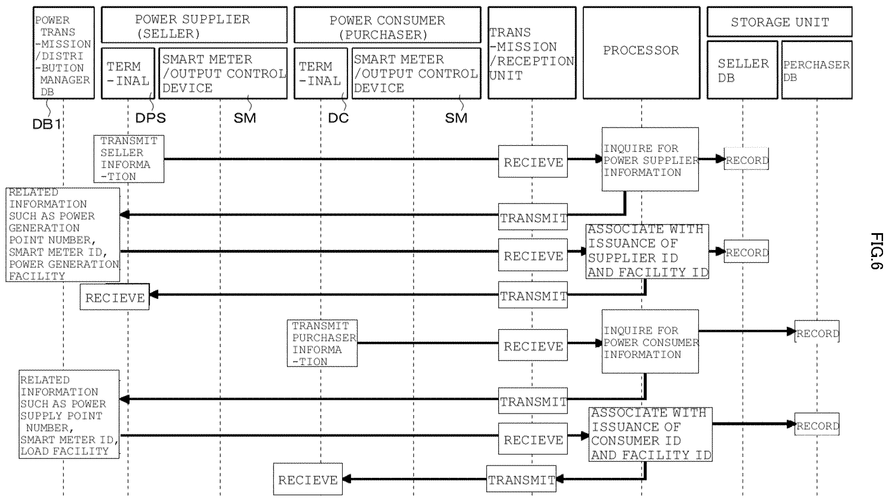

Fig. 6 is a sequence diagram illustrating a procedure of the transaction participant registration processing. Terminals DPS1 and 2 of power suppliers who sell power and environmental certificates, and terminals DC1 and 2 of power consumers who purchase the power and the environmental certificates each transmit the seller information or the purchaser information as a transaction participant to the transaction/control platform. The processor acquires related information such as a power generation/supply point number, a smart meter ID installed at the point, and a power generation/load facility from the power transmission/distribution manager DB or the like, issues a supplier ID, a consumer ID, and a facility ID in association with the information, transmits the information from the transmission/reception unit to each of the power supplier (seller) terminals and the power consumer (purchaser) terminals, and records the information in the storage unit.

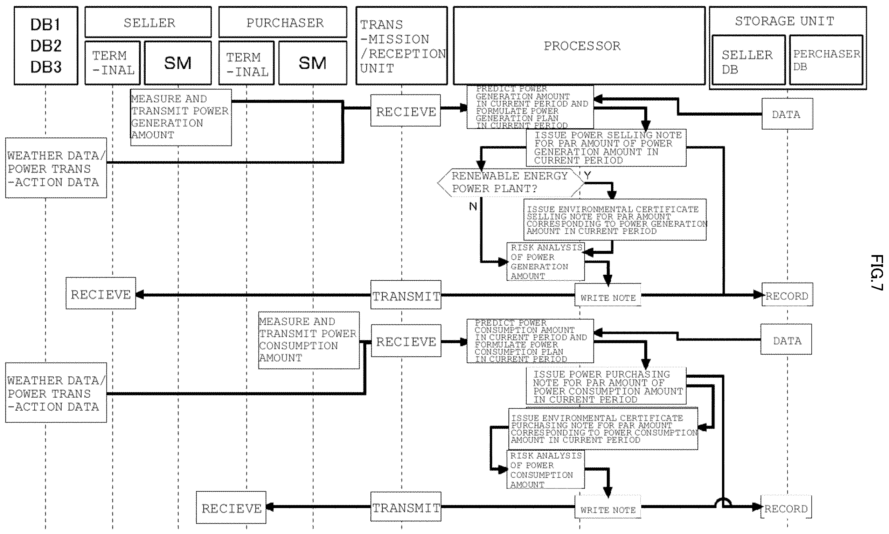

Fig. 7 is a sequence diagram illustrating a procedure of issuance processing of a power selling note, a power purchasing note, environmental certificates selling note, and environmental certificates purchasing note (four types of notes).

The processor can receive the power generation amounts of all the power plants PS1 to PS7 and PS21 to PS23 including not only renewable energy measured by the smart meters SM in Fig. 1, predict the power generation amount of a power plant in a certain future time zone (current period) based on the data such as the power generation amounts of all the power plants in the past and the correlation with the weather data, formulate the power generation plan of the power plant, and issue a power selling note having the planned power generation amount as the provisional par amount to the terminal of the power supplier. In addition, in a case where the power plant is a renewable energy power plant, it is possible to issue environmental certificates selling note having the same par amount as the power selling note to the power supplier.

The processor can then perform risk analysis processing. Specifically, the processor can construct a prediction model by performing multiple regression analysis, machine learning by AI, and the like of actual power generation amount of the power plant or a similar power plant in the past, past transaction/contract data of the entire market, weather data, and the like. Then, the processor can execute risk analysis processing (valuation processing) of calculating: a realization probability of the planned power generation amount (expected value); a standard deviation of the realization probability; a volatility such as a standard deviation of the expected value; a current period's power selling unit price and a current period's environmental certificate unit price (risk free unit price in the current period) in a case where it is assumed that an actual delivery is executed with a realization probability of 100% and a standard deviation of variation in the probability of 0; a discount rate obtained by taking into account a risk premium calculated from the volatility; and an expected unit price in the current period obtained by multiplying the risk free unit price in the current period by the discount rate. The processor can enter the results on the power selling note and the environmental certificate selling note, record them in the seller DB, and transmit them to the terminal of the power supplier (seller) via the transmission/reception unit.

The power selling note and the environmental certificate selling note can function with different roles at respective stages: at the time of a selling order of the future transaction, a voucher representing information on the scheduled sales amount, the sales conditions, the power supplier and the supply facility, and the risk valuation; at the time of contract, a voucher representing the provisional par amount, the purchaser, and other contract conditions; after the power is delivered, a voucher representing an actual delivery amount; when a physical transaction or retrospective transaction is performed, a voucher representing a transaction condition and a transaction partner; after an issuance of a power supply certificate, a voucher representing the processed amount and an inventory status, and as basic data for aggregating transactions such as for a local consumption achievement rate, process management, and inventory management in regions and groups.

Similarly, the processor can receive the power consumption amounts of the demand facilities C1 to C4, C31 to C34, and the electric vehicles EV1 to 3 measured by the smart meters SM and VM, predict the power consumption amount of the power consumer in a certain future time zone (current period) based on the data of the power consumption amounts of all the power consumers in the past and the correlation with the weather data, formulate the power consumption plan of the power consumer, and issue a power purchasing note and environmental certificates purchasing note having the planned power consumption amount as the provisional par amount to the terminal of the power consumer.

Note that the processor can formulate both a power generation plan in which a sales amount of surplus power is predicted and a power consumption plan in which a purchase amount for shortage power is predicted for a terminal of a supply consumer who self-consumes renewable energy power, and in addition, can issue the power selling note and the environmental certificate selling note having the planned power generation amount as a provisional par amount, and the power purchasing note and the environmental certificate purchasing note having the planned power consumption amount as a provisional par amount to the terminal of the supply consumer.

The processor can further formulate a power self-consumption plan in which a self-consumption amount of the renewable energy power of the supply consumer is predicted, and issue a power selling note, a power purchasing note, environmental certificates selling note, and environmental certificates purchasing note having the planned self-consumption amount as a provisional par amount to the terminal of the supply consumer.

The processor can then perform risk analysis processing. Specifically, the processor constructs a prediction model by performing multiple regression analysis, machine learning by AI, and the like of actual power consumption amount of the power consumer or a similar consumer in the past, past transaction/contract data of the entire market, weather data, and the like. Then, the processor executes risk analysis processing (valuation processing) of calculating: a realization probability of the planned power consumption amount (expected value); a standard deviation of the realization probability; a volatility such as a standard deviation of the expected value; a current period's power purchasing unit price and a current period's environmental certificate unit price (risk free unit price in the current period) in a case where it is assumed that an actual receipt is executed with a realization probability of 100% and a standard deviation of variation in the probability of 0; a discount rate obtained by taking into account a risk premium calculated from the volatility; and an expected unit price in the current period obtained by multiplying the risk free unit price in the current period by the discount rate. The processor enters the results on the power purchasing note and the environmental certificate purchasing note, records them in the purchaser DB, and transmits them to the terminal of the power consumer (purchaser) via the transmission/reception unit.

The power purchasing note and the environmental certificate purchasing note function with different roles at respective stages: at the time of a purchasing order of the future transaction, a voucher representing information on the scheduled purchase amount, the purchase conditions, the power consumer and the load facility, and the risk valuation; at the time of contract, a voucher representing the provisional par amount, the seller, and other contract conditions; after the power is delivered, a voucher representing an actual receipt amount; when a physical transaction or retrospective transaction is performed, a voucher representing a transaction condition and a transaction partner; after invalidation processing, a voucher representing the processed amount and an inventory status, and as basic data for aggregating transactions such as for a local production achievement rate, process management, and inventory management in regions and groups.

Note that the processor can receive a request of the seller or the purchaser at any stage after issuance of both the four types of notes and the time-stamped environmental certificate, and execute processing for division, integration, or change of the allocation of the par amount on the condition that the total amount of the par amount does not change.

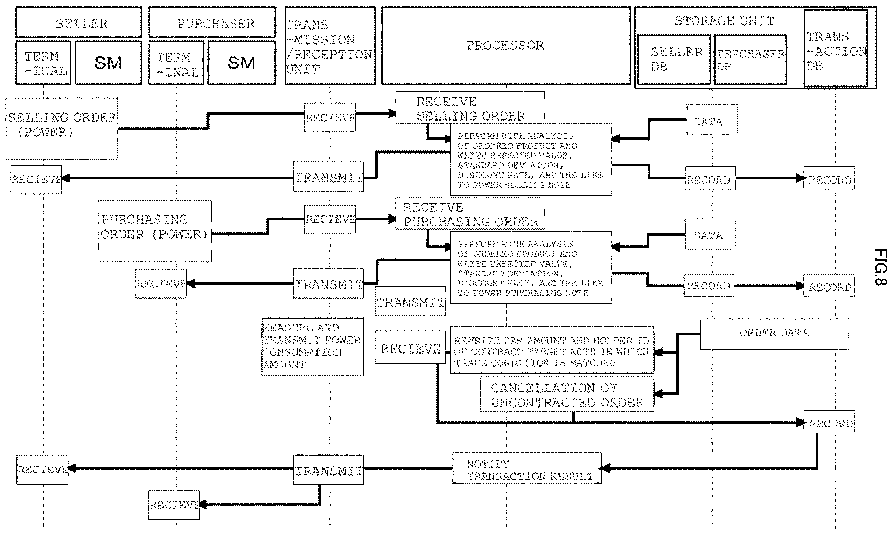

Fig. 8 is a sequence diagram illustrating a procedure of future transaction processing of power.

The processor can perform a future transaction of power. Terminals of the power supplier (seller) and the power consumer (purchaser) can respectively transmit a selling order and a purchasing order (future transaction information) of a product including a power generation/consumption time zone (current period), a trade amount in the current period, a transaction price, a transaction block, a priority order, and the like to the processor.

The processor can perform the risk analysis (valuation) processing for each ordered product and notify the seller and the purchaser participating in the transaction of the result.

The processor can effectuate a contract for the power future transaction between a seller and a buyer with matching bid conditions through any algorithm, such as over-the-counter (OTC), continuous session, or price auction.

Specifically, the processor can execute the future transaction processing of power by duplicating the power selling note and the power purchasing note that are the contract targets, rewriting the par amounts of the duplicated power selling note and power purchasing note to the same value as a contract amount, rewriting the holder ID of the power selling note from a seller ID to a purchaser ID, and rewriting the holder ID of the power purchasing note from the purchaser ID to the seller ID.

Note that the processor can process bids for which no other party matching the conditions is found as uncontracted.

In the power future transaction, adjustment ability ($\Delta kW$) or a capacity (kW) transaction may be performed, but the transaction unit may be converted into a power amount (kWh) .

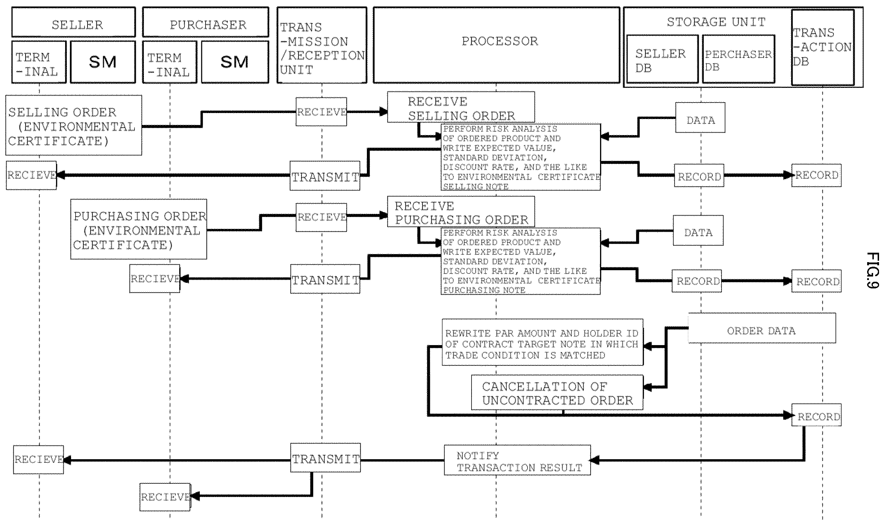

Fig. 9 is a sequence diagram illustrating a procedure of the future transaction processing of the environmental certificate.

Environmental certificates transaction system control unit can execute the future transaction of the time-stamped environmental certificate (environmental certificate) as described later. The terminals of the seller and the purchaser who participate in a transaction can respectively transmit a selling order and a purchasing order (future transaction information) of a product including a creation time zone (current period) of the environmental certificate, a trade amount, a transaction price, a transaction method, a transaction condition, a product characteristic, and the like for each transaction product in the current period to the processor.

The processor can perform the risk analysis (valuation) processing for each ordered product and notify the seller and the purchaser participating in the transaction of the result.

The processor can effectuate a contract for the environmental certificate transaction between a seller and a buyer with matching bid conditions through any algorithm including the methods described below.

Specifically, the processor can execute the future transaction processing of the environmental certificate by duplicating the environmental certificate selling note and the environmental certificate purchasing note that are the contract targets, rewriting the par amounts of the duplicated environmental certificate selling note and environmental certificate purchasing note to the same value as a contract amount, rewriting the holder ID of the environmental certificate selling note from a seller ID to a purchaser ID, and rewriting the holder ID of the environmental certificate purchasing note from the purchaser ID to the seller ID.

Note that the processor can process bids for which no other party matching the conditions is found as uncontracted.

Note that the future transaction of the environmental certificate may be continuously executed a plurality of times. For example, first, the seller and the purchaser may perform a P2P transaction to mutually limit a transaction partner, next, an attribute designation transaction such as sale of environmental certificates of Nagano prefecture to people of Nagano prefecture may be performed including an uncontracted amount, and finally, a national transaction without attribute designation may be performed including the uncontracted amount. In this way, it is possible to trade with a partner who highly evaluates an added value, and the overall utility is optimized.

In the actual/future transaction of the environmental certificate and the future transaction of power, the selling note once acquired by the purchaser or the purchasing note once acquired by the seller may be resold to a third party in exchange for a purchasing note or a selling note held by the third party. In addition, a seller who does not have a power generation plan or a purchaser who does not have a power consumption plan may perform a transaction by borrowing a selling note or a purchasing note from a third party on the condition of reliable delivery of power and environmental certificates.

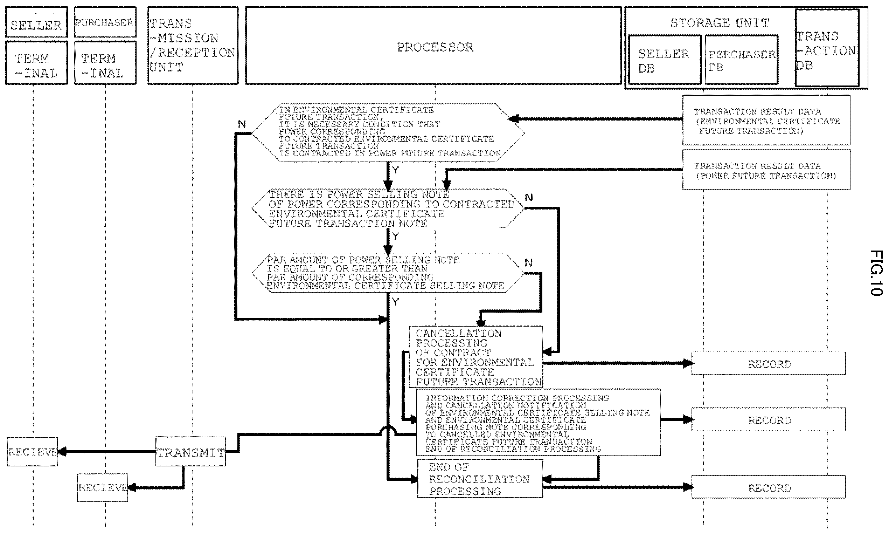

Fig. 10 is a sequence diagram illustrating a procedure of future note reconciliation processing of the power and the environmental certificate.

The processor can perform future note reconciliation processing between power and environmental certificates.

In the environmental certificate future transaction, when it is a necessary condition for the environmental certificate future transaction that the power paired with the contracted product is contracted in the power future transaction, the processor can determine whether there is a contracted power selling note paired with the contracted environmental certificate selling note and whether the provisional par amount of the power selling note is equal to or more than the provisional par amount of the paired environmental certificate selling note.

The environmental certificate transaction system control unit executes note reconciliation processing of normally terminating the reconciliation processing when it is determined that there is the power selling note and the amount is equal to or greater than the provisional par amount as described above, and otherwise, executing contract cancellation processing of the environmental certificate future transaction, writing a settlement processing content in the environmental certificate selling note and the environmental certificate purchasing note paired with the environmental certificate selling note, and canceling the change of names at the time of contract.

Note that the note reconciliation processing may be repeatedly performed after the start of a power future sales transaction.

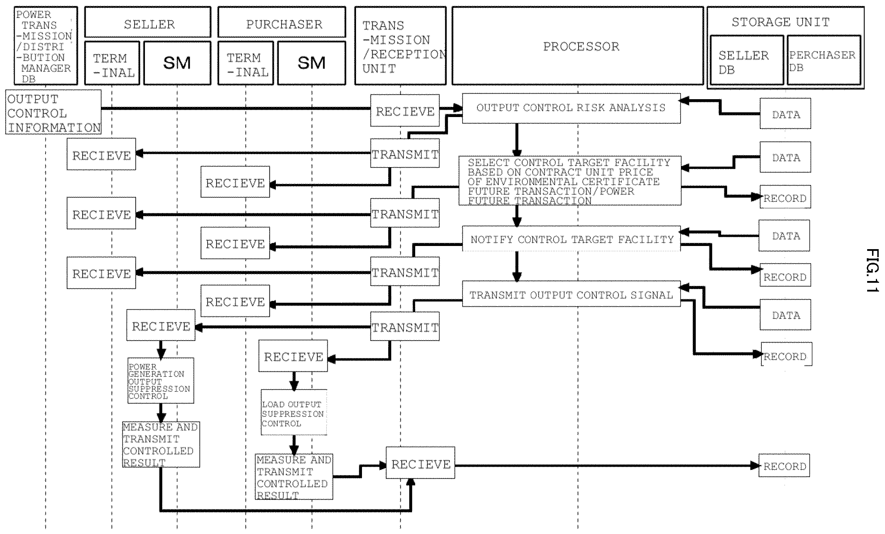

Fig. 11 is a sequence diagram illustrating a procedure of output control processing.

In the power transmission and distribution network in which the transaction is conducted, there may be a power generator and a power consumer who conduct the transaction without using the transaction/control platform. For example, in many photovoltaic facilities in Japan, public institutions purchase all the actual power generation amount without determining in advance the amount of power to be purchased, under Feed-in Tariff, and on the other hand, in power retail, it is common for many consumers to have contracts that allow them to purchase power without limitation in amount.

For this reason, on a fine day on a weekend in spring and autumn, the PVs generate a large amount of power, the power is excessively supplied, and a power transmission/distribution manager may suppress (stop) the power output of a power plant. On the other hand, in the evening of a weekday in a severe winter season with poor renewable energy, there is an excess of power demand, and the power transmission/distribution manager may suppress (stop) the output of a power demand facility.

However, the stopped facility is generally selected in rotation or at random, and even power generation and consumption facilities which are OTC-contracted with a high trading power unit price (utility) are uniformly stopped, and the utility is damaged.

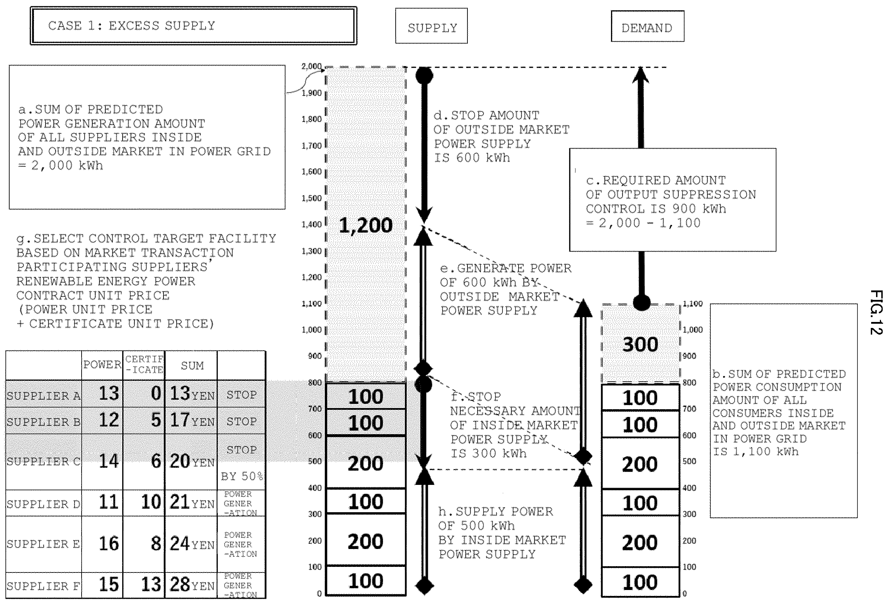

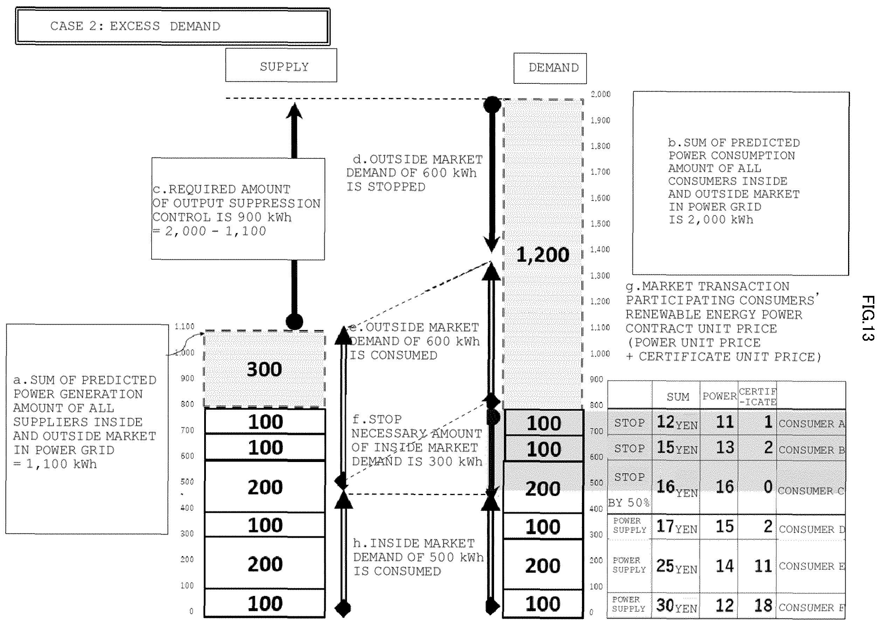

Therefore, the transaction/control platform of the present invention receives output control information in the future (current period) from the power transmission/distribution manager DB, and if an output suppression assigned amount to the platform included in the output control information, that is, a value obtained by subtracting a required stop amount of a trader other than the platform from a stop necessary amount of the power plants or the power consumers in the entire power transmission and distribution network is positive, after all the power future transactions and the environmental certificate transactions are ended (gate closed), the power supplier or the power consumer to be subjected to output suppression control is selected in the merit order indicating the output control sequences in Figs. 12 and 13.

When the power supply is excessive, the processor calculates a value (supplier renewable energy power unit price) obtained by adding the contract unit price of the power in a power future transaction of each power supplier and the contract unit price of the environmental certificate sold by the power supplier in the environmental certificate future transaction paired with the power future transaction.

When the power demand is excessive, the processor calculates a value (consumer renewable energy power unit price) obtained by adding the contract unit price of the power in a power future transaction of each power consumer and the contract unit price of the environmental certificate in environmental certificates future transaction of the power consumer.

However, in any of the above cases, when the paired environmental certificate future transaction is not contracted, the processor sets the contract unit price of the power as the supplier renewable energy power unit price or the consumer renewable energy power unit price.

The processor creates a rank table in which contract IDs are arranged in ascending order of unit prices from a contract transaction (contract ID) having a low supplier renewable energy power unit price or a low consumer renewable energy power unit price to a contract transaction (contract ID) having a high supplier renewable energy power unit price or a high consumer renewable energy power unit price at both the time of excess supply and the time of excess demand, adds the respective contract power amounts in order from the first rank (contract transaction having the lowest supplier renewable energy power unit price), and selects the power supply facility or the power load facility (control target facility) to be an output control target until the value reaches a required amount of output suppression control.

The processor notifies the power supplier or the power consumer who owns the output suppression target facility, the transaction partner of the power, and the transaction partner of the environmental certificate, and transmits an output suppression command to an output control device such as a smart meter attached to the control target facility of the power supplier or the power consumer at the start of the current period. The output control device stops the output of the output control target facility (generator and load) or the power distribution with the smart meter, receives the result from the output control device, and records the result in the storage unit.

In this way, since the output suppression can be avoided in descending order of the value of the power and environmental certificate, the damage of the overall utility can be minimized.

Examples of the output control processing will be described with reference to Figs. 12 and 13.

When the sum of the planned power generation amounts of all the power suppliers including no renewable energy supplies, and including those other than the participants in the market transaction, who are connected to the power transmission and distribution network in a certain time zone is larger than the sum of the planned power consumption amounts of all the power consumers in a power grid, and the difference exceeds a power supply stop amount of those other than the transaction participants, the output suppression control is performed by the difference, that is, 300kWh.

In case 1 of excess supply illustrated in Fig. 12, an output suppression control target is selected based on a market transaction participating supplier's renewable energy power contract unit price (power selling unit price + certificate selling unit price).

Since the contract unit price of a supplier A is 13 yen/kWh, which is the lowest, all 100kWh corresponding to the contract amount is to be stopped. The remaining stopping target is 200kWh.

Since the contract unit price of a supplier B is 17 yen/kWh, which is the second lowest, all 100kWh corresponding to the contract amount is to be stopped. The remaining stopping target is 100kWh.

Since the contract unit price of a supplier C is about 20 yen/kWh, which is the third lowest, 100kWh out of 200kWh corresponding to the contract amount is to be stopped.

In case 2 of excess demand illustrated in Fig. 13, a target to be stopped is selected based on a market transaction participating consumer's renewable energy power contract unit price (power purchasing unit price + certificate purchasing unit price).

Since the contract unit price of a consumer A is 12 yen/kWh, which is the lowest, all 100kWh corresponding to the contract amount is to be stopped. The remaining stopping target is 200kWh.

Since the contract unit price of a consumer B is 15 yen/kWh, which is the second lowest, all 100kWh corresponding to the contract amount is to be stopped. The remaining stopping target is 100kWh.

Since the contract unit price of a consumer C is about 16 yen/kWh, which is the third lowest, 100kWh out of 200kWh corresponding to the contract amount is to be stopped.

In addition, in a power transmission and distribution grid, there may be a connection point (bottleneck point) having an upper limit in the physical power distributable amount even in the same network. In this case, any one of the two power transmission and distribution networks divided at the connection point may be referred to as upstream and the other may be referred to as downstream.

Returning to Fig. 1, the transaction/control platform acquires, from the smart meter SM installed at a connection point CN1 or the smart meters SM installed in the power plants PS1 to PS7, a downstream power distribution amount for performing power transmission and distribution from an upstream power supplier to a downstream power consumer participating in the transaction and an upstream power distribution amount for performing power transmission and distribution from a downstream power supplier to an upstream power consumer at the connection point, and stores the acquired actual values over time in the storage unit.

The processor calculates a predicted current period's net downstream power distribution amount which is a sum of a current period's downstream power distribution amount and a value obtained by multiplying the current period's upstream power distribution amount by (-1) based on the point information and a power generation plan in a certain future time zone (current period) of the power supplier participating in a transaction, the point information and a current period's power consumption plan of the power consumer, and a contract result of the power future transaction.

Next, the processor acquires a physical distributable amount in the current period at the connection point acquired from the power transmission/distribution manager DB and the predicted value of the current period's net downstream power distribution amount by a power supplier other than the transaction participant.

Furthermore, the processor calculates the sum (determination value) of the predicted current period's net downstream power distribution amount of the transaction participant and the predicted value of the current period's net downstream power distribution amount by the power supplier other than the transaction participant. When the determination value is positive and a value (difference value) obtained by subtracting the physical distributable amount in the current period at the connection point from the determination value is positive, the processor defines the difference value as a net downstream excess amount. The processor arranges contract amounts (distribution contract amounts) of the power suppliers that sell power from upstream to downstream in ascending order of the supplier renewable energy power contract unit price. The processor then adds the contract amounts in the descending order from the highest (the supplier renewable energy power contract unit price is the minimum value) to select the control target facility until the value exceeds the net downstream excess amount.

On the other hand, when the determination value is negative and the product (summed value) of the sum of the determination value and the physical distributable amount in the current period at the connection point and (-1) is positive, the processor defines the summed value as a net upstream excess amount. The processor arranges the contract amounts (distribution contract amounts) of the power suppliers that sell power from downstream to upstream in ascending order of the supplier renewable energy power contract unit price. The processor then adds the contract amounts in the descending order from the highest (the supplier renewable energy power contract unit price is the minimum value) to select the control target facility until the value exceeds the net upstream excess amount.

At a predetermined time before the current period, the processor notifies, of an output suppression control command, the power supplier who owns the output suppression target facility and partners of power and environmental certificate transaction of the power supplier, and in the current period, transmits the output suppression command to an output control device such as a smart meter attached to the output suppression target facility. The output control device decreases the output of the output suppression target facility (generator) by a distribution contract amount, receives the result from the output control device, and records the result in the storage unit.

Note that there may be a plurality of bottleneck points, and in that case, the above-described processing can be performed for each of the bottleneck points.

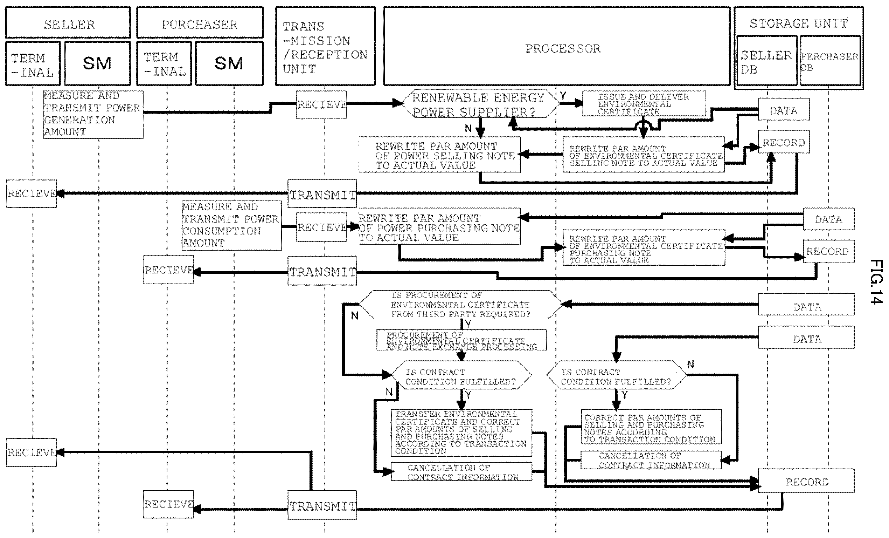

Fig. 14 is a sequence diagram illustrating a procedure of settlement processing of the future transaction of the environmental certificate and the power.

The power supplier and a backup power supplier who have contracted to the power future transaction actually generate and discharge power in a designated time zone (current period) according to the contract conditions, and the power consumer actually consumes and charges power in the current period and performs power transfer. In addition, the power supply consumer performs self-consumption of renewable energy power, and selling of surplus power or purchasing of shortage power as necessary.

The backup power supplier is an entity that performs power generation or discharge for a shortage from a power storage, a pumped-storage power plant, and the like when the possibility that the power supplier (seller) cannot perform power generation (creation of a value certificate) according to the power generation plan increases.

When the power generated by the backup power supplier is renewable energy power, the processor can execute processing of creating environmental certificates, issuing the environmental certificate corresponding to the power generation amount by the backup power supplier and environmental certificates selling note or a power selling note to the seller after the power is transferred.

The processor receives the actual power generation amounts in the current period from the power plants PS1 to PS7 and PS21 to 23 of all the power supply types measured by the smart meters SM, and corrects the total amount of provisional par amounts of all the power selling notes issued to the respective power suppliers (sellers) to the actual power generation amount in the current period at a desired distribution ratio to obtain a determined par amount. For example, if the actual power generation amount exceeds a plan value, the determined par amount increases by the difference, and if the actual power generation amount is less than the plan value, the determined par amount decreases by the difference.

The processor receives the actual power generation amount of renewable energy in the current period from the renewable energy power plants (including the power storages and the pumped-storage power plants that discharge renewable energy power supply) PS1 to PS3, PS6 to PS7, and PS21 to 23 measured by the smart meters SM, issues time-stamped environmental certificates (environmental certificates) in which the par amount corresponding to the actual power generation amount of renewable energy is described. The processor then corrects the total amount of provisional par amounts of all the environmental certificate selling notes issued to the renewable energy power suppliers who own the renewable energy power plants to an amount equivalent to the actual power generation amount in the current period at a desired distribution ratio, and obtains a determined par amount.

Similarly, the processor receives the actual power consumption amount in the current period of the demand facilities C1 to 4, C31 to 34, and EV1 to 3 measured by the smart meters SM and VM, and corrects the total amount of the provisional par amounts of the environmental certificate purchasing notes and the power purchasing notes issued to the respective power consumers who own the demand facilities based on the power consumption plan in the current period to an amount equivalent to the actual power consumption amount in the current period at a desired distribution ratio, and obtains a determined par amount.

In addition, the processor can determine whether the contract conditions of the transaction have been fulfilled or not fulfilled.

In a case where a determination of fulfillment is made, the power transaction system control unit can execute processing of correcting the provisional par amounts of the power selling note and the power purchasing note whose names have been changed by the exchange to the confirmed par amounts in accordance with the transaction conditions, and writing the information regarding the settlement result in the power selling note and the power purchasing note. On the other hand, in a case where a determination of non-fulfillment is made, the power transaction system control unit can execute processing of canceling the contract, changing the names of the power selling note and the power purchasing note to the names before the exchange, and settling the amount of sale and purchase on the basis of the contract conditions.

Note that the processor executes processing similar to that of environmental certificates priority transaction to be described later with respect to the power amount acquired by a power consumer other than the first rank in a priority order transaction or the power amount provided by a power supplier other than the first rank.

Next, in the case of a transaction in which environmental certificates seller guarantees the provision of the planned amount of the environmental certificate, if the confirmed par amount of the environmental certificate selling note is less than the provisional par amount, the seller acquires environmental certificates having the par amount corresponding to the difference, from a third party seller or the backup power supplier in the environmental certificate physical transaction, and the processor transfers the acquired environmental certificate to the purchaser.

In this case, in the transaction with the third party seller or the backup power supplier in the environmental certificate physical transaction, the seller changes the name of the environmental certificate purchasing note acquired by the seller from the purchaser to the third party seller or the backup power supplier, transfers the environmental certificate purchasing note to the third party seller or the backup power supplier, acquires the environmental certificate held by the third party seller or the backup power supplier and the environmental certificate selling note paired therewith, and transfers both of them to the purchaser.

The processor can determine whether the contract conditions of the transaction have been fulfilled or not fulfilled, including the transaction results with the third party seller or the backup power supplier in the environmental certificate physical transaction described above.

In a case where a determination of fulfillment is made, the environmental certificate transaction system control unit can execute processing of changing the par amounts of the environmental certificate selling note and the environmental certificate purchasing note that have been transferred by the exchange in accordance with the transaction conditions, and writing the information regarding the settlement result in the exchanged selling note and purchasing note. On the other hand, in a case where a determination of non-fulfillment is made, the environmental certificate transaction system control unit can execute processing of canceling the contract, returning the names of the exchanged environmental certificate selling note and the environmental certificate purchasing note to the names before the contract, and settling the amount of sale and purchase on the basis of the contract conditions.

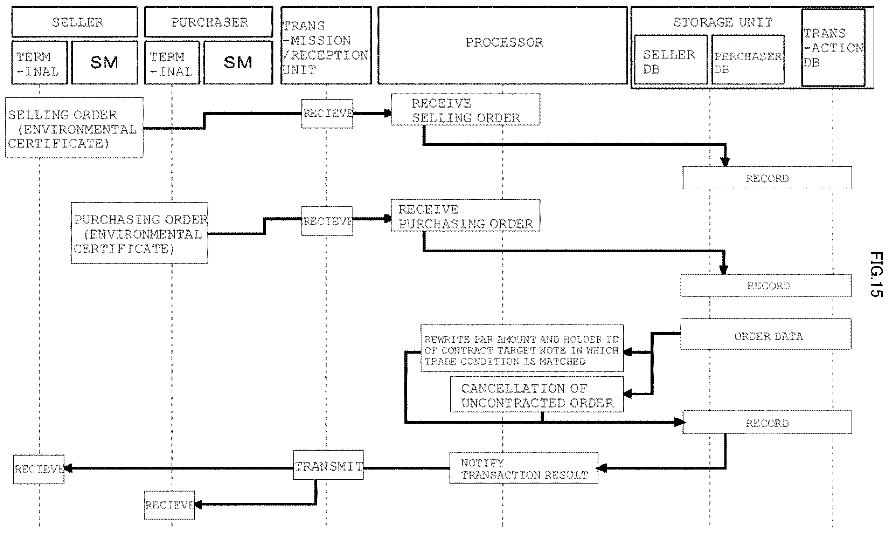

Fig. 15 is a sequence diagram illustrating a procedure of the environmental certificate physical transaction processing.

The processor can perform a physical transaction of the time-stamped environmental certificate (environmental certificate). The terminals of the seller and the purchaser can respectively transmit a selling order and a purchasing order (physical transaction information) including a time zone in which the environmental certificate is created, a traded par amount per unit time zone, a transaction price, and the like to the processor.

For each order product, the processor effectuates the contract for the environmental certificate transaction between a seller and a buyer with matching bid conditions through any algorithm.

Specifically, the processor can execute the physical transaction processing of the environmental certificate by duplicating the environmental certificate selling note and the environmental certificate purchasing note that are the contract targets, rewriting the par amounts of the duplicated environmental certificate selling note and environmental certificate purchasing note to the same value as a contract amount, rewriting the holder ID of the environmental certificate selling note from a seller ID to a purchaser ID, and rewriting the holder ID of the environmental certificate purchasing note from the purchaser ID to the seller ID.

Note that the processor processes bids for which no other party matching the conditions is found as uncontracted.

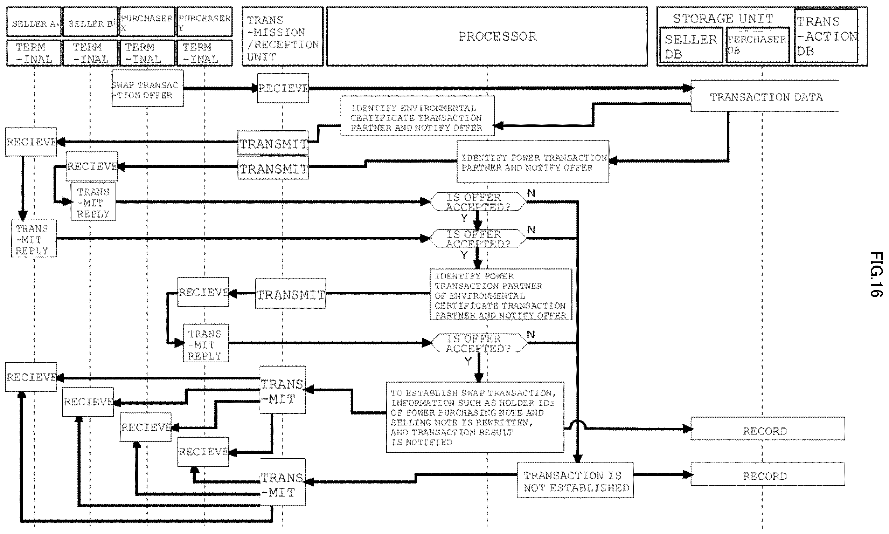

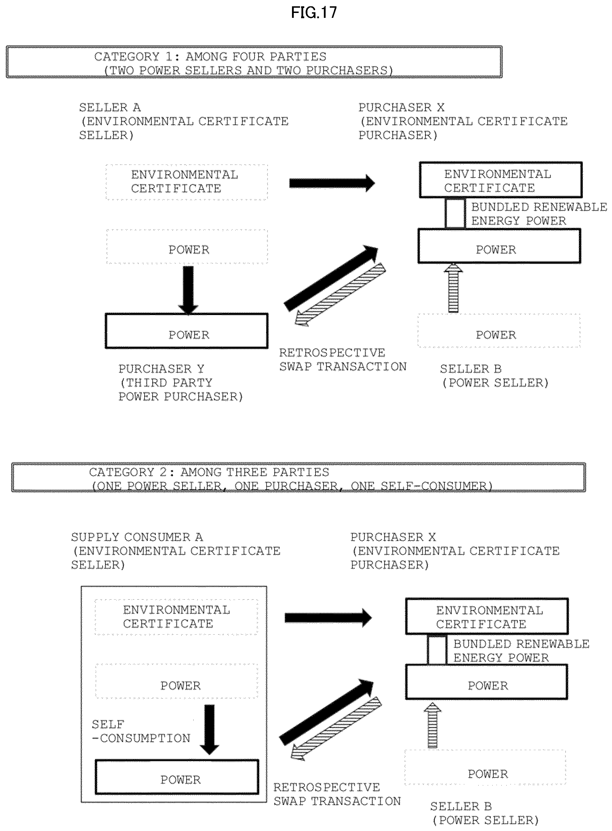

Fig. 16 is a sequence diagram illustrating a procedure of retrospective swap transaction processing of power. Fig. 17 is a conceptual diagram of power retrospective swap transaction processing.

A retrospective swap transaction of power can be conducted among related four parties in which the power supplier who sold the time-stamped environmental certificate (environmental certificate) retroactively repurchases the corresponding power in the time zone already sold to a third party purchaser, while the power consumer who purchased the environmental value certificate from the power supplier retroactively returns the power in the time zone already purchased from a third party seller, and then retroactively concludes a new power selling and purchasing contract between the power supplier and the power consumer who traded the environmental value certificate, while the third party purchaser and the third party seller retroactively conclude a new power selling and purchasing contract in the same manner.

The processor executes the power retrospective swap transaction in cooperation with the transmission/reception unit and the storage unit.

Specifically, the transmission/reception unit receives a power retrospective swap transaction offer (swap transaction information) including the power purchase amount and the transaction price transmitted from the terminal of the environmental certificate purchaser, and the processor identifies the terminal of the power seller who sold the power to the purchaser, and transmits the swap transaction offer to the terminal of the power seller. Furthermore, the processor identifies the terminal of the environmental certificate seller who sold the environmental certificate to the purchaser, and transmits the swap transaction offer to the terminal of the environmental certificate seller. When offer acceptance information is received from both the terminal of the environmental certificate seller and the terminal of the power seller, the processor further identifies the third party power purchaser who has purchased power based on the terminal of the environmental certificate seller, and transmits the swap transaction offer to the terminal of the third party power purchaser. When offer acceptance information is received from the terminal of the third party power purchaser, the processor executes contract processing.

The processor first rewrites the holder ID of the power selling note of a predetermined amount already transferred from the power seller to the purchaser, from an ID of the purchaser to an ID of the third party power purchaser. Meanwhile, the processor changes the holder ID of the power purchasing note of the same amount transferred from the purchaser to the power seller, from an ID of the power seller to an ID of the certificate seller. Furthermore, the processor changes the holder ID of the power selling note of the same amount transferred from the certificate seller to the third party power purchaser, to the purchaser. Meanwhile, the processor changes the holder ID of the power purchasing note of the same amount transferred from the third party purchaser to the certificate seller, to the ID of the power seller.

In this way, the power consumer (purchaser) can acquire the power to be paired with the environmental certificate from the same renewable energy power supplier, and can realize the P2P transaction of the renewable energy power, which is difficult in the future transaction, retroactively in a form with less risk while the power supplier is also aware of the P2P transaction.

In addition, the retrospective swap transaction of power may be performed later among related three parties in which, in the same manner as described above, the power supply consumer who sold the time-stamped environmental value certificate retroactively sells all or part of the power self-consumed in the time zone to the power consumer (purchaser) of the destination of the time-stamped environmental value certificate in combination with the transaction of the time-stamped environmental certificate, and instead, the power consumer (purchaser) returns the same amount of power in the time zone already purchased from another power supplier, and the power supply consumer (seller) purchases the same from the power supplier.

Note that an offer may be transmitted not from the terminal of the environmental certificate purchaser but from the terminal of the environmental certificate seller or the power seller, and the retrospective swap transaction of power may be performed by a similar method.

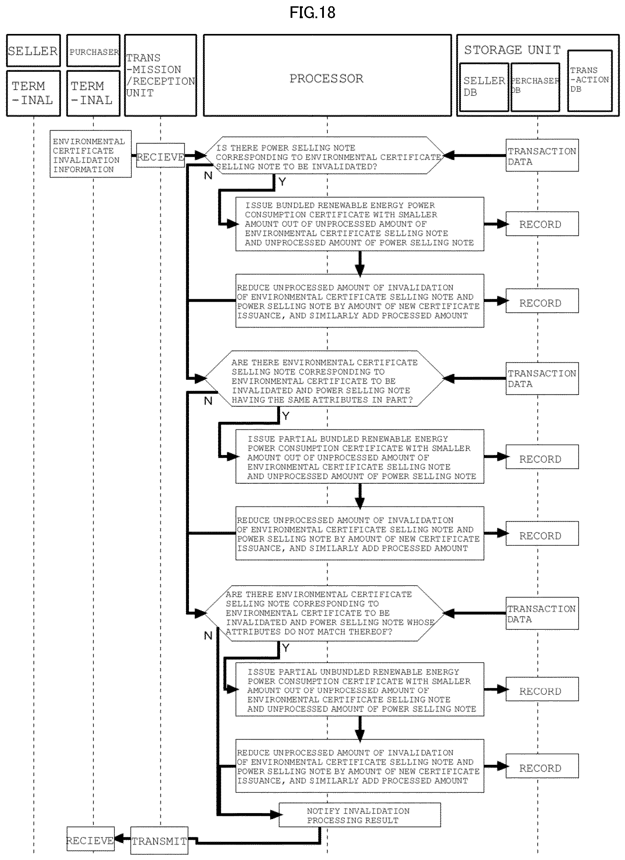

Fig. 18 is a sequence diagram illustrating a procedure of environmental certificate invalidation processing.

Note that the attribute mentioned below is information indicating the location of the power generator (such as prefecture, municipality), the power generation type (such as solar power generation, wind power generation), the power generation entity type (such as commercial companies, NPOs, local governments), and the like, and is information that may be included in various notes.

The processor can receive environmental certificates invalidation request (environmental certificate invalidation information) from terminals of the power consumer and the supply consumer (purchaser), and perform the environmental certificate invalidation processing.

Specifically, the processor can determine whether the purchaser holds both the environmental certificate selling note corresponding to the environmental certificate to be invalidated, and the power selling note by the same power supplier paired with the environmental certificate selling note.

When the processor determines that both notes have an unprocessed amount for invalidation, the processor issues a consumption certificate of bundled renewable energy power with a smaller par amount out of an unprocessed amount of the environmental certificate selling note and an unprocessed amount of the power selling note, reduces the unprocessed amounts for invalidation of the environmental certificate selling note and the power selling note by the amount of the issued certificate, and similarly increases processed amounts by the amount of the issued certificate.

Next, the processor can determine whether the purchaser holds both the environmental certificate selling note corresponding to the environmental certificate to be invalidated and the power selling note having all or some of attributes, such as the location of the power supplier and the type of the renewable energy power supply, matching those of the environmental certificate selling note.

When both notes of the purchaser have an unprocessed amount for invalidation, the processor issues a consumption certificate of partial bundled renewable energy power with a smaller par amount out of an unprocessed amount of the environmental certificate selling note and an unprocessed amount of the power selling note, reduces the unprocessed amounts for invalidation of the environmental certificate selling note and the power selling note by the amount, and similarly increases processed amounts by the amount.

Next, the processor can determine whether the purchaser holds both the environmental certificate selling note corresponding to the environmental certificate to be invalidated and the power selling note having attributes not matching those of the environmental certificate selling note.

When an ID of the purchaser is associated as the holder ID of these notes and both notes have an unprocessed amount for invalidation, the processor issues a consumption certificate of unbundled renewable energy power with a smaller par amount out of an unprocessed amount of the environmental certificate selling note and an unprocessed amount of the power selling note, reduces the unprocessed amounts for invalidation of the environmental certificate selling note and the power selling note by the amount, and similarly increases processed amounts by the amount.

In this way, the power consumer can easily create and report a portfolio of the type of power they have consumed, the seller, and the seller attributes.

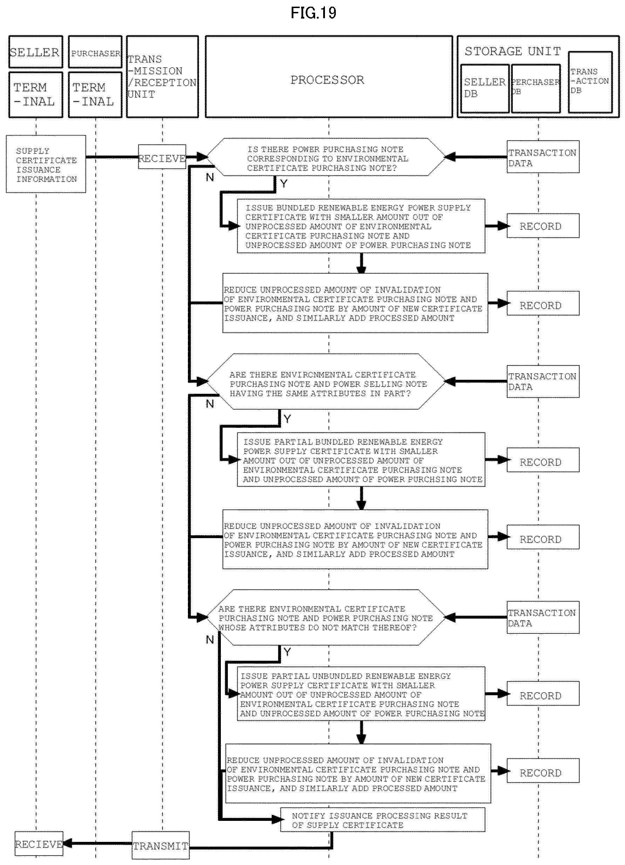

Fig. 19 is a sequence diagram illustrating a procedure of the supply certificate issuance processing.

The processor can receive a supply certificate issuance request for power supplied from the power supplier and the supply consumer (seller), and perform the supply certificate issuance processing.

Specifically, the processor can determine whether the seller holds both the environmental certificate purchasing note corresponding to the supply certificate and the power purchasing note by the same power purchaser paired with the environmental certificate purchasing note.

When both notes have an unprocessed amount for invalidation, the processor issues a supply certificate of bundled renewable energy power with a smaller amount out of an unprocessed amount of the environmental certificate purchasing note and an unprocessed amount of the power purchasing note, reduces the unprocessed amounts for invalidation of the environmental certificate purchasing note and the power purchasing note by the amount, and similarly increases processed amounts by the amount.

Next, the processor can determine whether the seller holds both the environmental certificate note corresponding to the supply certificate and the power purchasing note having all or some of attributes, such as the demand region and the load characteristic, matching those of the environmental certificate note.

When an ID of the seller is associated as the holder ID of these notes and both notes have an unprocessed amount for invalidation, the processor issues a supply certificate of partial bundled renewable energy power with a smaller amount out of an unprocessed amount of the environmental certificate purchasing note and an unprocessed amount of the power purchasing note, reduces the unprocessed amounts for invalidation of the environmental certificate purchasing note and the power purchasing note by the amount, and similarly increases processed amounts by the amount.

Next, the processor can determine whether the seller holds both the environmental certificate note corresponding to a supply certificate and the power purchasing note having attributes not matching those of the environmental certificate note.

When the ID of the seller is associated as the holder ID of these notes and both notes have an unprocessed amount for invalidation, the processor issues a supply certificate of unbundled renewable energy power with a smaller amount out of an unprocessed amount of the environmental certificate purchasing note and an unprocessed amount of the power purchasing note, reduces the unprocessed amounts for invalidation of the environmental certificate purchasing note and the power purchasing note by the amount, and similarly increases processed amounts by the amount.

In this way, the power supplier can easily create and report a portfolio of the purchaser of power they have supplied and the purchaser attributes.

Note that the processor may perform all or part of the invalidation processing or the supply certificate issuance processing by regarding the entire group of power consumers having the same specific attribute such as a region as one power demander or power supplier in order for a management entity such as a local government or a power transmission and distribution network to achieve composition of a microgrid and self-sufficiency of regional renewable energy.

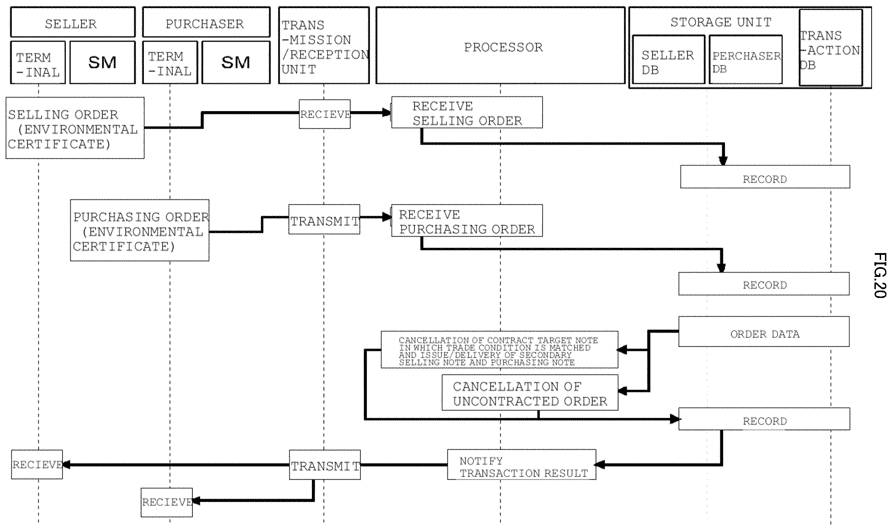

Fig. 20 is a sequence diagram illustrating a procedure of secondary physical transaction processing of the environmental certificate.

The processor can perform the secondary physical transaction processing of the environmental certificate that is valid only for offset transactions without time.

The seller and the purchaser transmit a selling order and a purchasing order (secondary physical transaction information) including a trade amount, a transaction price, and the like to the transaction/control platform.

For each order product, the processor effectuates a contract for the secondary environmental certificate transaction between a seller and a buyer with matching bid conditions through any algorithm.

Specifically, the processor can execute the physical transaction processing of the environmental certificate by duplicating the environmental certificate selling note and the environmental certificate purchasing note that are the contract targets, rewriting the par amounts of the duplicated environmental certificate selling note and environmental certificate purchasing note to the same value as a contract amount, rewriting the holder ID of the environmental certificate selling note from a seller ID to a purchaser ID, and rewriting the holder ID of the environmental certificate purchasing note from the purchaser ID to the seller ID.

Note that the processor processes bids for which no other party matching the conditions is found as uncontracted.

The processor notifies the seller and the purchaser of the contract result, delivers a secondary environmental certificate from which the time stamp has been removed to the purchaser, removes the time stamp from the certificate selling note and a purchased certificate purchasing note, and exchanges the ownership of the notes.

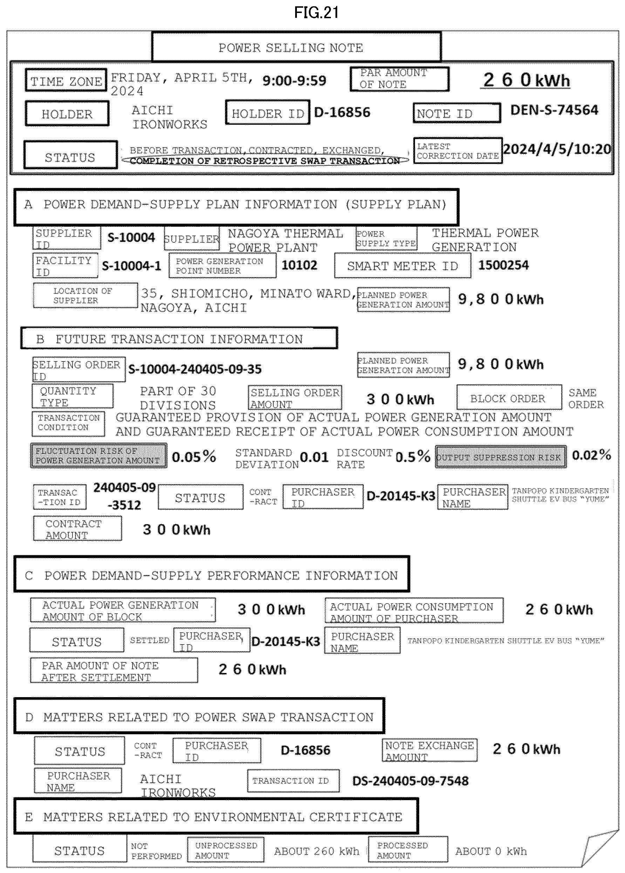

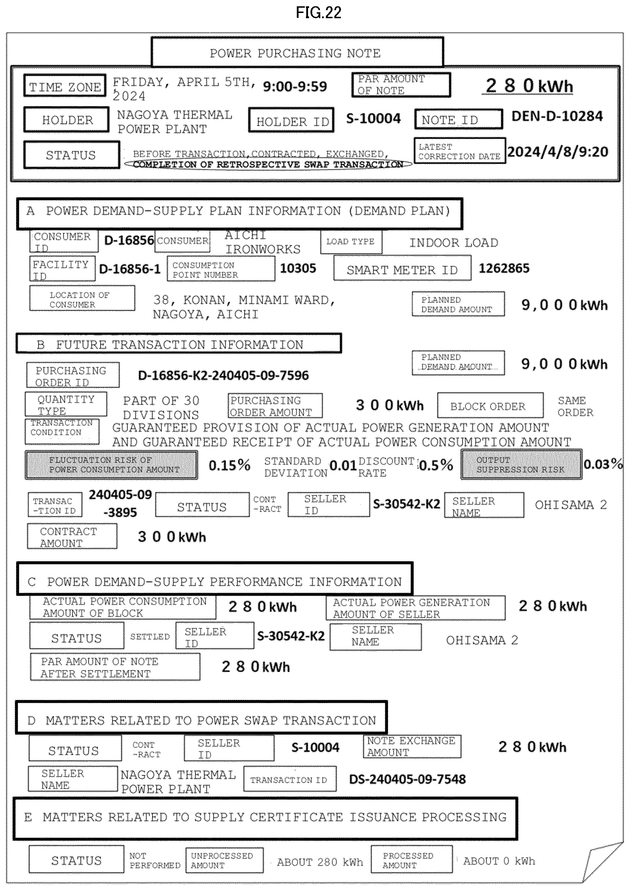

Figs. 21 and 22 are diagrams illustrating examples of the power selling note and the power purchasing note.

The power selling note and the power purchasing note include at least information on a note ID, the time zone (time stamp) in which power supply or power consumption corresponding to the note is performed, a par amount of power supply or power consumption corresponding to the note, and the holder ID indicating a holder of the note.

Furthermore, the power selling note and the power purchasing note may include information such as the power demand-supply plan information, future transaction information, power demand-supply performance information, matters related to power swap transaction, matters related to environmental certificate invalidation processing, and matters related to supply certificate issuance processing.

The power demand-supply plan information includes at least information on the ID of the power supplier or consumer corresponding to the note and a planned power generation amount or a planned demand amount. Based on these pieces of information, the par amount of the note and the holder ID before the future transaction are determined.

Furthermore, the power demand-supply plan information may include information such as a name of a power supplier or consumer corresponding to the note, an ID of a power supply or an additional facility or a type thereof, a smart meter ID, and a location or a point number of the supplier or the consumer.

The future transaction information includes at least information on an order ID indicating a trade order of the note, an order amount indicating an amount of power to be traded, an ID of a transaction for which the trade is contracted, a contract amount indicating an amount of power for which the trade is contracted in the transaction, and an ID of a seller or a purchaser in the transaction. Based on these pieces of information, after the future transaction, the par amount of the note and the holder ID before the clearing of the future transaction and the swap transaction are rewritten.

Furthermore, the future transaction information may include information such as a quantity type indicating an amount of power to be traded with respect to the planned power generation amount, a transaction condition indicating a condition such as provision/reception of an actual power generation/consumption amount imposed on the seller and the purchaser in the transaction, a fluctuation risk indicating a risk of fluctuation of the power generation amount or the power consumption amount to be traded or a discount rate associated therewith, an output suppression risk indicating a risk of the power generation amount or the power consumption amount to be traded being a control target of output suppression, a transaction status indicating uncontract/contract/cancellation or the like of the transaction, and the name of the seller or the purchaser.

The power demand-supply performance information includes at least information on a seller's actual power generation amount or a purchaser's actual power consumption amount indicating an amount of power actually generated/consumed by the seller or the purchaser. Based on this information, after the clearing of the future transaction, the par amount of the note before the swap transaction is rewritten.

Furthermore, the power demand-supply performance information may include information such as a status indicating unsettled/cleared or the like of the future transaction, an ID and a name of the seller or the purchaser, and the par amount of the note after the clearing.

The matters related to the power swap transaction includes at least information on an ID of the swap transaction, an ID of the seller or the purchaser who has performed the swap transaction, and a note exchange amount indicating an amount of power exchanged on the note by the swap transaction. Based on these pieces of information, the holder ID and the par amount of the note after the swap transaction are rewritten.

Furthermore, the matters related to the power swap transaction may include a status indicating uncontract/contract/cancellation or the like of the transaction and information on the seller or the purchaser who has performed the transaction.

The matters related to the environmental certificate invalidation processing includes information on an unprocessed amount indicating the amount of power for which the processing has not been performed, a processed amount indicating the amount of power for which the processing has been performed, and a status indicating unperformed/performed of the processing, for the par amount of the note after the swap transaction.

The matters related to the supply certificate issuance processing includes information on an unprocessed amount indicating the amount of power for which the processing has not been performed, a processed amount indicating the amount of power for which the processing has been performed, and a status indicating unperformed/performed of the processing, for the par amount of the note after the swap transaction.

With such a power selling note and a power purchasing note, various transactions and processing described in the present specification can be realized.

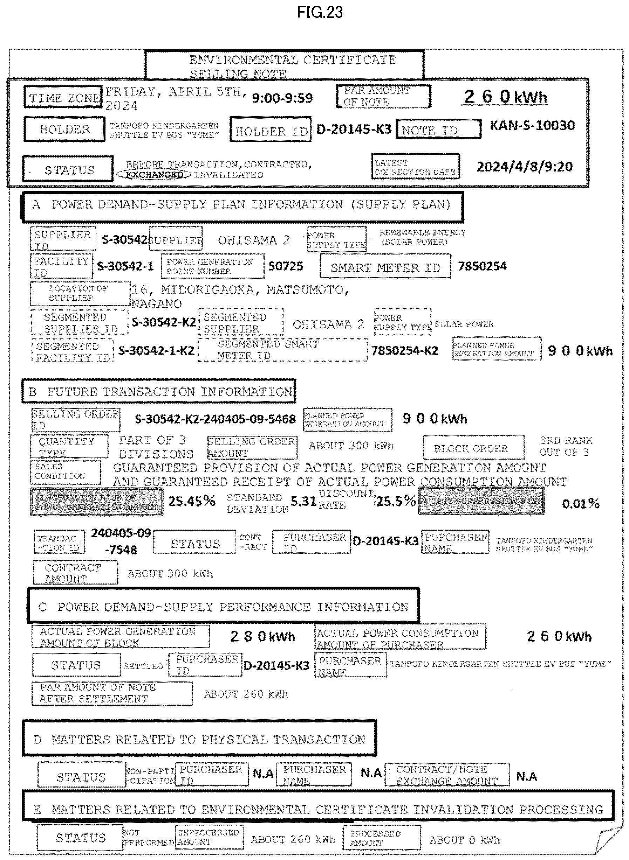

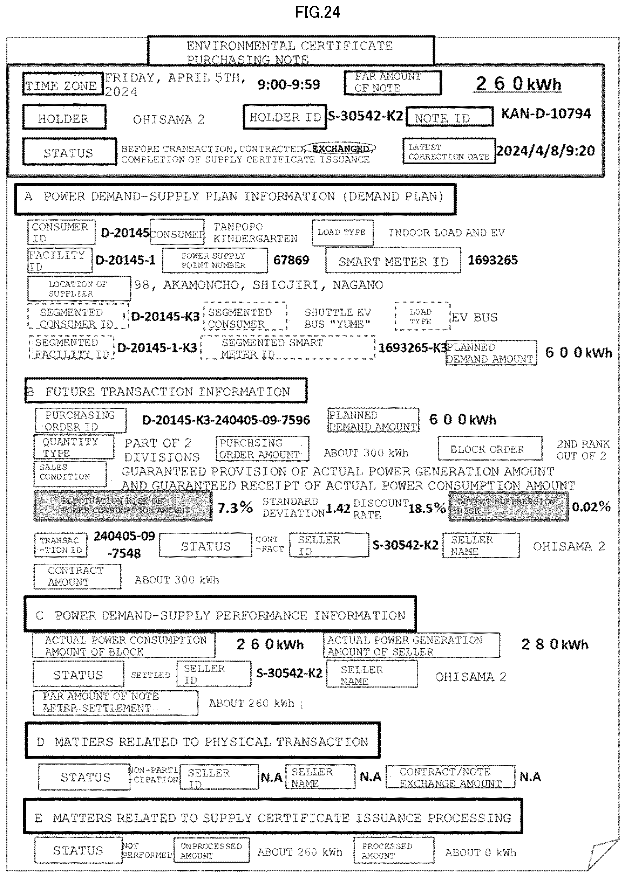

Figs. 23 and 24 are diagrams illustrating examples of the environmental certificate selling note and the environmental certificate purchasing note.

The environmental certificate selling note and the environmental certificate purchasing note include at least information of a note ID, the time zone (time stamp) in which power supply or power consumption corresponding to the note is performed, a par amount of power supply or power consumption corresponding to the note, and the holder ID indicating a holder of the note.

Furthermore, the environmental certificate selling note and the environmental certificate purchasing note may include information such as the power demand-supply plan information, future transaction information, power demand-supply performance information, matters related to power swap transaction, matters related to environmental certificate invalidation processing, and matters related to supply certificate issuance processing.

The power demand-supply plan information includes at least information on the ID of the power supplier or consumer corresponding to the note and a planned power generation amount or a planned demand amount. Based on these pieces of information, the par amount of the note and the holder ID before the future transaction are determined.

Furthermore, the power demand-supply plan information may include information such as a name of a power supplier or consumer corresponding to the note, an ID of a power supply or an additional facility or a type thereof, a smart meter ID, and a location or a point number of the supplier or the consumer.

The future transaction information includes at least information on an order ID indicating a trade order of the note, an order amount indicating an amount of power to be traded, an ID of a transaction for which the trade is contracted, a contract amount indicating an amount of power for which the trade is contracted in the transaction, and an ID of a seller or a purchaser in the transaction. Based on these pieces of information, after the future transaction, the par amount of the note and the holder ID before the clearing of the future transaction and the physical transaction are rewritten.

Furthermore, the future transaction information may include information such as a quantity type indicating an amount of power to be traded with respect to the planned power generation amount, a transaction condition indicating a condition such as provision/reception of an actual power generation/consumption amount imposed on the seller and the purchaser in the transaction, a fluctuation risk indicating a risk of fluctuation of the power generation amount or the power consumption amount to be traded or a discount rate associated therewith, an output suppression risk indicating a risk of the power generation amount or the power consumption amount to be traded being a control target of output suppression, a transaction status indicating uncontract/contract/cancellation or the like of the transaction, and the name of the seller or the purchaser.

The power demand-supply performance information includes at least information on a seller's actual power generation amount or a purchaser's actual power consumption amount indicating an amount of power actually generated/consumed by the seller or the purchaser. Based on this information, after the clearing of the future transaction, the par amount of the note before the physical transaction is rewritten.

Furthermore, the power demand-supply performance information may include information such as a status indicating unsettled/cleared or the like of the future transaction, an ID and a name of the seller or the purchaser, and the par amount of the note after the clearing.

The physical transaction information includes at least information on an order ID indicating a trade order of the note, an order amount indicating an amount of power to be traded, an ID of a transaction for which the trade is contracted, a contract amount indicating an amount of power for which the trade is contracted in the transaction, and an ID of a seller or a purchaser in the transaction. Based on these pieces of information, the par amount of the note and the holder ID after the physical transaction are rewritten.

Furthermore, the physical transaction information may include a status indicating non-participation/uncontract/-cancellation or the like of the transaction and information on the seller or the purchaser who has performed the transaction.

Note that, in a case where the environmental certificate is not subjected to a physical transaction, the physical transaction information includes only information on a status indicating non-participation in the transaction, as exemplified.

The matters related to the environmental certificate invalidation processing includes information on an unprocessed amount indicating the amount of power for which the processing has not been performed, a processed amount indicating the amount of power for which the processing has been performed, and a status indicating unperformed/performed of the processing, for the par amount of the note after the physical transaction.

The matters related to the supply certificate issuance processing includes information on an unprocessed amount indicating the amount of power for which the processing has not been performed, a processed amount indicating the amount of power for which the processing has been performed, and a status indicating unperformed/performed of the processing, for the par amount of the note after the physical transaction.

With such environmental certificates selling note and environmental certificates purchasing note, various transactions and processing described in the present specification can be realized.

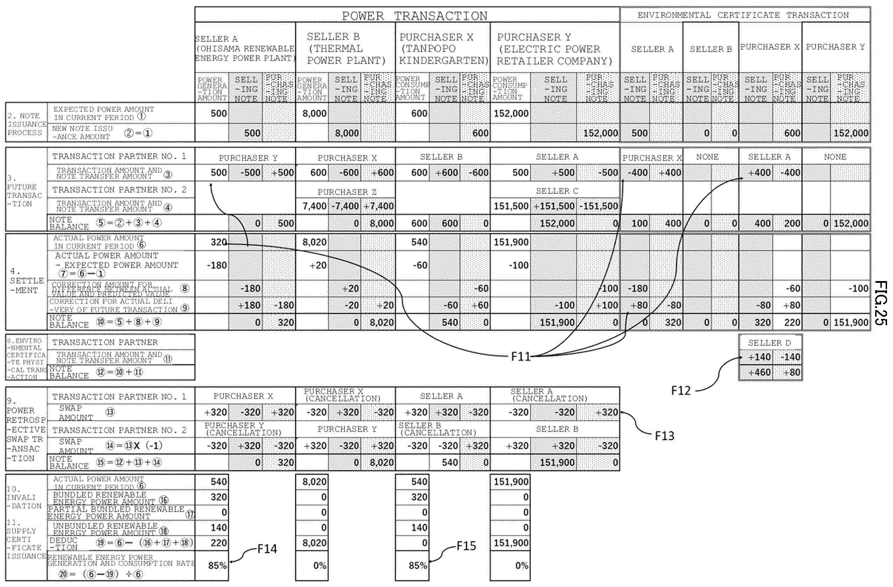

Fig. 25 is a diagram illustrating a transaction example performed by the transaction/control platform.

With respect to power, a future transaction was performed on the condition that a seller A sets the actual power generation amount as the upper limit, and a purchaser X sets the actual power consumption amount as the upper limit, and a partner guarantees a sales amount or a purchase amount by utilizing the adjustment ability of a third party.

With respect to environmental certificates, a future transaction was performed on the condition that, with a predicted power generation amount set as the upper limit, a certificate of the smaller amount of either the actual power generation amount or the actual power consumption amount is delivered.

F11: Here, although the seller A concluded a sales transaction of environmental certificates with the purchaser X at 400kWh, which was lower than the predicted power generation amount of 500kWh, the actual value was 320kWh, which was even lower by 80kWh.

F12: On the other hand, the purchaser X purchased 140kWh from another seller D by a physical transaction including the unsuccessful delivery amount from the seller A.

F13: The purchaser X retroactively procured the seller A's power by a power retrospective swap transaction. As a result, the P2P transaction of renewable energy power was established between the seller A and the purchaser X.

F14: The seller A obtained a certificate that they sold 85% of the renewable energy power to the purchaser X.

F15: In addition, the purchaser X acquired a consumption certificate of bundled renewable energy power of 320kWh and a consumption certificate of unbundled renewable energy power of 140kWh, and achieved a renewable energy power consumption ratio of 85%. In the background of the achievement of the P2P transaction, there was the ability of a purchaser Y and a seller B to adjust the power supply and demand, and a renewable energy supply and demand risk was able to be transferred to thermal power generation.

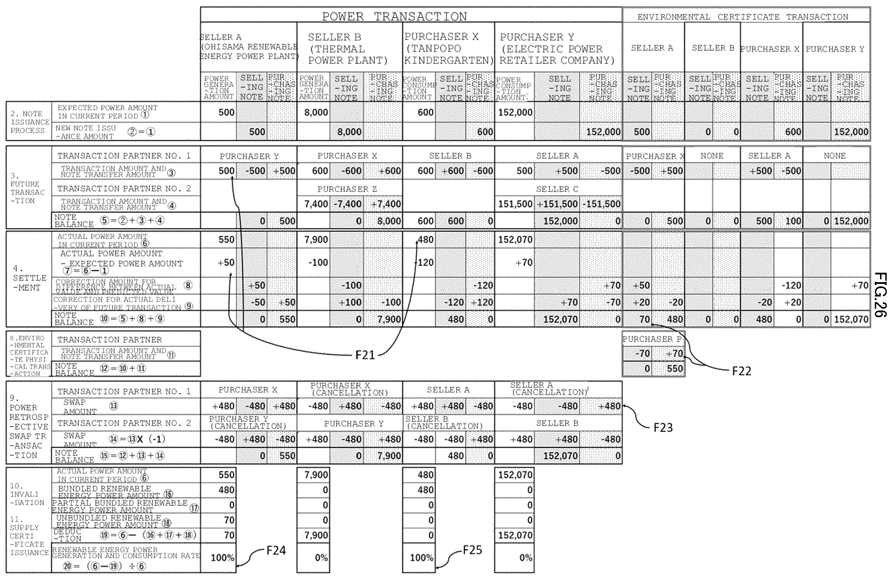

Fig. 26 is a diagram illustrating another transaction example performed by the transaction/control platform.

With respect to power, a future transaction was performed on the condition that a seller A sets the actual power generation amount as the upper limit, and a purchaser X sets the actual power consumption amount as the upper limit, and a partner guarantees a sales amount or a purchase amount by utilizing the adjustment ability of a third party.

With respect to environmental certificates, a transaction was performed on the condition that, with a predicted power generation amount set as the upper limit, a certificate of the smaller amount of either the actual power generation amount or the actual power consumption amount is delivered.

F21: Here, the seller A concluded a sales transaction of environmental certificates with the purchaser X at a predicted power generation amount of 500kWh, and although the actual power generation amount exceeded this, the actual power consumption amount of the purchaser X was 480kWh, which was lower by 20kWh.

F22: On the other hand, the seller A sold all the amount of 70kWh, which was the total value of 20kWh of the unsuccessful delivery amount with the purchaser X and 50kWh of the positive deviation of the actual power generation, to another purchaser P by a physical transaction.

F23: In addition, the purchaser X retroactively procured the seller A's power by a power retrospective swap transaction. As a result, the P2P transaction of renewable energy power was established between the seller A and the purchaser X.

F24: The seller A obtained a certificate that they sold 100% of the renewable energy power to the purchaser X.

F25: In addition, the purchaser X acquired a consumption certificate of bundled renewable energy power of 480kWh, and achieved a renewable energy power consumption ratio of 100%. In the background of the achievement, there was the ability of the purchaser Y and the seller B to adjust the power supply and demand, and the renewable energy supply and demand risk was able to be absorbed by highly flexible thermal power generation and supply and demand of a demander who has large consumers.

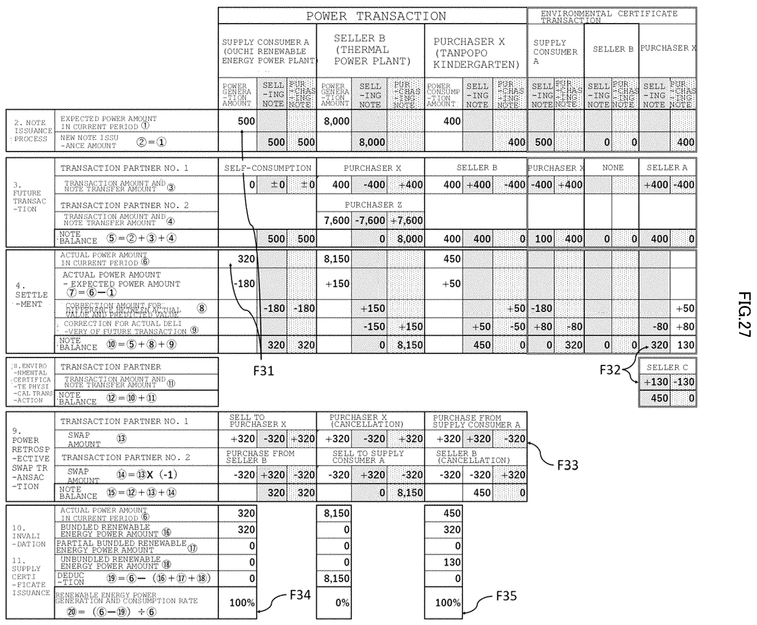

Fig. 27 is a diagram illustrating a case example of a retrospective transaction and an environmental value transaction of power self-consumed by a supply consumer.

With respect to power, a future transaction was performed on the condition that the purchaser X sets the actual power consumption amount as the upper limit, and the seller B guarantees the sales amount. A supply consumer A acquires a selling note and a purchasing note of the self-consumption amount from the predicted amount of self-consumption.

With respect to environmental certificates, a transaction was performed on the condition that, with a predicted self-power consumption amount set as the upper limit, a certificate of the smaller amount of either the actual self-power consumption amount or the actual power consumption amount is delivered.

F31: Here, the supply consumer A concluded a sales transaction of environmental certificates with 400kWh out of the predicted self-power consumption amount of 500kWh with the purchaser X, but the actual value was 320kWh, which was lower by 80kWh.

F32: On the other hand, the purchaser X purchased the remaining 130kWh from another seller C by a physical transaction.

F33: In addition, the purchaser X retroactively procured the supply consumer A's power by a power retrospective swap transaction. As a result, a P2P transaction for 320kWh of renewable energy power was established between the supply consumer A and the purchaser X.

F34: The supply consumer A obtained a certificate that they sold 100% of the renewable energy power to the purchaser X.

F35: In addition, the purchaser X acquired a consumption certificate of bundled renewable energy power of 320kWh and a consumption certificate of unbundled renewable energy power of 130kWh, and achieved a renewable energy power consumption ratio of 100%.

(Priority Transaction)

The transaction/control platform can execute a two-buyer-type priority future transaction in which, when the contracted par amount in the future transaction is less than the actual power consumption amount of the purchaser, the seller can actually deliver a first rank surplus, which is the difference, to a third party purchaser (second rank purchaser) under a predetermined condition.

In addition, in a case where the actual power consumption amount of the second rank purchaser is less than the first rank surplus amount in the same method as described above, the transaction/control platform can execute a three-buyer-type priority future transaction for actually delivering a second rank surplus, which is the difference, to a further different purchaser (third rank purchaser) under a predetermined condition, and can execute the priority future transaction in which four or more purchasers participate using the same method.

Furthermore, the transaction/control platform can execute a two-seller-type priority future transaction in which, when the actual power generation amount of the seller is less than the contracted par amount in the future transaction, the purchaser can actually receive a first rank shortage, which is the difference, from a third party seller (second rank seller) under a predetermined condition.

In addition, in a case where the actual power consumption amount of the second rank seller is less than the par amount in the same manner as described above, the transaction/control platform can execute a three-seller-type priority future transaction for actually receiving a second rank shortage, which is the difference, from a further different seller (third rank seller) under a predetermined condition, and can execute a priority future transaction in which four or more sellers participate using the same method.

Furthermore, the transaction/control platform can execute a priority transaction in which a plurality of sellers and a plurality of buyers participate, in which, when the actual power consumption amount of the purchaser is less than the par amount, the seller has the right to actually deliver the surplus to the third party purchaser (second rank purchaser) under a predetermined condition, and when the actual power generation amount of the seller is less than the par amount, the purchaser has the right to actually receive the shortage from the third party seller (second rank seller) under a predetermined condition.

Furthermore, the transaction/control platform can perform a priority transaction between any number of two or more sellers with different priority orders and any number of two or more purchasers with different priority orders, as illustrated in the flowchart of Fig. 26. Furthermore, as illustrated in the flowchart of Fig. 27, a future transaction control unit can execute a priority transaction between any number of two or more sellers and any number of two or more purchasers, at least one set of which has the same priority order.

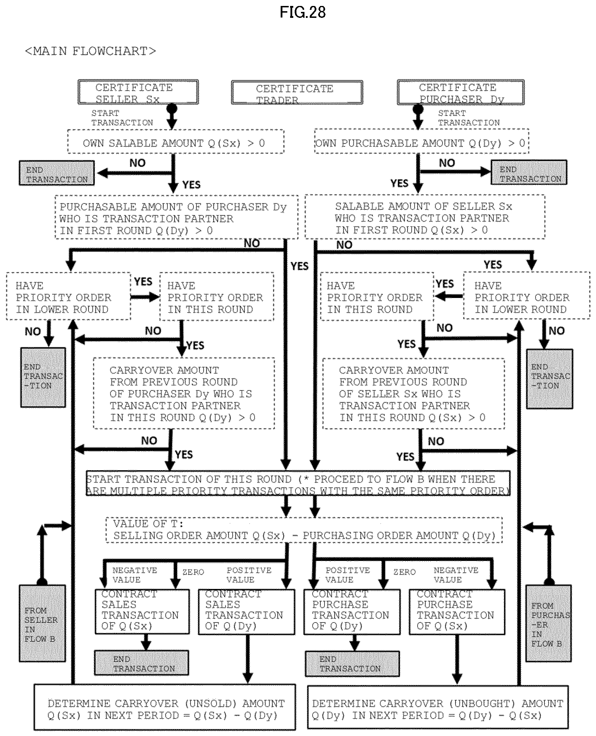

Fig. 28 illustrates a main flowchart of the priority transaction.

First, a first round of transaction is performed by all combinations of a seller Sx who places a selling order of a positive certificate amount Q(Sx) which can be sold and a purchaser Dy who places a purchasing order of a positive certificate amount Q(Dy), the seller Sx and the purchaser Dy mutually having a first priority order.

In a combination of a certain Sx and a certain Dy mutually having the first priority order, if a value (T) obtained by subtracting a purchasing order amount Q(Dy) from a selling order amount Q(Sx) is zero or negative, the Sx sells all certificate amounts Q(Sx) held by the Sx and terminates the transaction.

On the other hand, when the value (T) is positive, Sx contracts Q(Dy) in this round, and when there is no lower priority order corresponding to the second and subsequent rounds, Sx terminates the transaction while leaving a residual Q(Sx)-Q(Dy). If there is a lower priority order, an unsold portion Q(Sx)-Q(Dy) of this round is carried forward and redefined as the selling order amount Q(Sx) of the next round.

On the other hand, when the value (T) is positive or zero, the purchaser Dy contracts all the purchasing order amounts Q(Dy) and terminates the transaction in this round. On the other hand, if the value (T) is negative, Dy contracts Q(Sx) in this round, and if there is no lower priority order corresponding to the second and subsequent rounds, Dy terminates the transaction while leaving a residual Q(Dy)-Q(Sx). If there is a priority order, an unbought Q(Dy)-Q(Sx) of this round is carried forward and redefined as the purchasing order amount Q(Dy) of the next round.

Next, a second round of transaction is performed by all combinations of Sx with positive selling order amount Q(Sx) and Dy with positive purchasing order amount (Dy), Sx and Dy mutually having a second priority order. At this time, in a case where Q(Dy) of the combination partner for Sx and Q(Sx) of the combination partner for Dy are not positive, the transaction cannot be performed. Therefore, the transaction is terminated when the trader does not have a lower priority order, and the process proceeds to a round corresponding to the lower priority order when the trader has the lower priority order.

In the second and subsequent rounds as well, focusing on the value (T) obtained by subtracting the purchasing order amount Q(Dy) from the selling order amount Q(Sx) in each combination of the rounds, the processes similar to that in the first round are performed. In a case where all the order amounts have been contracted or in a case where there is no lower priority order, the transaction is terminated in the round, and in other cases, the process proceeds to the next round.

In this way, the processes are performed up to the lowest priority order round and all the priority transactions are completed except for a case where all the traders complete the contract of all the order amounts.

In the priority transaction, a plurality of certificate sellers may have the same sales priority order to the same certificate purchaser, or a plurality of certificate purchasers may have the same purchase priority order from the same certificate seller. In this case, a total contract amount may be proportionally divided among the traders of the same rank according to the order amount of each trader.

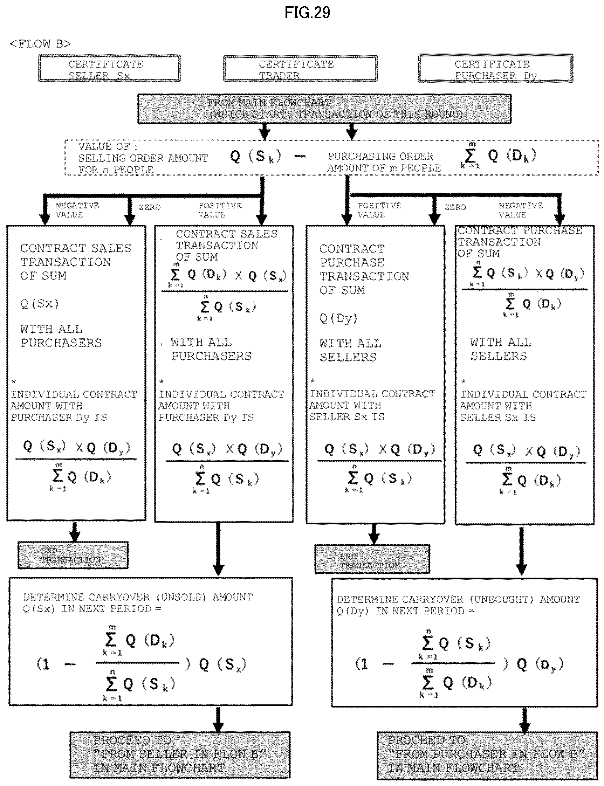

Fig. 29 is a flowchart in a case where there are n power suppliers (certificate sellers) and m power consumers (certificate purchasers) having the same priority order. At this time, n>=1 and m>=1.

At this time, the value (T) is defined as the following equation.

[Equation 1]

Value of
(selling order amount for n people $\sum_{k=1}^{n} Q(S_k)$)-(purchasing order amount of m people $\sum_{k=1}^{m} Q(D_k)$)

When the value (T) is zero or negative, a certain certificate seller x having the priority order contracts a sales transaction of a total Q(Sx) with all the power consumers (certificate purchasers) and terminates the transaction. In this case, a contract amount of the certificate seller x with a certain certificate purchaser y is expressed by the following equation.

[Equation 2]

$$\frac{Q(S_x) \times Q(D_y)}{\sum_{k=1}^{m} Q(D_k)}$$

On the other hand, when the value (T) is positive, the amount expressed by the following equation is contracted as the total amount with all certificate purchasers.

[Equation 3]

$$\frac{\sum_{k=1}^{m} Q(D_k) \times Q(S_x)}{\sum_{k=1}^{n} Q(S_k)}$$

In this case, an individual contract amount of the certificate seller x with the certain certificate purchaser y is expressed by the following equation.

[Equation 4]

$$\frac{Q(S_x) \times Q(D_y)}{\sum_{k=1}^{n} Q(S_k)}$$

In a case where the certificate seller x does not have the lower priority order, the priority transaction is terminated leaving an unsold portion represented by the following equation. On the other hand, in a case where there is the lower priority order, the unsold portion is carried forward and redefined as the selling order amount Q(Sx) for the next and subsequent rounds.

[Equation 5]

$$\left(1 - \frac{\sum_{k=1}^{m} Q(D_k)}{\sum_{k=1}^{n} Q(S_k)}\right) Q(S_x)$$

On the other hand, when the value (T) is positive or zero, the certificate purchaser y having the priority order contracts the purchase transaction of the total Q(Dy) with all the certificate sellers, and terminates the transaction. In this case, the individual contract amount of the certificate purchaser y with the certain certificate seller x is expressed by the following equation.

[Equation 6]

$$\frac{Q\,(S_x)\ \times Q\,(D_y)}{\sum\limits_{k=1}^{n} Q\,(S_k)}$$

On the other hand, when the value (T) is negative, the certificate purchaser contracts with all the certificate sellers on the amount represented by the following equation as the total amount.

[Equation 7]

$$\frac{\sum\limits_{k=1}^{n} Q\,(S_k)\ \times Q\,(D_y)}{\sum\limits_{k=1}^{m} Q\,(D_k)}$$

In this case, the individual contract amount of the certificate purchaser y with the certain certificate seller x is expressed by the following equation.

[Equation 8]

$$\frac{Q\,(S_x)\ \times Q\,(D_y)}{\sum\limits_{k=1}^{m} Q\,(D_k)}$$

In a case where the certificate purchaser y does not have the lower priority order, the priority transaction is terminated while leaving a purchase residual expressed by the following equation. On the other hand, when there is the lower priority order, the purchase residual is carried forward and redefined as the purchasing order amount Q(Dy) of the next round and subsequent rounds.

[Equation 9]

$$\left(1\ -\ \frac{\sum\limits_{k=1}^{n} Q\,(S_k)}{\sum\limits_{k=1}^{m} Q\,(D_k)}\right)\ Q\,(D_y)$$

(Details of Priority Transaction)

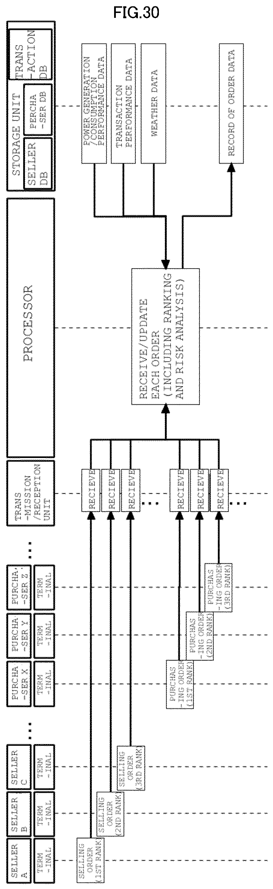

Figs. 30 to 32 are sequence diagrams illustrating an example of a procedure that can realize the priority transaction or the like described above. Hereinafter, the priority transaction will be described in detail with reference to Figs. 30 to 32 or the like.

Fig. 30 is a sequence diagram illustrating a procedure of accepting or updating a transaction order.

First, each user (seller or purchaser) can transmit, from the terminal, the selling order information or the purchasing order information to the transmission/reception unit of the transaction/control platform.

The selling order information or the purchasing order information can include information such as a note and certificate ID of the note or certificate to be traded, a purchaser/seller ID indicating a purchaser or a seller of the note or certificate, a power generation/consumption time zone (current period), a trade amount in the current period, a transaction price, a transaction block, an order of arrival, a desired transaction unit price (standard unit price, upper limit unit price, lower limit unit price, and the like) or a desired transaction amount (standard amount, upper limit amount, lower limit amount, and the like), a desired transaction partner, a desired transaction order, and a transaction non-establishment risk.

Note that the transaction non-establishment risk seen from the purchaser can be calculated, for example, as in the following table (e) (the unit is % for each).

[Table 1]

| | Probability (a) that seller performs power generation as planned | Probability (b) that each purchaser performs power consumption as planned | Probability (c) that each purchaser can consume seller's power | Probability (d) that each purchaser actually consumes seller's power | Probability (e) that any of higher priority order person actually consumes seller's power |
|---|---|---|---|---|---|
| Seller (renewable energy power supplier) | 90 | | | | |
| 1st priority purchaser (power consumer) | | 80 | 90 | 72 | 72 |
| 2nd priority purchaser (power consumer) | | 85 | 28 | 23.8 | 95.8 |
| 3rd priority purchaser power consumer) | | 70 | 4.2 | 2.94 | 98.74 |
| 4th priority purchaser (power consumer) | | 65 | 1.26 | 0.82 | 99.56 |
| 5th priority purchaser (power consumer) | | 95 | 0.44 | 0.42 | 99.98 |
| 6th priority purchaser (power consumer) | | 90 | 0.02 | 0.02 | 99.998 |

That is, in the above example, a probability a and a probability b are calculated from past power generation/-consumption performance data of the seller or the purchaser, transaction performance data, weather data, and the like. A probability c is calculated by subtracting, from 100%, a probability e that a higher priority order entity actually consumes the power of the seller. A probability d is calculated as a product of the probability b and the probability c. The probability e is calculated as the sum of the probability d and the probability d in the higher priority order entity.

Note that the transaction non-establishment risk seen from the seller can be calculated, for example, by reversing the relationship between the purchaser and the seller and the relationship between the consumption and the supply (power generation) in the above table (the table below).

[Table 2]

| | Probability (a) that purchaser performs power consumption as planned | Probability (b) that each seller performs power generation as planned | Probability (c) that each seller can supply purchaser's power | Probability (d) that each seller actually supplies purchaser's power | Probability (e) that any of higher priority order person actually supplies purchaser's power |
|---|---|---|---|---|---|
| Seller (power consumer) | 95 | | | | |
| 1st priority seller (power supplier) | | 90 | 95 | 85.5 | 85.5 |
| 2nd priority seller (power supplier) | | 80 | 14.5 | 11.6 | 97.1 |
| 3rd priority seller (power supplier) | | 75 | 2.9 | 2.18 | 99.28 |
| 4th priority seller (power supplier) | | 80 | 0.72 | 0.58 | 99.86 |
| 5th priority seller (power supplier) | | 95 | 0.14 | 0.14 | 99.99 |
| 6th priority seller (power supplier) | | 90 | 0.01 | 0.01 | 99.999 |

The processor that receives each order information as described above from the transmission/reception unit can add the priority order of each order to the corresponding order information on the basis of the information such as the order of arrival, the desired transaction unit price, the desired transaction amount, the desired transaction order, and the transaction non-establishment risk included in each order information.

Here, a market transaction such as an auction or continuous-session transaction may be realized according to the type of order information for determining the priority order of each order and the weighting thereof.

Here, the processor may add the same priority order to the plurality of orders, which may realize the following transaction.

For example, it is assumed that 100 households of prosumers living in the same town are oriented to self-consume their power and environmental certificates in the town. In this case, as the transaction of the eighth category, all the prosumers of 100 households may be the first priority order seller to the 100 households, and all the prosumers of 100 households may be the first priority order purchaser from the 100 households.

Furthermore, in preparation for a case where the power generation amount of all the households cannot be consumed by the 100 households, the seller may make a contract with another 200 households of the prosumers outside the town as the purchaser at 101st priority order, and in preparation for a case where the power generation amount cannot be consumed by the 200 households, the prosumers of the 100 households may also make an announcement to the public and make a transaction contract of a power and environmental certificate as the purchaser at 301st priority order from each of the 100 households of the prosumers.

On the other hand, in preparation for a case where the power generation amount of all the households cannot be generated by all the 100 households, the purchaser may make a contract with another 200 households of the prosumers outside the town as the seller at 101st priority order, and in preparation for a case where the power generation amount cannot be generated by the 200 households, the prosumers of the 100 households may also make an announcement to the public and make a transaction contract of a power and environmental certificate as the seller at 301st priority order to each of the 100 households of the prosumers.

In this way, it is possible to support the construction of a demand-supply integrated distributed renewable energy power supply system by a cluster microgrid transaction that preferentially matches the supply and demand of the renewable energy power having high proximity and expands the scope of flexibility in stages.

For example, it is assumed that a business operator who has a large factory in a certain region intends to purchase power and environmental certificates from the prosumers of 100 households living in the same town as a part of contribution to the region. In this case, as the transaction of the sixth category and the eighth category, the business operator may be the purchaser, and the 100 households may equally be the first priority order sellers and make the future transaction contract for power and environmental certificates. In preparation for a case where the power cannot be generated by the 100 households, the purchaser may make a contract with another 200 households of the prosumers outside the town as the seller at 101st priority order, and in preparation for a case where the power generation amount cannot be generated by the 200 households, the purchaser may also make an announcement to the public and make a transaction contract of a power and environmental certificate as the seller at 301st priority order.

Note that each user (seller or purchaser) can also transmit, from the terminal, the selling order information or the purchasing order information to the transmission/reception unit of the transaction/control platform, and update the order information of the selling order or the purchasing order placed by the user.

In this way, the selling order information or the purchasing order information transmitted from the terminal by each user (seller or purchaser) is integrated and ranked by the processor, and recorded in the storage unit as order data.

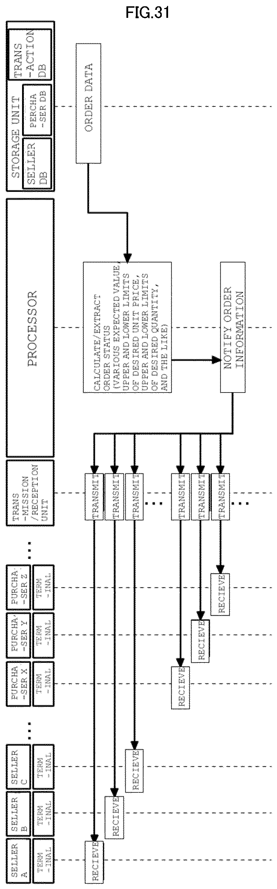

Fig. 31 is a sequence diagram illustrating a procedure of calculating and extracting information indicating an order status from each order information and notifying each user. As illustrated in Fig. 30, the selling order information or the purchasing order information transmitted from the terminal of each user (seller or purchaser) to the transmission/reception unit is recorded in the storage unit of the transaction/control platform as integrated order data.

The processor can calculate or extract information (order status information) indicating an overall order status based on the order data and add the information to the order information. The information indicating the overall order status is information serving as a reference for determining the value of each order in the market, and including but not limited to various expected values, an upper limit value, a lower limit value, an average value, and a median value of the desired transaction unit price and the desired transaction amount for each priority order.

Subsequently, the processor can transmit the order information to which the order status information is added and integrated, to the terminal of each user (seller or purchaser) via the transmission/reception unit.

That is, according to the mechanism illustrated in Fig. 31, each user (seller or purchaser) can confirm the order information of themselves and the others using the terminal. The seller or the purchaser can view information about all or some of the above-described selling order or purchasing order of the other seller or the purchaser up to the point of placing the selling order or purchasing order.

Note that each user (seller or purchaser) can confirm the order information of themselves and the others, and then re-transmit the selling order information or the purchasing order information changed on the terminal to the transmission/reception unit of the transaction/control platform, and can update the order information including the transaction desired unit price (standard unit price, upper limit unit price, lower limit unit price, and the like) and the transaction desired amount (standard amount, upper limit amount, lower limit amount, and the like) for each priority order of the selling order or the purchasing order placed by themselves.

Furthermore, the sequence illustrated in Figs. 30 and 31 can be repeated until a predetermined period, that is, each user (seller or purchaser) can repeatedly update the order information of the selling order or the purchasing order placed by themselves until a predetermined period while confirming the order information of themselves and the others.

In this way, each user (seller or purchaser) can appropriately update the transaction conditions or the like on the basis of the order information of themselves and the others, and adjustment of the supply and demand and the price of the transaction in the market is easily performed.

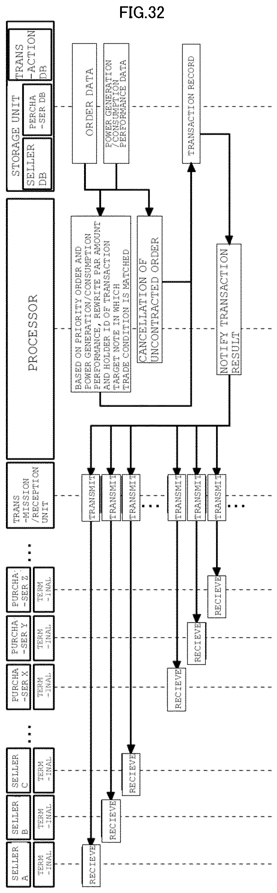

Fig. 32 is a sequence diagram illustrating execution of transaction processing.

The processor performs transaction processing based on the order data and a power generation consumption performance data recorded in the storage unit. Specifically, the processor can rewrite the par amount and the holder ID of the note or certificate to be traded while adding the information indicating the transaction contract to the order information in the transaction in which a trade condition is matched based on each order information and the power generation consumption performance.

At this time, the processor can proceed with processing of each transaction order according to the priority order included in the order information according to the flow illustrated in Fig. 28 or 29.

In addition, the processor can add information indicating an uncontracted transaction (and cancellation of transaction) to the order information in the transaction in which the trade condition is not matched based on each order information and the power generation consumption performance.

By the processing as described above, each order information to which the information of the transaction contract or the uncontracted transaction is added is recorded in the storage unit as a transaction record data.

The processor can transmit information indicating a transaction result to the terminal of each user via the transmission/reception unit based on the transaction record data. The information indicating the transaction result can include information such as order information that formed the basis of the transaction, a change in the par amount and the holder ID in the note or certificate to be traded, the purchaser ID (or the seller ID) of the transaction partner, and information on a contracted transaction or an uncontracted transaction.

That is, with the mechanism illustrated in Fig. 32, each user (seller or purchaser) can confirm the transaction status using the terminal.

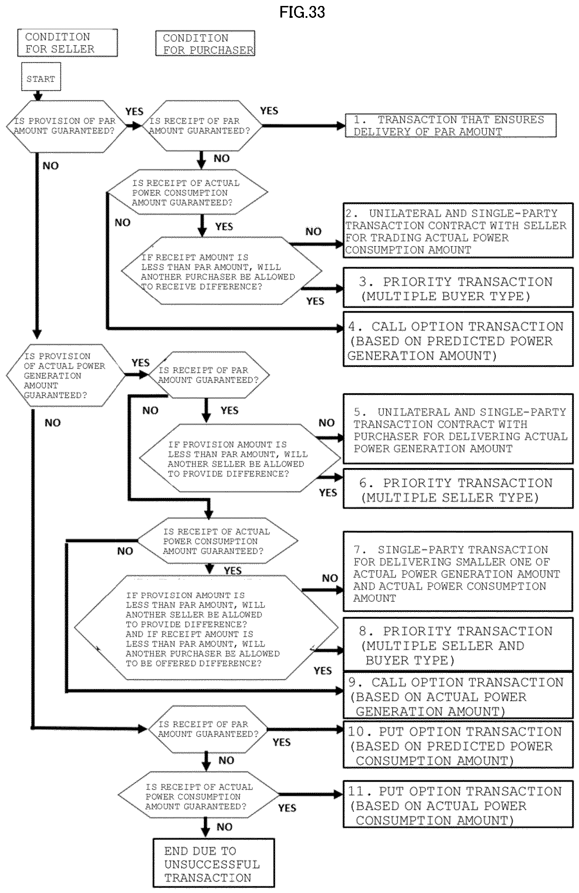

For example, the transaction categories illustrated in Fig. 33 can be realized on the basis of the mechanism as described above.

(Priority Transaction of Unilateral Seller and Multiple Purchasers)

A unilateral seller contract between two parties (second category) may be concluded, in which the seller guarantees the actual delivery of the environmental certificate with a contracted par amount, but the purchaser does not have such obligation, and when the actual power consumption amount is less than the par amount, the purchaser purchases (actually receives) an actual environmental certificate with the par amount corresponding to the actual power consumption amount (power amount in the power future transaction) at a predetermined unit price.

Furthermore, as the third category, a priority transaction among three or more parties of a multi-buyer type (third category) may be executed, in which, in the unilateral seller contract, when the actual value of the power consumption amount of the purchaser is less than the contracted par amount, the seller has the right to actually deliver a difference between the contracted par amount and the actual power consumption amount to a third party purchaser under a predetermined condition.

(Examples of Priority Transaction of Unilateral Seller and Multiple Purchasers)

Although there may be various transaction methods described above, as one of the transaction methods, a contract that can secure a priority order under a predetermined condition on a first-come, first-served basis may be used. That is, this method can be realized by adding the priority order of each order to the corresponding order information on the basis of the information on the order of arrival included in each order information in the reception or update of the transaction order illustrated in Fig. 29. In this case, the transaction method may be an OTC transaction or a market transaction such as an auction or continuous-session transaction.

For example, in an example of the OTC transaction, a certain seller may make a sales announcement to an unspecified number of power consumers. In this case, for example, in a case where five (A to E) power consumers (purchasers) have already made purchasing orders for the priority transaction in response to the sales announcement and have acquired the first to fifth orders, a power consumer (purchaser F) who newly make a purchasing order for the priority transaction may acquire the sixth order of the priority transaction, and in a case where the total of the actual power consumption amounts of the power consumers (purchasers) from the first to fifth orders is less than the contracted par amount in the third category and the actual power generation amount in the eighth category, the purchaser F may receive a considerable amount of environmental certificate up to the difference as the upper limit.

In the above case, the positions of the purchaser and the seller can be exchanged.

For example, in an example of the OTC transaction, a certain purchaser may make a purchase announcement to an unspecified number of sellers. In this case, for example, in a case where five (A to E) power suppliers (sellers) have already made selling orders for the priority transaction in response to the purchase announcement and have acquired the first to fifth orders, a power supplier (seller F) who newly make a selling order for the priority transaction may acquire the sixth order of the priority transaction, and in a case where the total of the actual power generation amounts of the power suppliers (sellers) from the first to fifth orders is less than the contracted par amount in the sixth category and the actual power consumption amount in the eighth category, the seller F may deliver a considerable amount of environmental certificate up to the difference as the upper limit.

(Priority Transaction of Multiple Sellers and Multiple Purchasers)

In addition, as the seventh category, a contract may be made in which the smaller one of the actual power generation amount of the seller and the actual power consumption amount of the purchaser may be delivered by a predetermined transaction method.

Furthermore, as the eighth category, a priority order transaction in which a plurality of sellers and a plurality of buyers participate may be performed. Although it is a non-commit contract having the same content as that of the eighth category, when the actual power consumption amount of the purchaser is less than the par amount, the seller has the right to actually deliver the surplus to a third party purchaser under a predetermined condition, and when the actual power generation amount of the seller is less than the par amount, the purchaser has the right to actually receive the shortage from a third party seller under a predetermined condition.

That is, a priority transaction among three or more parties of a multi-buyers type (eighth category) may be executed, in which, when the actual power consumption amount necessary for invalidation or offset of the purchaser is less than the actual power generation amount of the seller, the seller has the right to actually deliver the difference between the actual power generation amount and the actual value of the power consumption amount to a third party purchaser under a predetermined condition.

(Examples of Priority Transaction of Multiple Sellers and Multiple Purchasers)

As the above-described applied transaction method, as the transaction of the eighth category, the seller may perform a transaction with a second-ranked or later purchaser regardless of the contract of the transaction with a first-ranked purchaser, and the purchaser may perform a transaction with the second-ranked or later purchaser regardless of the contract of the transaction with the first-ranked purchaser.

For example, a certain seller may place a business operator of a pumped-storage power plant or a power storage as a second-ranked party as a final buyer who can be sure of delivering the power, and make a sales announcement at a unit price considerably lower than the sales unit price to a first-ranked party before establishing a transaction with the first-ranked purchaser, and make a contract of the priority transaction with the second-ranked party.

On the other hand, a certain purchaser may place a business operator of a pumped-storage power plant or a power storage as a second-ranked party as a final seller who can be sure of receiving the power, and make a purchase announcement at a unit price considerably higher than the purchase unit price to a first-ranked party before establishing a transaction with the first-ranked seller, and make a contract of the priority transaction with the second-ranked party by the OTC transaction on a first-come, first-served basis or an auction transaction with the purchase unit price as the upper limit of the unit price.

As a result, the seller can secure a receiver with high probability, the purchaser who has acquired the first rank can secure a provider with high probability, and the business operator of the pumped-storage power plant or the power storage with fewer time pressure can acquire the power or the environmental certificate at low cost.

On the other hand, the purchaser can secure the provider with high probability, the seller who has acquired the first rank can secure a receiver with high probability, and the business operator of the pumped-storage power plant or the power storage with fewer time pressure can sell the power or the environmental certificate at high price.

(Group Transaction)

The processor can perform group transaction processing in which a plurality of power suppliers (sellers) form one group, combine the power selling note or the environmental certificate selling note corresponding to the power generation amount of all or some power plants belonging to the group, and accept a selling order as a single seller.

The processor can perform group transaction processing in which a plurality of power consumers (purchasers) form one group, combine the power purchasing note or the environmental certificate purchasing note corresponding to the power consumption amount of all or some demand facility belonging to the group, and accept a purchasing order as a single purchaser. Note that an electric power retailer company may be regarded as a single seller or purchaser.

(Commodity Transaction)

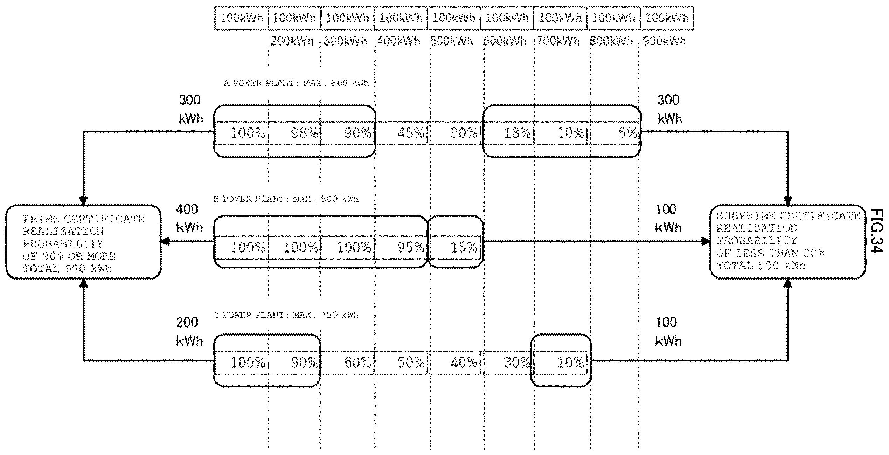

Fig. 34 illustrates an example of a commodity transaction in which certificates having the same product characteristic are treated as commodity products.

As a category of the group transaction, the processor can divide a planned power generation amount for each time zone of each power supplier (seller) into blocks in units of a small amount of power, allocate the realization probability for each block, bundle the power selling notes or the environmental certificate selling notes of power amount blocks having similar realization probabilities between different power suppliers, and collectively accept a selling order. For example, a set of power amount blocks having realization probabilities of 90% or more or corresponding notes and certificates can be bundled as a prime certificate, and a set of power amount blocks having realization probabilities of less than 20% or corresponding notes and certificates can be bundled as a subprime certificate. This makes it possible to reduce the fluctuation risk of a single power plant.

As a category of the group transaction, the processor can divide a planned power consumption amount for each time zone of each power consumer (purchaser) into blocks in units of a small amount of power, allocate the realization probability for each block, bundle the power purchasing notes or the environmental certificate purchasing notes of power amount blocks having similar realization probabilities between different power consumers, and collectively accept a selling order.

In addition, the processor can execute commodity product transaction processing in which power or environmental certificates having the same attribute are set as commodity products. For example, in the same district agricultural cooperative, vegetables such as bell peppers are classified into three grades of S, A, and B, regardless of which farm they are shipped from, they are regarded as commodity products of the same grade of the same agricultural cooperative, and are traded at different prices for each grade. In the same manner, for example, social and environmental stress such as scenery and safety of each power plant, or the level of the management and technical capabilities of the power suppliers and the power consumers are evaluated and rated in five grades, and environmental values of the same grade of the same region are regarded as the same commodity products.

On the premise that the group transaction and the commodity transaction as described above are performed, the processor can add a collective transaction ID to each piece of note and certificate data included in a set of a plurality of pieces of note and certificate data to be traded.

That is, the processor processes the set of the plurality of pieces of note and certificate data to which the collective transaction ID is added as a single piece of note and certificate data associated with the collective transaction ID, thereby performing a transaction in a similar manner by a method of trading a single piece of note and certificate data.

Note that the configurations and functions described in the above embodiments are merely examples, and various modifications can be made on the basis of design requirements and the like.

Reference Signs List

| | |
|---|---|
| 1 | Processor |
| 2 | Storage unit |
| 3 | Transmission/reception unit |
| SM | Smart meter |
| DPS | Seller terminal |
| DC | Purchaser terminal |

**Claims**

1.  A control device comprising: a processor; a storage unit; and a transmission/reception unit, wherein

    the processor generates, based on power demand-supply plan information indicating a power generation plan and a power consumption plan for each time zone,
    environmental certificate selling note data associated with a time stamp, a par amount, and a holder ID, and
    environmental certificate purchasing note data associated with a time stamp, a par amount, and a holder ID, and
    stores the data in the storage unit;
    makes a contract of a future transaction of environmental certificates by,
    based on future transaction information received by the transmission/reception unit,
    duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
    duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit;
    clears the future transaction of the environmental certificate by,
    based on power demand-supply performance information received by the transmission/reception unit, rewriting the par amounts of the environmental certificate selling note data and the environmental certificate purchasing note data to actual values; and
    makes a contract of a physical transaction of the environmental certificate by,
    based on physical transaction information received by the transmission/reception unit,
    duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and

duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit.

2. A control device comprising: a processor; a storage unit; and a transmission/reception unit, wherein

the processor generates, based on power demand-supply plan information indicating a power generation plan and a power consumption plan for each time zone,

power selling note data associated with a time stamp, a par amount, and a holder ID,

power purchasing note data associated with a time stamp, a par amount, and a holder ID,

environmental certificate selling note data associated with a time stamp, a par amount, and a holder ID, and

environmental certificate purchasing note data associated with a time stamp, a par amount, and a holder ID, and stores the data in the storage unit;

makes a contract of a future transaction of power and environmental certificates by,

based on future transaction information received by the transmission/reception unit,

duplicating the power selling note data, rewriting the par amount of the duplicated power selling note data to the same value as a contract amount, rewriting the holder ID of the duplicated power selling note data to the same value as a purchaser ID, and storing the data in the storage unit,

duplicating the power purchasing note data, rewriting the par amount of the duplicated power purchasing note data to the same value as a contract amount, rewriting the holder ID of the duplicated power purchasing note data to the same value as a seller ID, and storing the data in the storage unit,

duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and

duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit;

clears the future transaction of the power and the environmental certificate by,

based on power demand-supply performance information received by the transmission/reception unit, rewriting the par amounts of the power selling note data, the power purchasing note data, the environmental certificate selling note data, and the environmental certificate purchasing note data to actual values;

makes a contract of a physical transaction of the environmental certificate by,

based on physical transaction information received by the transmission/reception unit,

duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and

duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit; and

makes a contract of a retrospective swap transaction of power by,

based on swap transaction information received by the transmission/reception unit,

rewriting the holder IDs of the power selling note data and the power purchasing note data, and storing the data in the storage unit.

3. The control device according to claim 2, wherein

the processor further issues a consumption certificate of renewable energy power according to a result of searching the storage unit for the power selling note data satisfying a condition corresponding to the environmental certificate selling note data based on environmental certificate invalidation information received by the transmission/reception unit.

4. The control device according to claim 2, wherein
the processor further issues supply certificate data of renewable energy power according to a result of searching the storage unit for the power purchasing note data satisfying a condition corresponding to the environmental certificate purchasing note data based on supply certificate issuance information received by the transmission/reception unit.

5. The control device according to claim 1 or 2, wherein

the processor further makes a contract of a secondary physical transaction of the environmental certificate by, based on secondary physical transaction information received by the transmission/reception unit,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit,
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit, and
deleting the time stamps in the duplicated environmental certificate selling note data and the duplicated environmental certificate purchasing note data.

6. The control device according to claim 2, wherein

the processor further, based on output control information and the future transaction information received by the transmission/reception unit,
calculates a renewable energy power unit price for each power consumer or for each power supplier based on a contract unit price of power and a contract unit price of environmental certificates corresponding to the power, and selects a control target facility of the power consumer or the power supplier in ascending order of the renewable energy power unit price until a value obtained by adding a contract power amount reaches a required amount of output control; and
the transmission/reception unit transmits an output control signal to a smart meter attached to the control target facility selected by the processor.

7. A method causing a computer to perform:

generating, based on power demand-supply plan information when the power demand-supply plan information indicating a power generation plan and a power consumption plan for each time zone is received,
environmental certificate selling note data associated with a par amount and a holder ID, and
environmental certificate purchasing note data associated with a par amount and a holder ID, and storing the data in the storage unit;
making a contract of a future transaction of environmental certificates by,
based on future transaction information when the future transaction information is received,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit;
rewriting, based on power demand-supply performance information when the power demand-supply performance information is received, par amounts of the environmental value selling note data and the environmental value purchasing note data to actual values; and
making a contract of a physical transaction of the environmental certificate by,
based on physical transaction information when the physical transaction information is received,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and

duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit.

8. A program causing a computer to perform:

generating, based on power demand-supply plan information when the power demand-supply plan information indicating a power generation plan and a power consumption plan for each time zone is received,
environmental certificate selling note data associated with a par amount and a holder ID, and
environmental certificate purchasing note data associated with a par amount and a holder ID, and storing the data in the storage unit;
making a contract of a future transaction of environmental certificates by,
based on future transaction information when the future transaction information is received,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit;
rewriting, based on power demand-supply performance information when the power demand-supply performance information is received, par amounts of the environmental value selling note data and the environmental value purchasing note data to actual values; and
making a contract of a physical transaction of the environmental certificate by,
based on physical transaction information when the physical transaction information is received,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit,; and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit.

9. A recording medium on which a program is recorded, the program causing a computer to perform:

generating, based on power demand-supply plan information when the power demand-supply plan information indicating a power generation plan and a power consumption plan for each time zone is received,
environmental certificate selling note data associated with a par amount and a holder ID, and
environmental certificate purchasing note data associated with a par amount and a holder ID, and storing the data in the storage unit;
making a contract of a future transaction of environmental certificates by,
based on future transaction information when the future transaction information is received,
duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and
duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit;
rewriting, based on power demand-supply performance information when the power demand-supply performance information is received, par amounts of the environmental value selling note data and the environmental value purchasing note data to actual values; and
making a contract of a physical transaction of the environmental certificate by,
based on physical transaction information when the physical transaction information is received,

duplicating the environmental certificate selling note data, rewriting the par amount of the duplicated environmental certificate selling note data to the same value as a contract amount, rewriting the holder ID of the duplicated environmental certificate selling note data to the same value as a purchaser ID, and storing the data in the storage unit, and

duplicating the environmental certificate purchasing note data, rewriting the par amount of the duplicated environmental certificate purchasing note data to the same value as a contract amount, rewriting the holder ID of the duplicated environmental certificate purchasing note data to the same value as a seller ID, and storing the data in the storage unit.

**10.** The control device according to claim 1 or 2, wherein

the processor, based on order information received by the transmission/reception unit,
generates order data including at least information on an order ID, an ID of note data to be traded, an ID of a purchaser or seller who transmitted an order, an order of arrival, a desired transaction unit price, a desired transaction amount, and a desired priority order for each order, and stores the data in the storage unit; and
the processor further generates priority order information for each order based on the information on the order of arrival, the desired transaction unit price, the desired transaction amount, or the desired priority order for each order included in the order data, and adds them to the order data to determine the priority order of each order; and
makes a contract of the future transaction or the physical transaction using the priority order of each order based on the order data and the future transaction information or the physical transaction information.

**11.** The control device according to claim 10, wherein

the processor extracts order status information including information on an upper limit, a lower limit, an average value or a median value of the desired transaction unit price or an upper limit, a lower limit, an average value or a median value of the desired transaction amount based on the order data stored in the storage unit, and adds the information to the order data; and
the processor further transmits the order data to a terminal of the seller or the purchaser via the transmission/-reception unit.

**12.** The control device according to claim 10, wherein

the processor generates information on a transaction non-establishment risk for each order based on the priority order of each order included in the order data, power generation/consumption performance data, transaction performance data, and weather data stored in the storage unit, and adds the information to the order data; and
the processor further transmits the order data to a terminal of the seller or the purchaser via the transmission/-reception unit.

**13.** The control device according to claim 1 or 2, wherein
the processor adds a collective transaction ID to each piece of note and certificate data included in a set of a plurality of pieces of note and certificate data to be traded, and processes the set of the plurality of pieces of note and certificate data to which the collective transaction ID is added as a single piece of note and certificate data associated with the collective transaction ID.

FIG.1

FIG.2

| TRANSACTION/CONTROL PLATFORM |
| --- |

PROCESSOR

ENVIRONMENTAL CERTIFICATE TRANSACTION SYSTEM

CALCULATION UNIT | CONTROL UNIT

TRANSACTION/CONTROL DB | SELLER DB | PURCHASER DB

POWER TRANSACTION SYSTEM

CALCULATION UNIT | CONTROL UNIT

TRANSACTION/CONTROL DB | SELLER DB | PURCHASER DB

POWER CONTROL SYSTEM

CALCULATION UNIT | CONTROL UNIT

TRANSACTION/CONTROL DB | SELLER DB | PURCHASER DB

STORAGE UNIT

INPUT UNIT

OUTPUT UNIT

DISPLAY UNIT

TRANSMISSION/RECEPTION UNIT

1    2    3

POWER TRANSMISSION AND DISTRIBUTION MANAGER DB

METEORO-LOGICAL DB

TRANSACTION/CONTROL DB

TERMINAL | SMART METER/CONTROL DEVICE

POWER SUPPLIER (SELLER)

TERMINAL | SMART METER/CONTROL DEVICE

POWER CONSUMER (PURCHASER)

FIG.3

1.TRANSACTION PARTICIPANT REGISTRATION PROCESSING

2.POWER FUTURE NOTE, ENVIRONMENTAL CERTIFICATE
  FUTURE NOTE ISSUANCE PROCESSING

3.POWER FUTURE TRANSACTION PROCESSING

4.ENVIRONMENTAL CERTIFICATE FUTURE TRANSACTION PROCESSING

SELF-CONSUMPTION AMOUNT TRANSACTION

DIVIDED TRANSACTION/SEGMENTED TRANSACTION

FUTURE TRANSACTION WITH CONDITIONS, OPTION TRANSACTION

PRIORITY TRANSACTION

BACKUP POWER-SUPPLY TRANSACTION

GROUP TRANSACTION/COMMODITY TRANSACTION

5.POWER FUTURE NOTE/ENVIRONMENTAL CERTIFICATE
  FUTURE NOTE RECONCILIATION PROCESSING

6.OUTPUT SUPPRESSION CONTROL PROCESSING

7.SETTLEMENT PROCESSING OF ENVIRONMENTAL CERTIFICATE FUTURE TRANSACTION
  AND POWER FUTURE TRANSACTION

8.ENVIRONMENTAL CERTIFICATE PHYSICAL TRANSACTION PROCESSING

9.POWER RETROSPECTIVE SWAP TRANSACTION PROCESSING

10.ENVIRONMENTAL CERTIFICATE INVALIDATION PROCESSING

11.SUPPLY CERTIFICATE ISSUANCE PROCESSING

12.SECONDARY ENVIRONMENTAL CERTIFICATE PHYSICAL TRANSACTION PROCESSING

## FIG.4

| | POWER SELLER | POWER PURCHASER |
|---|---|---|
| 2.NOTE ISSUANCE | ACQUIRE SELLING NOTE HAVING PROVISIONAL PAR AMOUNT CORRESPONDING TO POWER GENERATION PLAN | ACQUIRE PURCHASING NOTE HAVING PROVISIONAL PAR AMOUNT CORRESPONDING TO POWER CONSUMPTION PLAN |

FUTURE TRANSACTION

3.POWER FUTURE TRANSACTION

DIVIDE NOTE BY TRANSACTION | DIVIDE NOTE BY TRANSACTION

HOLD UNSOLD SELLING NOTE

RELEASE CONTRACTED SELLING NOTE

ACQUI -SITION

RELEASE CONTRACTED PURCHASING NOTE

ACQUI -SITION

HOLD UNPURCHASED PURCHASING NOTE

POWER GENERATION AND CONSUMPTION(POWER DELIVERY)

7.SETTLEMENT

CORRECT TOTAL PAR AMOUNT OF ALL ISSUED SELLING NOTES FROM PLANNED POWER GENERATION VALUE TO ACTUAL VALUE

CORRECT TOTAL PAR AMOUNT OF ALL ISSUED PURCHASING NOTES FROM PLANNED POWER CONSUMPTION VALUE TO ACTUAL VALUE

CORRECT PAR AMOUNT OF ACQUIRED PURCHASING NOTE TO ACTUAL RECEIPT AMOUNT OF POWER

CORRECT PAR AMOUNT OF ACQUIRED SELLING NOTE TO ACTUAL DELIVERY AMOUNT OF POWER

9.POWER RETROSPECTIVE SWAP TRANSACTION PROCESSING

PURCHASER X NOTE

PURCHASER Y NOTE

EXCHANGE PURCHASING NOTES HELD BY SELLERS

EXCHANGE SELLING NOTES HELD BY PURCHASERS

SELLER B NOTE

SELLER A NOTE

FIG.5

| | ENVIRONMENTAL CETIFICATE SELLER | ENVIRONMENTAL CETIFICATE PURCHASER |
|---|---|---|

| 2.NOTE ISSUANCE | ACQUIRE SELLING NOTE HAVING PROVISIONAL PAR AMOUNT CORRESPONDING TO POWER GENERATION PLAN | ACQUIRE PURCHASING NOTE HAVING PROVISIONAL PAR AMOUNT CORRESPONDING TO POWER CONSUMPTION PLAN |

**FUTURE TRANSACTION**

4.ENVIRONMENTAL CERTIFICATE FUTURE TRANSACTION

DIVIDE NOTE BY TRANSACTION | DIVIDE NOTE BY TRANSACTION

HOLD UNSOLD SELLING NOTE

RELEASE CONTRACTED SELLING NOTE

ACQUI -SITION

ACQUI -SITION

RELEASE CONTRACTED PURCHASING NOTE

HOLD UNPURCHASED PURCHASING NOTE

**POWER GENERATION AND CONSUMPTION (POWER DELIVERY)**

7.SETTLEMENT

CORRECT TOTAL PAR AMOUNT OF ALL ISSUED SELLING NOTES FROM PLANNED POWER GENERATION VALUE TO ACTUAL VALUE

CORRECT TOTAL PAR AMOUNT OF ALL ISSUED PURCHASING NOTES FROM PLANNED POWER CONSUMPTION VALUE TO ACTUAL VALUE

ACQUIRE ENVIRONMENTAL CERTIFICATE FOR ACTUAL PAR AMOUNT HOLD

HOLD | TRANSFER ENVIRONMENTAL CERTIFICATE UNDER FUTURE CONTRACT CONDITIONS | ACQUI -SITION

CORRECT PAR AMOUNT OF ACQUIRED PURCHASING NOTE TO CERTIFICATE TRANSFERRED AMOUNT

CORRECT PAR AMOUNT OF ACQUIRED SELLING NOTE TO CERTIFICATE ACQUISITION AMOUNT

8.PHYSICAL TRANSACTION

ENVIRONMENTAL CERTIFICATE SALES

HOLD | CONTRACT/TRANSFER | ACQUI -SITION

ACQUI -SITION

HOLD PAR AMOUNT OF UNSOLD SELLING NOTE

RELEASE PAR AMOUNT OF CONTRACTED SELLING NOTE

ACQUI -SITION

RELEASE PAR AMOUNT OF CONTRACTED PURCHASING NOTE

HOLD PAR AMOUNT OF UNPURCHASED PURCHASING NOTE

EP 4 773 070 A1

FIG.6

| POWER TRANS-MISSION /DISTRI-BUTION MANAGER DB | POWER SUPPLIER (SELLER) | | POWER CONSUMER (PURCHASER) | | TRANS-MISSION /RECEPTION UNIT | PROCESSOR | STORAGE UNIT | |
|---|---|---|---|---|---|---|---|---|
| | TERM-INAL | SMART METER /OUTPUT CONTROL DEVICE | TERM-INAL | SMART METER /OUTPUT CONTROL DEVICE | | | SELLER DB | PERCHASER DB |

DB1  DPS  SM  DC  SM

TRANSMIT SELLER INFORMA-TION → RECIEVE → INQUIRE FOR POWER SUPPLIER INFORMATION → RECORD

RELATED INFORMATION SUCH AS POWER GENERATION POINT NUMBER, SMART METER ID, POWER GENERATION FACILITY ← TRANSMIT

ASSOCIATE WITH ISSUANCE OF SUPPLIER ID AND FACILITY ID → RECIEVE → RECORD

RECIEVE ← TRANSMIT

TRANSMIT PURCHASER INFORMA-TION → RECIEVE → INQUIRE FOR POWER CONSUMER INFORMATION → RECORD

RELATED INFORMATION SUCH AS POWER SUPPLY POINT NUMBER, SMART METER ID, LOAD FACILITY ← TRANSMIT

ASSOCIATE WITH ISSUANCE OF CONSUMER ID AND FACILITY ID → RECIEVE → RECORD

RECIEVE ← TRANSMIT

FIG.7

DB1
DB2
DB3

| SELLER | | PURCHASER | | TRANS -MISSION /RECEPTION UNIT | PROCESSOR | STORAGE UNIT | |
| TERM -INAL | SM | TERM -INAL | SM | | | SELLER DB | PERCHASER DB |

MEASURE AND TRANSMIT POWER GENERATION AMOUNT

RECIEVE

PREDICT POWER GENERATION AMOUNT IN CURRENT PERIOD AND FORMULATE POWER GENERATION PLAN IN CURRENT PERIOD

DATA

WEATHER DATA/ POWER TRANS -ACTION DATA

ISSUE POWER SELLING NOTE FOR PAR AMOUNT OF POWER GENERATION AMOUNT IN CURRENT PERIOD

RENEWABLE ENERGY POWER PLANT?  Y

N

ISSUE ENVIRONMENTAL CERTIFICATE SELLING NOTE FOR PAR AMOUNT CORRESPONDING TO POWER GENERATION AMOUNT IN CURRENT PERIOD

RISK ANALYSIS OF POWER GENERATION AMOUNT

RECIEVE

TRANSMIT

WRITE NOTE

RECORD

MEASURE AND TRANSMIT POWER CONSUMPTION AMOUNT

RECIEVE

PREDICT POWER CONSUMPTION AMOUNT IN CURRENT PERIOD AND FORMULATE POWER CONSUMPTION PLAN IN CURRENT PERIOD

DATA

WEATHER DATA/ POWER TRANS -ACTION DATA

ISSUE POWER PURCHASING NOTE FOR PAR AMOUNT OF POWER CONSUMPTION AMOUNT IN CURRENT PERIOD

ISSUE ENVIRONMENTAL CERTIFICATE PURCHASING NOTE FOR PAR AMOUNT CORRESPONDING TO POWER CONSUMPTION AMOUNT IN CURRENT PERIOD

RISK ANALYSIS OF POWER CONSUMPTION AMOUNT

RECIEVE

TRANSMIT

WRITE NOTE

RECORD

40

FIG.8

EP 4 773 070 A1

| SELLER | | PURCHASER | | TRANS -MISSION /RECEPTION UNIT | PROCESSOR | STORAGE UNIT | | TRANS -ACTION DB |
|---|---|---|---|---|---|---|---|---|
| TERM -INAL | SM | TERM -INAL | SM | | | SELLER DB | PERCHASER DB | |

SELLING ORDER (POWER)

RECIEVE

RECEIVE SELLING ORDER

DATA

PERFORM RISK ANALYSIS OF ORDERED PRODUCT AND WRITE EXPECTED VALUE, STANDARD DEVIATION, DISCOUNT RATE, AND THE LIKE TO POWER SELLING NOTE

RECIEVE

TRANSMIT

RECORD

RECORD

PURCHASING ORDER (POWER)

RECIEVE

RECEIVE PURCHASING ORDER

DATA

PERFORM RISK ANALYSIS OF ORDERED PRODUCT AND WRITE EXPECTED VALUE, STANDARD DEVIATION, DISCOUNT RATE, AND THE LIKE TO POWER PURCHASING NOTE

RECIEVE

TRANSMIT

RECORD

RECORD

TRANSMIT

MEASURE AND TRANSMIT POWER CONSUMPTION AMOUNT

RECIEVE

REWRITE PAR AMOUNT AND HOLDER ID OF CONTRACT TARGET NOTE IN WHICH TRADE CONDITION IS MATCHED

ORDER DATA

CANCELLATION OF UNCONTRACTED ORDER

RECORD

RECIEVE

TRANSMIT

NOTIFY TRANSACTION RESULT

RECIEVE

EP 4 773 070 A1

FIG.9

| SELLER | | PURCHASER | | TRANS-MISSION /RECEPTION UNIT | PROCESSOR | STORAGE UNIT | | TRANS-ACTION DB |
|---|---|---|---|---|---|---|---|---|
| TERM-INAL | SM | TERM-INAL | SM | | | SELLER DB | PERCHASER DB | |

SELLING ORDER (ENVIRONMENTAL CERTIFICATE)

RECIEVE

RECEIVE SELLING ORDER

DATA

PERFORM RISK ANALYSIS OF ORDERED PRODUCT AND WRITE EXPECTED VALUE, STANDARD DEVIATION, DISCOUNT RATE, AND THE LIKE TO ENVIRONMENTAL CERTIFICATE SELLING NOTE

RECIEVE

TRANSMIT

RECORD

RECORD

PURCHASING ORDER (ENVIRONMENTAL CERTIFICATE)

RECIEVE

RECEIVE PURCHASING ORDER

DATA

PERFORM RISK ANALYSIS OF ORDERED PRODUCT AND WRITE EXPECTED VALUE, STANDARD DEVIATION, DISCOUNT RATE, AND THE LIKE TO ENVIRONMENTAL CERTIFICATE PURCHASING NOTE

RECIEVE

TRANSMIT

RECORD

RECORD

REWRITE PAR AMOUNT AND HOLDER ID OF CONTRACT TARGET NOTE IN WHICH TRADE CONDITION IS MATCHED

ORDER DATA

CANCELLATION OF UNCONTRACTED ORDER

RECORD

RECIEVE

TRANSMIT

NOTIFY TRANSACTION RESULT

RECIEVE

42

FIG.10

| SELLER | PURCHASER | TRANS -MISSION /RECEPTION UNIT | PROCESSOR | STORAGE UNIT | | TRANS -ACTION DB |
|---|---|---|---|---|---|---|
| TERM -INAL | TERM -INAL | | | SELLER DB | PERCHASER DB | |

IN ENVIRONMENTAL CERTIFICATE
FUTURE TRANSACTION,
IT IS NECESSARY CONDITION THAT
POWER CORRESPONDING
TC CONTRACTED ENVIRONMENTAL CERTIFICATE
FUTURE TRANSACTION
IS CONTRACTED IN POWER FUTURE TRANSACTION

TRANSACTION RESULT DATA
(ENVIRONMENTAL CERTIFICATE
FUTURE TRANSACTION)

N

Y

THERE IS POWER SELLING NOTE
OF POWER CORRESPONDING TO CONTRACTED
ENVIRONMENTAL CERTIFICATE
FUTURE TRANSACTION NOTE

N

Y

TRANSACTION RESULT DATA
(POWER FUTURE TRANSACTION)

PAR AMOUNT OF POWER SELLING NOTE
IS EQUAL TO OR GREATER THAN
PAR AMOUNT OF CORRESPONDING
ENVIRONMENTAL CERTIFICATE SELLING NOTE

N

Y

CANCELLATION
PROCESSING
OF CONTRACT
FOR ENVIRONMENTAL
CERTIFICATE
FUTURE TRANSACTION

RECORD

INFORMATION CORRECTION PROCESSING
AND CANCELLATION NOTIFICATION
OF ENVIRONMENTAL CERTIFICATE SELLING NOTE
AND ENVIRONMENTAL CERTIFICATE
PURCHASING NOTE CORRESPONDING
TO CANCELLED ENVIRONMENTAL
CERTIFICATE FUTURE TRANSACTION
END OF RECONCILIATION PROCESSING

RECORD

RECIEVE

TRANSMIT

RECIEVE

END OF
RECONCILIATION
PROCESSING

RECORD

FIG.11

| POWER TRANS-MISSION /DISTRI-BUTION MANAGER DB | SELLER | | PURCHASER | | TRANS-MISSION /RECEPTION UNIT | PROCESSOR | STORAGE UNIT | |
|---|---|---|---|---|---|---|---|---|
| | TERM-INAL | SM | TERM-INAL | SM | | | SELLER DB | PERCHASER DB |

OUTPUT CONTROL INFORMATION → RECIEVE → OUTPUT CONTROL RISK ANALYSIS ← DATA

RECIEVE ← TRANSMIT

RECIEVE ← SELECT CONTROL TARGET FACILITY BASED ON CONTRACT UNIT PRICE OF ENVIRONMENTAL CERTIFICATE FUTURE TRANSACTION/POWER FUTURE TRANSACTION ← DATA / RECORD

RECIEVE ← TRANSMIT

RECIEVE ← NOTIFY CONTROL TARGET FACILITY ← DATA / RECORD

RECIEVE ← TRANSMIT

RECIEVE ← TRANSMIT OUTPUT CONTROL SIGNAL ← DATA / RECORD

RECIEVE ← TRANSMIT

RECIEVE

POWER GENERATION OUTPUT SUPPRESSION CONTROL

LOAD OUTPUT SUPPRESSION CONTROL

MEASURE AND TRANSMIT CONTROLLED RESULT

MEASURE AND TRANSMIT CONTROLLED RESULT → RECIEVE → RECORD

CASE 1: EXCESS SUPPLY

SUPPLY

DEMAND

a. SUM OF PREDICTED
POWER GENERATION AMOUNT
OF ALL SUPPLIERS INSIDE
AND OUTSIDE MARKET IN POWER GRID
= 2,000 kWh

g. SELECT CONTROL TARGET FACILITY
BASED ON MARKET TRANSACTION
PARTICIPATING SUPPLIERS'
RENEWABLE ENERGY POWER
CONTRACT UNIT PRICE
(POWER UNIT PRICE
+ CERTIFICATE UNIT PRICE)

d. STOP AMOUNT
OF OUTSIDE MARKET
POWER SUPPLY
IS 600 kWh

c. REQUIRED AMOUNT
OF OUTPUT SUPPRESSION
CONTROL IS 900 kWh
= 2,000 - 1,100

e. GENERATE POWER
OF 600 kWh BY
OUTSIDE MARKET
POWER SUPPLY

f. STOP
NECESSARY AMOUNT
OF INSIDE MARKET
POWER SUPPLY
IS 300 kWh

b. SUM OF PREDICTED
POWER CONSUMPTION
AMOUNT OF ALL
CONSUMERS INSIDE
AND OUTSIDE MARKET
IN POWER GRID
IS 1,100 kWh

h. SUPPLY POWER
OF 500 kWh
BY INSIDE MARKET
POWER SUPPLY

| | POWER | CERTIF-ICATE | SUM | |
|---|---|---|---|---|
| SUPPLIER A | 13 | 0 | 13 YEN | STOP |
| SUPPLIER B | 12 | 5 | 17 YEN | STOP |
| SUPPLIER C | 14 | 6 | 20 YEN | STOP BY 50% |
| SUPPLIER D | 11 | 10 | 21 YEN | POWER GENER-ATION |
| SUPPLIER E | 16 | 8 | 24 YEN | POWER GENER-ATION |
| SUPPLIER F | 15 | 13 | 28 YEN | POWER GENER-ATION |

1,200

300

| SUPPLY |
|---|
| 100 |
| 100 |
| 200 |
| 100 |
| 200 |
| 100 |

| DEMAND |
|---|
| 100 |
| 100 |
| 200 |
| 100 |
| 200 |
| 100 |

CASE 2: EXCESS DEMAND

SUPPLY

DEMAND

c.REQUIRED AMOUNT OF OUTPUT SUPPRESSION CONTROL IS 900 kWh = 2,000 - 1,100

d.OUTSIDE MARKET DEMAND OF 600 kWh IS STOPPED

b.SUM OF PREDICTED POWER CONSUMPTION AMOUNT OF ALL CONSUMERS INSIDE AND OUTSIDE MARKET IN POWER GRID IS 2,000 kWh

1,200

2,000
1,900
1,800
1,700
1,600
1,500
1,400
1,300
1,200
1,100
1,000
900
800
700
600
500
400
300
200
100
0

a.SUM OF PREDICTED POWER GENERATION AMOUNT OF ALL SUPPLIERS INSIDE AND OUTSIDE MARKET IN POWER GRID = 1,100 kWh

e.OUTSIDE MARKET DEMAND OF 600 kWh IS CONSUMED

g.MARKET TRANSACTION PARTICIPATING CONSUMERS' RENEWABLE ENERGY POWER CONTRACT UNIT PRICE (POWER UNIT PRICE + CERTIFICATE UNIT PRICE)

f.STOP NECESSARY AMOUNT OF INSIDE MARKET DEMAND IS 300 kWh

h.INSIDE MARKET DEMAND OF 500 kWh IS CONSUMED

300
100
100
200
100
200
100

100
100
200
100
200
100

| | SUM | POWER | CERTIF-ICATE | |
|---|---|---|---|---|
| STOP | 12 YEN | 11 | 1 | CONSUMER A |
| STOP | 15 YEN | 13 | 2 | CONSUMER B |
| STOP BY 50% | 16 YEN | 16 | 0 | CONSUMER C |
| POWER SUPPLY | 17 YEN | 15 | 2 | CONSUMER D |
| POWER SUPPLY | 25 YEN | 14 | 11 | CONSUMER E |
| POWER SUPPLY | 30 YEN | 12 | 18 | CONSUMER F |

FIG.13

EP 4 773 070 A1

FIG.14

| SELLER | | PURCHASER | | TRANS -MISSION /RECEPTION UNIT | PROCESSOR | STORAGE UNIT | |
|---|---|---|---|---|---|---|---|
| TERM -INAL | SM | TERM -INAL | SM | | | SELLER DB | PERCHASER DB |

MEASURE AND TRANSMIT POWER GENERATION AMOUNT

RECIEVE

RENEWABLE ENERGY POWER SUPPLIER? — Y

ISSUE AND DELIVER ENVIRONMENTAL CERTIFICATE

DATA

N

REWRITE PAR AMOUNT OF POWER SELLING NOTE TO ACTUAL VALUE

REWRITE PAR AMOUNT OF ENVIRONMENTAL CERTIFICATE SELLING NOTE TO ACTUAL VALUE

RECORD

RECIEVE ← TRANSMIT

MEASURE AND TRANSMIT POWER CONSUMPTION AMOUNT

RECIEVE

REWRITE PAR AMOUNT OF POWER PURCHASING NOTE TO ACTUAL VALUE

DATA

REWRITE PAR AMOUNT OF ENVIRONMENTAL CERTIFICATE PURCHASING NOTE TO ACTUAL VALUE

RECORD

RECIEVE ← TRANSMIT

IS PROCUREMENT OF ENVIRONMENTAL CERTIFICATE FROM THIRD PARTY REQUIRED?

DATA

N / Y

PROCUREMENT OF ENVIRONMENTAL CERTIFICATE AND NOTE EXCHANGE PROCESSING

DATA

IS CONTRACT CONDITION FULFILLED?

IS CONTRACT CONDITION FULFILLED? — N

N / Y

Y

TRANSFER ENVIRONMENTAL CERTIFICATE AND CORRECT PAR AMOUNTS OF SELLING AND PURCHASING NOTES ACCORDING TO TRANSACTION CONDITION

CORRECT PAR AMOUNTS OF SELLING AND PURCHASING NOTES ACCORDING TO TRANSACTION CONDITION

RECIEVE

CANCELLATION OF CONTRACT INFORMATION

CANCELLATION OF CONTRACT INFORMATION

RECORD

RECIEVE ← TRANSMIT

FIG.15

EP 4 773 070 A1

FIG.16

| SELLER A | SELLER B | PURCHASER X | PURCHASER Y | TRANS -MISSION /RECEPTION UNIT | PROCESSOR | STORAGE UNIT | | TRANS -ACTION DB |
|---|---|---|---|---|---|---|---|---|
| TERM -INAL | TERM -INAL | TERM -INAL | TERM -INAL | | | SELLER DB | PERCHASER DB | |

SWAP TRANSAC -TION OFFER

RECIEVE

TRANSACTION DATA

IDENTIFY ENVIRONMENTAL CERTIFICATE TRANSACTION PARTNER AND NOTIFY OFFER

RECIEVE

TRANSMIT

RECIEVE

TRANSMIT

IDENTIFY POWER TRANSACTION PARTNER AND NOTIFY OFFER

TRANS -MIT REPLY

IS OFFER ACCEPTED?  N
Y

TRANS -MIT REPLY

IS OFFER ACCEPTED?  N
Y

RECIEVE

TRANSMIT

IDENTIFY POWER TRANSACTION PARTNER OF ENVIRONMENTAL CERTIFICATE TRANSACTION PARTNER AND NOTIFY OFFER

TRANS -MIT REPLY

IS OFFER ACCEPTED?  N
Y

RECIEVE

RECIEVE

RECIEVE

RECIEVE

TRANS -MIT

TO ESTABLISH SWAP TRANSACTION, INFORMATION SUCH AS HOLDER IDs OF POWER PURCHASING NOTE AND SELLING NOTE IS REWRITTEN, AND TRANSACTION RESULT IS NOTIFIED

RECORD

TRANS -MIT

TRANSACTION IS NOT ESTABLISHED

RECORD

# FIG.17

CATEGORY 1: AMONG FOUR PARTIES
(TWO POWER SELLERS AND TWO PURCHASERS)

SELLER A
(ENVIRONMENTAL CERTIFICATE
SELLER)

PURCHASER X
(ENVIRONMENTAL CERTIFICATE
PURCHASER)

ENVIRONMENTAL CERTIFICATE

ENVIRONMENTAL CERTIFICATE

BUNDLED RENEWABLE ENERGY POWER

POWER

POWER

POWER

RETROSPECTIVE SWAP TRANSACTION

PURCHASER Y
(THIRD PARTY
POWER PURCHASER)

SELLER B
(POWER SELLER)

CATEGORY 2: AMONG THREE PARTIES
(ONE POWER SELLER, ONE PURCHASER, ONE SELF-CONSUMER)

SUPPLY CONSUMER A
(ENVIRONMENTAL CERTIFICATE
SELLER)

PURCHASER X
(ENVIRONMENTAL CERTIFICATE
PURCHASER)

ENVIRONMENTAL CERTIFICATE

ENVIRONMENTAL CERTIFICATE

BUNDLED RENEWABLE ENERGY POWER

POWER

POWER

SELF
-CONSUMPTION

POWER

POWER

RETROSPECTIVE SWAP TRANSACTION

SELLER B
(POWER SELLER)

# FIG.18

Flowchart with columns: SELLER TERMINAL, PURCHASER TERMINAL, TRANS-MISSION/RECEPTION UNIT, PROCESSOR, STORAGE UNIT (SELLER DB, PURCHASER DB, TRANS-ACTION DB)

- ENVIRONMENTAL CERTIFICATE INVALIDATION INFORMATION → RECIEVE

- IS THERE POWER SELLING NOTE CORRESPONDING TO ENVIRONMENTAL CERTIFICATE SELLING NOTE TO BE INVALIDATED? ← TRANSACTION DATA — N / Y

- ISSUE BUNDLED RENEWABLE ENERGY POWER CONSUMPTION CERTIFICATE WITH SMALLER AMOUNT OUT OF UNPROCESSED AMOUNT OF ENVIRONMENTAL CERTIFICATE SELLING NOTE AND UNPROCESSED AMOUNT OF POWER SELLING NOTE → RECORD

- REDUCE UNPROCESSED AMOUNT OF INVALIDATION OF ENVIRONMENTAL CERTIFICATE SELLING NOTE AND POWER SELLING NOTE BY AMOUNT OF NEW CERTIFICATE ISSUANCE, AND SIMILARLY ADD PROCESSED AMOUNT → RECORD

- ARE THERE ENVIRONMENTAL CERTIFICATE SELLING NOTE CORRESPONDING TO ENVIRONMENTAL CERTIFICATE TO BE INVALIDATED AND POWER SELLING NOTE HAVING THE SAME ATTRIBUTES IN PART? ← TRANSACTION DATA — N / Y

- ISSUE PARTIAL BUNDLED RENEWABLE ENERGY POWER CONSUMPTION CERTIFICATE WITH SMALLER AMOUNT OUT OF UNPROCESSED AMOUNT OF ENVIRONMENTAL CERTIFICATE SELLING NOTE AND UNPROCESSED AMOUNT OF POWER SELLING NOTE → RECORD

- REDUCE UNPROCESSED AMOUNT OF INVALIDATION OF ENVIRONMENTAL CERTIFICATE SELLING NOTE AND POWER SELLING NOTE BY AMOUNT OF NEW CERTIFICATE ISSUANCE, AND SIMILARLY ADD PROCESSED AMOUNT → RECORD

- ARE THERE ENVIRONMENTAL CERTIFICATE SELLING NOTE CORRESPONDING TO ENVIRONMENTAL CERTIFICATE TO BE INVALIDATED AND POWER SELLING NOTE WHOSE ATTRIBUTES DO NOT MATCH THEREOF? ← TRANSACTION DATA — N / Y

- ISSUE PARTIAL UNBUNDLED RENEWABLE ENERGY POWER CONSUMPTION CERTIFICATE WITH SMALLER AMOUNT OUT OF UNPROCESSED AMOUNT OF ENVIRONMENTAL CERTIFICATE SELLING NOTE AND UNPROCESSED AMOUNT OF POWER SELLING NOTE → RECORD

- REDUCE UNPROCESSED AMOUNT OF INVALIDATION OF ENVIRONMENTAL CERTIFICATE SELLING NOTE AND POWER SELLING NOTE BY AMOUNT OF NEW CERTIFICATE ISSUANCE, AND SIMILARLY ADD PROCESSED AMOUNT → RECORD

- NOTIFY INVALIDATION PROCESSING RESULT → TRANSMIT → RECIEVE

## FIG.19

| SELLER | PURCHASER | TRANS -MISSION /RECEPTION UNIT | PROCESSOR | STORAGE UNIT | | |
|---|---|---|---|---|---|---|
| TERM -INAL | TERM -INAL | | | SELLER DB | PERCHASER DB | TRANS -ACTION DB |

SUPPLY CERTIFICATE ISSUANCE INFORMATION

RECIEVE

IS THERE POWER PURCHASING NOTE CORRESPONDING TO ENVIRONMENTAL CERTIFICATE PURCHASING NOTE?

TRANSACTION DATA

N    Y

ISSUE BUNDLED RENEWABLE ENERGY POWER SUPPLY CERTIFICATE WITH SMALLER AMOUNT OUT OF UNPROCESSED AMOUNT OF ENVIRONMENTAL CERTIFICATE PURCHASING NOTE AND UNPROCESSED AMOUNT OF POWER PURCHASING NOTE

RECORD

REDUCE UNPROCESSED AMOUNT OF INVALIDATION OF ENVIRONMENTAL CERTIFICATE PURCHASING NOTE AND POWER PURCHASING NOTE BY AMOUNT OF NEW CERTIFICATE ISSUANCE, AND SIMILARLY ADD PROCESSED AMOUNT

RECORD

ARE THERE ENVIRONMENTAL CERTIFICATE PURCHASING NOTE AND POWER SELLING NOTE HAVING THE SAME ATTRIBUTES IN PART?

TRANSACTION DATA

N    Y

ISSUE PARTIAL BUNDLED RENEWABLE ENERGY POWER SUPPLY CERTIFICATE WITH SMALLER AMOUNT OUT OF UNPROCESSED AMOUNT OF ENVIRONMENTAL CERTIFICATE PURCHASING NOTE AND UNPROCESSED AMOUNT OF POWER PURCHSING NOTE

RECORD

REDUCE UNPROCESSED AMOUNT OF INVALIDATION OF ENVIRONMENTAL CERTIFICATE PURCHASING NOTE AND POWER PURCHASING NOTE BY AMOUNT OF NEW CERTIFICATE ISSUANCE, AND SIMILARLY ADD PROCESSED AMOUNT

RECORD

ARE THERE ENVIRONMENTAL CERTIFICATE PURCHASING NOTE AND POWER PURCHASING NOTE WHOSE ATTRIBUTES DO NOT MATCH THEREOF?

TRANSACTION DATA

N    Y

ISSUE PARTIAL UNBUNDLED RENEWABLE ENERGY POWER SUPPLY CERTIFICATE WITH SMALLER AMOUNT OUT OF UNPROCESSED AMOUNT OF ENVIRONMENTAL CERTIFICATE PURCHASING NOTE AND UNPROCESSED AMOUNT OF POWER PURCHASING NOTE

RECORD

REDUCE UNPROCESSED AMOUNT OF INVALIDATION OF ENVIRONMENTAL CERTIFICATE PURCHASING NOTE AND POWER PURCHASING NOTE BY AMOUNT OF NEW CERTIFICATE ISSUANCE, AND SIMILARLY ADD PROCESSED AMOUNT

RECORD

NOTIFY ISSUANCE PROCESSING RESULT OF SUPPLY CERTIFICATE

RECIEVE    TRANSMIT

FIG.20

| SELLER | PURCHASER | TRANS -MISSION /RECEPTION UNIT | PROCESSOR | STORAGE UNIT | TRANS -ACTION DB |
|---|---|---|---|---|---|

SELLER: TERM-INAL | SM
PURCHASER: TERM-INAL | SM
STORAGE UNIT: SELLER DB | PERCHASER DB

SELLING ORDER (ENVIRONMENTAL CERTIFICATE)

RECIEVE

RECEIVE SELLING ORDER

RECORD

PURCHASING ORDER (ENVIRONMENTAL CERTIFICATE)

TRANSMIT

RECEIVE PURCHASING ORDER

RECORD

ORDER DATA

CANCELLATION OF CONTRACT TARGET NOTE IN WHICH TRADE CONDITION IS MATCHED AND ISSUE/DELIVERY OF SECONDARY SELLING NOTE AND PURCHASING NOTE

CANCELLATION OF UNCONTRACTED ORDER

RECORD

RECIEVE

TRANSMIT

NOTIFY TRANSACTION RESULT

RECIEVE

EP 4 773 070 A1

53

## FIG.21

### POWER SELLING NOTE

| TIME ZONE | FRIDAY, APRIL 5TH, 9:00-9:59 2024 | PAR AMOUNT OF NOTE | 2 6 0 kWh |
| HOLDER | AICHI IRONWORKS | HOLDER ID | D-16856 | NOTE ID | DEN-S-74564 |
| STATUS | BEFORE TRANSACTION, CONTRACTED, EXCHANGED, COMPLETION OF RETROSPECTIVE SWAP TRANSACTION | LATEST CORRECTION DATE | 2024/4/5/10:20 |

### A  POWER DEMAND-SUPPLY PLAN INFORMATION (SUPPLY PLAN)

| SUPPLIER ID | S-10004 | SUPPLIER | NAGOYA THERMAL POWER PLANT | POWER SUPPLY TYPE | THERMAL POWER GENERATION |
| FACILITY ID | S-10004-1 | POWER GENERATION POINT NUMBER | 10102 | SMART METER ID | 1500254 |
| LOCATION OF SUPPLIER | 35, SHIOMICHO, MINATO WARD, NAGOYA, AICHI | PLANNED POWER GENERATION AMOUNT | 9,8 0 0 kWh |

### B  FUTURE TRANSACTION INFORMATION

| SELLING ORDER ID | S-10004-240405-09-35 | | PLANNED POWER GENERATION AMOUNT | 9,8 0 0 kWh |
| QUANTITY TYPE | PART OF 30 DIVISIONS | SELLING ORDER AMOUNT | 3 0 0 kWh | BLOCK ORDER | SAME ORDER |
| TRANSACTION CONDITION | GUARANTEED PROVISION OF ACTUAL POWER GENERATION AMOUNT AND GUARANTEED RECEIPT OF ACTUAL POWER CONSUMPTION AMOUNT |

| FLUCTUATION RISK OF POWER GENERATION AMOUNT | 0.05% | STANDARD DEVIATION | 0.01 | DISCOUNT RATE | 0.5% | OUTPUT SUPPRESSION RISK | 0.02% |

| TRANSAC-TION ID | 240405-09-3512 | STATUS | CONT-RACT | PURCHASER ID | D-20145-K3 | PURCHASER NAME | TANPOPO KINDERGARTEN SHUTTLE EV BUS "YUME" |
| CONTRACT AMOUNT | 3 0 0 kWh |

### C  POWER DEMAND-SUPPLY PERFORMANCE INFORMATION

| ACTUAL POWER GENERATION AMOUNT OF BLOCK | 3 0 0 kWh | ACTUAL POWER CONSUMPTION AMOUNT OF PURCHASER | 2 6 0 kWh |
| STATUS | SETTLED | PURCHASER ID | D-20145-K3 | PURCHASER NAME | TANPOPO KINDERGARTEN SHUTTLE EV BUS "YUME" |
| PAR AMOUNT OF NOTE AFTER SETTLEMENT | 2 6 0 kWh |

### D  MATTERS RELATED TO POWER SWAP TRANSACTION

| STATUS | CONT-RACT | PURCHASER ID | D-16856 | NOTE EXCHANGE AMOUNT | 2 6 0 kWh |
| PURCHASER NAME | AICHI IRONWORKS | TRANSACTION ID | DS-240405-09-7548 |

### E  MATTERS RELATED TO ENVIRONMENTAL CERTIFICATE

| STATUS | NOT PERFORMED | UNPROCESSED AMOUNT | ABOUT 260 kWh | PROCESSED AMOUNT | ABOUT 0 kWh |

FIG.22

POWER PURCHASING NOTE

| TIME ZONE | FRIDAY, APRIL 5TH, 2024 9:00-9:59 | PAR AMOUNT OF NOTE | 2 8 0 kWh |
| HOLDER | NAGOYA THERMAL POWER PLANT | HOLDER ID S-10004 | NOTE ID DEN-D-10284 |
| STATUS | BEFORE TRANSACTION, CONTRACTED, EXCHANGED, COMPLETION OF RETROSPECTIVE SWAP TRANSACTION | LATEST CORRECTION DATE | 2024/4/8/9:20 |

**A POWER DEMAND-SUPPLY PLAN INFORMATION (DEMAND PLAN)**

| CONSUMER ID | D-16856 | CONSUMER | AICHI IRONWORKS | LOAD TYPE | INDOOR LOAD |
| FACILITY ID | D-16856-1 | CONSUMPTION POINT NUMBER | 10305 | SMART METER ID | 1262865 |
| LOCATION OF CONSUMER | | 38, KONAN, MINAMI WARD, NAGOYA, AICHI | | PLANNED DEMAND AMOUNT | 9,0 0 0 kWh |

**B FUTURE TRANSACTION INFORMATION**

PLANNED DEMAND AMOUNT  9,0 0 0 kWh

| PURCHASING ORDER ID | D-16856-K2-240405-09-7596 |
| QUANTITY TYPE | PART OF 30 DIVISIONS | PURCHASING ORDER AMOUNT | 3 0 0 kWh | BLOCK ORDER | SAME ORDER |
| TRANSACTION CONDITION | GUARANTEED PROVISION OF ACTUAL POWER GENERATION AMOUNT AND GUARANTEED RECEIPT OF ACTUAL POWER CONSUMPTION AMOUNT |

| FLUCTUATION RISK OF POWER CONSUMPTION AMOUNT | 0.15% | STANDARD DEVIATION | 0.01 | DISCOUNT RATE | 0.5% | OUTPUT SUPPRESSION RISK | 0.03% |

| TRANSACTION ID | 240405-09-3895 | STATUS | CONTRACT | SELLER ID | S-30542-K2 | SELLER NAME | OHISAMA 2 |
| CONTRACT AMOUNT | 3 0 0 kWh |

**C POWER DEMAND-SUPPLY PERFORMANCE INFORMATION**

| ACTUAL POWER CONSUMPTION AMOUNT OF BLOCK | 2 8 0 kWh | ACTUAL POWER GENERATION AMOUNT OF SELLER | 2 8 0 kWh |
| STATUS | SETTLED | SELLER ID | S-30542-K2 | SELLER NAME | OHISAMA 2 |
| PAR AMOUNT OF NOTE AFTER SETTLEMENT | 2 8 0 kWh |

**D MATTERS RELATED TO POWER SWAP TRANSACTION**

| STATUS | CONTRACT | SELLER ID | S-10004 | NOTE EXCHANGE AMOUNT | 2 8 0 kWh |
| SELLER NAME | NAGOYA THERMAL POWER PLANT | TRANSACTION ID | DS-240405-09-7548 |

**E MATTERS RELATED TO SUPPLY CERTIFICATE ISSUANCE PROCESSING**

| STATUS | NOT PERFORMED | UNPROCESSED AMOUNT | ABOUT 280 kWh | PROCESSED AMOUNT | ABOUT 0 kWh |

FIG.23

ENVIRONMENTAL CERTIFICATE
SELLING NOTE

| TIME ZONE | FRIDAY, APRIL 5TH, 2024 9:00-9:59 | PAR AMOUNT OF NOTE | **2 6 0 kWh** |

| HOLDER | TANPOPO KINDERGARTEN SHUTTLE EV BUS "YUME" | HOLDER ID | **D-20145-K3** | NOTE ID | **KAN-S-10030** |

| STATUS | BEFORE TRANSACTION, CONTRACTED, EXCHANGED, INVALIDATED | LATEST CORRECTION DATE | **2024/4/8/9:20** |

**A POWER DEMAND-SUPPLY PLAN INFORMATION (SUPPLY PLAN)**

| SUPPLIER ID | **S-30542** | SUPPLIER | OHISAMA 2 | POWER SUPPLY TYPE | RENEWABLE ENERGY (SOLAR POWER) |

| FACILITY ID | **S-30542-1** | POWER GENERATION POINT NUMBER | **50725** | SMART METER ID | **7850254** |

| LOCATION OF SUPPLIER | 16, MIDORIGAOKA, MATSUMOTO, NAGANO |

| SEGMENTED SUPPLIER ID | **S-30542-K2** | SEGMENTED SUPPLIER | OHISAMA 2 | POWER SUPPLY TYPE | SOLAR POWER |

| SEGMENTED FACILITY ID | **S-30542-1-K2** | SEGMENTED SMART METER ID | **7850254-K2** | PLANNED POWER GENERATION AMOUNT | **9 0 0 kWh** |

**B FUTURE TRANSACTION INFORMATION**

| SELLING ORDER ID | **S-30542-K2-240405-09-5468** | PLANNED POWER GENERATION AMOUNT | **9 0 0 kWh** |

| QUANTITY TYPE | PART OF 3 DIVISIONS | SELLING ORDER AMOUNT | ABOUT 300 kWh | BLOCK ORDER | 3RD RANK OUT OF 3 |

| SALES CONDITION | GUARANTEED PROVISION OF ACTUAL POWER GENERATION AMOUNT AND GUARANTEED RECEIPT OF ACTUAL POWER CONSUMPTION AMOUNT |

| FLUCTUATION RISK OF POWER GENERATION AMOUNT | **25.45%** | STANDARD DEVIATION | **5.31** | DISCOUNT RATE | **25.5%** | OUTPUT SUPPRESSION RISK | **0.01%** |

| TRANSAC-TION ID | **240405-09-7548** | STATUS | CONT-RACT | PURCHASER ID | **D-20145-K3** | PURCHASER NAME | TANPOPO KINDERGARTEN SHUTTLE EV BUS "YUME" |

| CONTRACT AMOUNT | ABOUT 300 kWh |

**C POWER DEMAND-SUPPLY PERFORMANCE INFORMATION**

| ACTUAL POWER GENERATION AMOUNT OF BLOCK | **2 8 0 kWh** | ACTUAL POWER CONSUMPTION AMOUNT OF PURCHASER | **2 6 0 kWh** |

| STATUS | SETTLED | PURCHASER ID | **D-20145-K3** | PURCHASER NAME | TANPOPO KINDERGARTEN SHUTTLE EV BUS "YUME" |

| PAR AMOUNT OF NOTE AFTER SETTLEMENT | ABOUT 260 kWh |

**D MATTERS RELATED TO PHYSICAL TRANSACTION**

| STATUS | NON-PARTI-CIPATION | PURCHASER ID | **N.A** | PURCHASER NAME | **N.A** | CONTRACT/NOTE EXCHANGE AMOUNT | **N.A** |

**E MATTERS RELATED TO ENVIRONMENTAL CERTIFICATE INVALIDATION PROCESSING**

| STATUS | NOT PERFORMED | UNPROCESSED AMOUNT | ABOUT 260 kWh | PROCESSED AMOUNT | ABOUT 0 kWh |

FIG.24

**ENVIRONMENTAL CERTIFICATE PURCHASING NOTE**

| TIME ZONE | FRIDAY, APRIL 5TH, 2024 | 9:00-9:59 | PAR AMOUNT OF NOTE | 2 6 0 kWh |

| HOLDER | OHISAMA 2 | HOLDER ID | S-30542-K2 | NOTE ID | KAN-D-10794 |

| STATUS | BEFORE TRANSACTION, CONTRACTED, ~~EXCHANGED~~, COMPLETION OF SUPPLY CERTIFICATE ISSUANCE | LATEST CORRECTION DATE | 2024/4/8/9:20 |

**A  POWER DEMAND-SUPPLY PLAN INFORMATION (DEMAND PLAN)**

| CONSUMER ID | D-20145 | CONSUMER | TANPOPO KINDERGARTEN | LOAD TYPE | INDOOR LOAD AND EV |

| FACILITY ID | D-20145-1 | POWER SUPPLY POINT NUMBER | 67869 | SMART METER ID | 1693265 |

| LOCATION OF SUPPLIER | 98, AKAMONCHO, SHIOJIRI, NAGANO |

| SEGMENTED CONSUMER ID | D-20145-K3 | SEGMENTED CONSUMER | SHUTTLE EV BUS "YUME" | LOAD TYPE | EV BUS |

| SEGMENTED FACILITY ID | D-20145-1-K3 | SEGMENTED SMART METER ID | 1693265-K3 | PLANNED DEMAND AMOUNT | 6 0 0 kWh |

**B  FUTURE TRANSACTION INFORMATION**

| PURCHASING ORDER ID | D-20145-K3-240405-09-7596 | PLANNED DEMAND AMOUNT | 6 0 0 kWh |

| QUANTITY TYPE | PART OF 2 DIVISIONS | PURCHSING ORDER AMOUNT | ABOUT 300 kWh | BLOCK ORDER | 2ND RANK OUT OF 2 |

| SALES CONDITION | GUARANTEED PROVISION OF ACTUAL POWER GENERATION AMOUNT AND GUARANTEED RECEIPT OF ACTUAL POWER CONSUMPTION AMOUNT |

| FLUCTUATION RISK OF POWER CONSUMPTION AMOUNT | 7.3% | STANDARD DEVIATION | 1.42 | DISCOUNT RATE | 18.5% | OUTPUT SUPPRESSION RISK | 0.02% |

| TRANSACTION ID | 240405-09-7548 | STATUS | CONTRACT | SELLER ID | S-30542-K2 | SELLER NAME | OHISAMA 2 |

| CONTRACT AMOUNT | ABOUT 300 kWh |

**C  POWER DEMAND-SUPPLY PERFORMANCE INFORMATION**

| ACTUAL POWER CONSUMPTION AMOUNT OF BLOCK | 2 6 0 kWh | ACTUAL POWER GENERATION AMOUNT OF SELLER | 2 8 0 kWh |

| STATUS | SETTLED | SELLER ID | S-30542-K2 | SELLER NAME | OHISAMA 2 |

| PAR AMOUNT OF NOTE AFTER SETTLEMENT | ABOUT 260 kWh |

**D  MATTERS RELATED TO PHYSICAL TRANSACTION**

| STATUS | NON-PARTICIPATION | SELLER ID | N.A | SELLER NAME | N.A | CONTRACT/NOTE EXCHANGE AMOUNT | N.A |

**E  MATTERS RELATED TO SUPPLY CERTIFICATE ISSUANCE PROCESSING**

| STATUS | NOT PERFORMED | UNPROCESSED AMOUNT | ABOUT 260 kWh | PROCESSED AMOUNT | ABOUT 0 kWh |

FIG.25

EP 4 773 070 A1

| | | POWER TRANSACTION | | | | | | | | | | | | ENVIRONMENTAL CERTIFICATE TRANSACTION | | | | | | | |
| --- | --- | --- | --- | --- | --- | --- | --- | --- | --- | --- | --- | --- | --- | --- | --- | --- | --- | --- | --- | --- | --- |
| | | SELLER A (OHISAMA RENEWABLE ENERGY POWER PLANT) | | | SELLER B (THERMAL POWER PLANT) | | | PURCHASER X (TANPOPO KINDERGARTEN) | | | PURCHASER Y (ELECTRIC POWER RETAILER COMPANY) | | | SELLER A | | SELLER B | | PURCHASER X | | PURCHASER Y | |
| | | POWER GENERATION AMOUNT | SELLING NOTE | PURCHASING NOTE | POWER GENERATION AMOUNT | SELLING NOTE | PURCHASING NOTE | POWER CONSUMPTION AMOUNT | SELLING NOTE | PURCHASING NOTE | POWER CONSUMPTION AMOUNT | SELLING NOTE | PURCHASING NOTE | SELLING NOTE | PURCHASING NOTE | SELLING NOTE | PURCHASING NOTE | SELLING NOTE | PURCHASING NOTE | SELLING NOTE | PURCHASING NOTE |
| 2. NOTE ISSUANCE PROCESS | EXPECTED POWER AMOUNT IN CURRENT PERIOD ① | 500 | | | 8,000 | | | 600 | | | 152,000 | | | | | | | | | | |
| | NEW NOTE ISSUANCE AMOUNT ②=① | | 500 | | | 8,000 | | | | 600 | | | 152,000 | 500 | | 0 | 0 | | 600 | | 152,000 |
| 3. FUTURE TRANSACTION | TRANSACTION PARTNER NO. 1 | PURCHASER Y | | | PURCHASER X | | | SELLER B | | | SELLER A | | | PURCHASER X | | NONE | | SELLER A | | NONE | |
| | TRANSACTION AMOUNT AND NOTE TRANSFER AMOUNT ③ | 500 | -500 | +500 | 600 | -600 | +600 | 600 | +600 | -600 | 500 | +500 | -500 | -400 | +400 | | | +400 | -400 | | |
| | TRANSACTION PARTNER NO. 2 | | | | PURCHASER Z | | | | | | SELLER C | | | | | | | | | | |
| | TRANSACTION AMOUNT AND NOTE TRANSFER AMOUNT ④ | | | | 7,400 | -7,400 | +7,400 | | | | 151,500 | +151,500 | -151,500 | | | | | | | | |
| | NOTE BALANCE ⑤=②+③+④ | | 0 | 500 | | 0 | 8,000 | 600 | 600 | 0 | | 152,000 | 0 | 100 | 400 | 0 | 0 | 400 | 200 | 0 | 152,000 |
| 4. SETTLEMENT | ACTUAL POWER AMOUNT IN CURRENT PERIOD ⑥ | 320 | | | 8,020 | | | 540 | | | 151,900 | | | | | | | | | | |
| | ACTUAL POWER AMOUNT - EXPECTED POWER AMOUNT ⑦=⑥-① | -180 | | | +20 | | | -60 | | | -100 | | | | | | | | | | |
| | CORRECTION AMOUNT FOR DIFFERENCE BETWEEN ACTUAL VALUE AND PREDICTED VALUE ⑧ | | -180 | | | +20 | | | | -60 | | | -100 | -180 | | | | | -60 | | -100 |
| | CORRECTION FOR ACTUAL DELIVERY OF FUTURE TRANSACTION ⑨ | | +180 | -180 | | -20 | +20 | | -60 | +60 | | -100 | +100 | +80 | -80 | | | -80 | +80 | | |
| | NOTE BALANCE ⑩=⑤+⑧+⑨ | | 0 | 320 | | 0 | 8,020 | 540 | 0 | | 151,900 | 0 | 0 | 0 | 320 | 0 | 0 | 320 | 220 | 0 | 151,900 |
| 8. ENVIRONMENTAL CERTIFICATE PHYSICAL TRANSACTION | TRANSACTION PARTNER ⑪ | | | | | | | | | | | | | | | | | | | | |
| | TRANSACTION AMOUNT AND NOTE TRANSFER AMOUNT ⑪ | | | | | | | | | | | | | | | | | | | | |
| | NOTE BALANCE ⑫=⑩+⑪ | | | | | | | | | | | | | | | | | | | | |

F11

SELLER D

| | +140 | -140 |
| --- | --- | --- |
| | +460 | +80 |

F12

| 9. POWER RETROSPECTIVE SWAP TRANSACTION | TRANSACTION PARTNER NO. 1 | PURCHASER X | | | PURCHASER X (CANCELLATION) | | | SELLER A | | | SELLER A (CANCELLATION) | | |
| --- | --- | --- | --- | --- | --- | --- | --- | --- | --- | --- | --- | --- | --- |
| | SWAP AMOUNT ⑬ | +320 | -320 | +320 | -320 | +320 | -320 | +320 | +320 | -320 | -320 | -320 | +320 |
| | TRANSACTION PARTNER NO. 2 | PURCHASER Y (CANCELLATION) | | | PURCHASER Y | | | SELLER B (CANCELLATION) | | | SELLER B | | |
| | SWAP AMOUNT ⑭=⑬×(-1) | -320 | +320 | -320 | +320 | -320 | +320 | -320 | -320 | +320 | +320 | +320 | -320 |
| | NOTE BALANCE ⑮=⑫+⑬+⑭ | | 0 | 320 | | 0 | 8,020 | 540 | 0 | | 151,900 | 0 | | |

F13

| 10. INVALIDATION / 11. SUPPLY CERTIFICATE ISSUANCE | | SELLER A | SELLER B | PURCHASER X | PURCHASER Y |
| --- | --- | --- | --- | --- | --- |
| | ACTUAL POWER AMOUNT IN CURRENT PERIOD ⑥ | 540 | 8,020 | 540 | 151,900 |
| | BUNDLED RENEWABLE ENERGY POWER AMOUNT ⑯ | 320 | 0 | 320 | 0 |
| | PARTIAL BUNDLED RENEWABLE ENERGY POWER AMOUNT ⑰ | 0 | 0 | 0 | 0 |
| | UNBUNDLED RENEWABLE ENERGY POWER AMOUNT ⑱ | 140 | 0 | 140 | 0 |
| | DEDUCTION ⑲=⑥-(⑯+⑰+⑱) | 220 | 8,020 | 0 | 151,900 |
| | RENEWABLE ENERGY POWER GENERATION AND CONSUMPTION RATE ⑳=(⑥-⑲)÷⑥ | 85% | 0% | 85% | 0% |

F14    F15

FIG.26

EP 4 773 070 A1

59

| | | POWER TRANSACTION | | | | | | | | | | | | ENVIRONMENTAL CERTIFICATE TRANSACTION | | | | | | | |
| | | SELLER A (OHISAMA RENEWABLE ENERGY POWER PLANT) | | | SELLER B (THERMAL POWER PLANT) | | | PURCHASER X (TANPOPO KINDERGARTEN) | | | PURCHASER Y (ELECTRIC POWER RETAILER COMPANY) | | | SELLER A | | SELLER B | | PURCHASER X | | PURCHASER Y | |
| | | POWER GENERATION AMOUNT | SELL-ING NOTE | PUR-CHAS-ING NOTE | POWER GENERATION AMOUNT | SELL-ING NOTE | PUR-CHAS-ING NOTE | POWER CONSUMP-TION AMOUNT | SELL-ING NOTE | PUR-CHAS-ING NOTE | POWER CONSUMP-TION AMOUNT | SELL-ING NOTE | PUR-CHAS-ING NOTE | SELL-ING NOTE | PUR-CHAS-ING NOTE | SELL-ING NOTE | PUR-CHAS-ING NOTE | SELL-ING NOTE | PUR-CHAS-ING NOTE | SELL-ING NOTE | PUR-CHAS-ING NOTE |
| 2. NOTE ISSUANCE PROCESS | EXPECTED POWER AMOUNT IN CURRENT PERIOD ① | 500 | | | 8,000 | | | 600 | | | 152,000 | | | | | | | | | | |
| | NEW NOTE ISSUANCE AMOUNT ②=① | | 500 | | | 8,000 | | | 600 | | | 152,000 | 500 | | 0 | 0 | | 600 | | 152,000 |
| 3. FUTURE TRANSACTION | TRANSACTION PARTNER NO. 1 | PURCHASER Y | | | PURCHASER X | | | SELLER B | | | SELLER A | | | PURCHASER X | | NONE | | SELLER A | | NONE | |
| | TRANSACTION AMOUNT AND NOTE TRANSFER AMOUNT ③ | 500 | -500 | +500 | 600 | -600 | +600 | 600 | +600 | -600 | 500 | +500 | -500 | -500 | +500 | | | +500 | -500 | | |
| | TRANSACTION PARTNER NO. 2 | | | | PURCHASER Z | | | | | | SELLER C | | | | | | | | | | |
| | TRANSACTION AMOUNT AND NOTE TRANSFER AMOUNT ④ | | | | 7,400 | -7,400 | +7,400 | | | | 151,500 | +151,500 | -151,500 | | | | | | | | |
| | NOTE BALANCE ⑤=②+③+④ | | 0 | 500 | | 0 | 8,000 | 600 | 600 | 0 | | 152,000 | 0 | 0 | 500 | 0 | 0 | 500 | 100 | 0 | 152,000 |
| 4. SETTLE-MENT | ACTUAL POWER AMOUNT IN CURRENT PERIOD ⑥ | 550 | | | 7,900 | | | 480 | | | 152,070 | | | | | | | | | | |
| | ACTUAL POWER AMOUNT – EXPECTED POWER AMOUNT ⑦=⑥-① | +50 | | | -100 | | | -120 | | | +70 | | | | | | | | | | |
| | CORRECTION AMOUNT FOR DIFFERENCE BETWEEN ACTUAL VALUE AND PREDICTED VALUE ⑧ | | +50 | | | -100 | | | | -120 | | +70 | +50 | | | | -120 | | +70 | | |
| | CORRECTION FOR ACTUAL DELIVERY OF FUTURE TRANSACTION ⑨ | | -50 | +50 | | +100 | -100 | | -120 | +120 | | +70 | -70 | +20 | -20 | | | -20 | +20 | | |
| | NOTE BALANCE ⑩=⑤+⑧+⑨ | | 0 | 550 | | 0 | 7,900 | 480 | 0 | | 152,070 | 0 | 70 | 480 | 0 | 0 | 480 | 0 | 0 | 152,070 |
| 8. ENVIRONMENTAL CERTIFICATE PHYSICAL TRANSACTION | TRANSACTION PARTNER | | | | | | | | | | | | | | | | | PURCHASER P | | | |
| | TRANSACTION AMOUNT AND NOTE TRANSFER AMOUNT ⑪ | | | | | | | | | | | | | | | | | -70 | +70 | | |
| | NOTE BALANCE ⑫=⑩+⑪ | | | | | | | | | | | | | | | | | 0 | 550 | | |
| 9. POWER RETROSPECTIVE SWAP TRANSACTION | TRANSACTION PARTNER NO. 1 | PURCHASER X | | | PURCHASER X (CANCELLATION) | | | SELLER A | | | SELLER A (CANCELLATION) | | | | | | | | | | |
| | SWAP AMOUNT ⑬ | +480 | -480 | +480 | -480 | +480 | -480 | +480 | +480 | -480 | -480 | -480 | +480 | | | | | | | | |
| | TRANSACTION PARTNER NO. 2 | PURCHASER Y (CANCELLATION) | | | PURCHASER Y | | | SELLER B (CANCELLATION) | | | SELLER B | | | | | | | | | | |
| | SWAP AMOUNT ⑭=⑬X(-1) | -480 | +480 | -480 | +480 | -480 | +480 | -480 | -480 | +480 | +480 | +480 | -480 | | | | | | | | |
| | NOTE BALANCE ⑮=⑫+⑬+⑭ | | 0 | 550 | | 0 | 7,900 | 480 | 0 | | 152,070 | 0 | | | | | | | | | |
| 10. INVALIDATION | ACTUAL POWER AMOUNT IN CURRENT PERIOD ⑥ | 550 | | | 7,900 | | | 480 | | | 152,070 | | | | | | | | | | |
| | BUNDLED RENEWABLE ENERGY POWER AMOUNT ⑯ | 480 | | | 0 | | | 480 | | | 0 | | | | | | | | | | |
| | PARTIAL BUNDLED RENEWABLE ENERGY POWER AMOUNT ⑰ | 0 | | | 0 | | | 0 | | | 0 | | | | | | | | | | |
| 11. SUPPLY CERTIFICATE ISSUANCE | UNBUNDLED RENEWABLE ENERGY POWER AMOUNT ⑱ | 70 | | | 0 | | | 0 | | | 0 | | | | | | | | | | |
| | DEDUCTION ⑲=⑥-(⑯+⑰+⑱) | 70 | | | 7,900 | | | 0 | | | 152,070 | | | | | | | | | | |
| | RENEWABLE ENERGY POWER GENERATION AND CONSUMPTION RATE ⑳=(⑥-⑲)÷⑥ | 100% | | | 0% | | | 100% | | | 0% | | | | | | | | | | |

F21  F22  F23  F24  F25

| | | POWER TRANSACTION | | | | | | | | | ENVIRONMENTAL CERTIFICATE TRANSACTION | | | | | |
|---|---|---|---|---|---|---|---|---|---|---|---|---|---|---|---|---|
| | | SUPPLY CONSUMER A (OUCHI RENEWABLE ENERGY POWER PLANT) | | | SELLER B (THERMAL POWER PLANT) | | | PURCHASER X (TANPOPO KINDERGARTEN) | | | SUPPLY CONSUMER A | | SELLER B | | PURCHASER X | |
| | | POWER GENERA-TION AMOUNT | SELL-ING NOTE | PUR-CHAS-ING NOTE | POWER GENERA-TION AMOUNT | SELL-ING NOTE | PUR-CHAS-ING NOTE | POWER CONSUMP-TION AMOUNT | SELL-ING NOTE | PUR-CHAS-ING NOTE | SELL-ING NOTE | PUR-CHAS-ING NOTE | SELL-ING NOTE | PUR-CHAS-ING NOTE | SELL-ING NCTE | PUR-CHAS-ING NOTE |
| 2. NOTE ISSUANCE PROCESS | EXPECTED POWER AMOUNT IN CURRENT PERIOD ① | 500 | | | 8,000 | | | 400 | | | | | | | | |
| | NEW NOTE ISSU -ANCE AMOUNT ②＝① | | 500 | 500 | | 8,000 | | | | 400 | 500 | | 0 | 0 | | 400 |
| 3. FUTURE TRANSAC -TION | TRANSACTION PARTNER NO. 1 | SELF-CONSUMPTION | | | PURCHASER X | | | SELLER B | | | PURCHASER X | | NONE | | SELLER A | |
| | TRANSACTION AMOUNT AND NOTE TRANSFER AMOUNT ③ | 0 | ±0 | ±0 | 400 | -400 | +400 | 400 | +400 | -400 | -400 | +400 | | | +400 | -400 |
| | TRANSACTION PARTNER NO. 2 | | | | PURCHASER Z | | | | | | | | | | | |
| | TRANSACTION AMOUNT AND NOTE TRANSFER AMOUNT ④ | | | | 7,600 | -7,600 | +7,600 | | | | | | | | | |
| | NOTE BALANCE ⑤＝②+③+④ | | 500 | 500 | | 0 | 8,000 | 400 | 400 | 0 | 100 | 400 | 0 | 0 | 400 | 0 |
| 4. SETTLE -MENT | ACTUAL POWER AMOUNT IN CURRENT PERIOD ⑥ | 320 | | | 8,150 | | | 450 | | | | | | | | |
| | ACTUAL POWER AMOUNT - EXPECTED POWER AMOUNT ⑦＝⑥-① | -180 | | | +150 | | | +50 | | | | | | | | |
| | CORRECTION AMOUNT FOR DIFFERENCE BETWEEN ACTUAL VALUE AND PREDICTED VALUE ⑧ | | -180 | -180 | | +150 | | | | +50 | -180 | | | | | +50 |
| | CORRECTION FOR ACTUAL DELI -VERY OF FUTURE TRANSACTION ⑨ | | | | | -150 | +150 | | +50 | -50 | +80 | -80 | | | -80 | +80 |
| | NOTE BALANCE ⑩＝⑤+⑧+⑨ | 320 | 320 | | 0 | 8,150 | | 450 | 0 | 0 | 320 | 0 | 0 | 320 | 130 | |
| 8. ENVIRO -NMENTAL CERTIFICA -TE PHYSI -CAL TRANS -ACTION | TRANSACTION PARTNER | | | | | | | | | | | | | SELLER C | | |
| | TRANSACTION AMOUNT AND NOTE TRANSFER AMOUNT ⑪ | | | | | | | | | | | | | +130 | -130 | |
| | NOTE BALANCE ⑫＝⑩+⑪ | | | | | | | | | | | | | 450 | 0 | |
| 9. POWER RETROSP -ECTIVE SWAP TR -ANSAC -TION | TRANSACTION PARTNER NO. 1 | SELL TO PURCHASER X | | | PURCHASER X (CANCELLATION) | | | PURCHASE FROM SUPPLY CONSUMER A | | | | | | | | |
| | SWAP AMOUNT ⑬ | +320 | -320 | +320 | +320 | -320 | +320 | +320 | +320 | -320 | | | | | | |
| | TRANSACTION PARTNER NO. 2 | PURCHASE FROM SELLER B | | | SELL TO SUPPLY CONSUMER A | | | SELLER B (CANCELLATION) | | | | | | | | |
| | SWAP AMOUNT ⑭＝⑬×(-1) | -320 | +320 | -320 | -320 | +320 | -320 | -320 | -320 | +320 | | | | | | |
| | NOTE BALANCE ⑮＝⑫+⑬+⑭ | | 320 | 320 | | 0 | 8,150 | | 450 | 0 | | | | | | |
| 10. INVALI -DATION | ACTUAL POWER AMOUNT IN CURRENT PERIOD ⑥ | 320 | | | 8,150 | | | 450 | | | | | | | | |
| | BUNDLED RENEWABLE ENERGY POWER AMOUNT ⑯ | 320 | | | 0 | | | 320 | | | | | | | | |
| | PARTIAL BUNDLED RENEWABLE ENERGY POWER AMOUNT ⑰ | 0 | | | 0 | | | 0 | | | | | | | | |
| 11. SUPPLY CERTI -FICATE ISSUANCE | UNBUNDLED RENEWABLE ENERGY POWER AMOUNT ⑱ | 0 | | | 0 | | | 130 | | | | | | | | |
| | DEDUC -TION ⑲＝⑥-(⑯+⑰+⑱) | 0 | | | 8,150 | | | 0 | | | | | | | | |
| | RENEWABLE ENERGY POWER GENERATION AND CONSUMPTION RATE ⑳＝(⑥-⑲)÷⑥ | 100% | | | 0% | | | 100% | | | | | | | | |

F31

F32

F33

F34

F35

FIG.28

<MAIN FLOWCHART>

## FIG.29

<FLOW B>

| CERTIFICATE SELLER Sx | CERTIFICATE TRADER | CERTIFICATE PURCHASER Dy |
|---|---|---|

FROM MAIN FLOWCHART
(WHICH STARTS TRANSACTION OF THIS ROUND)

VALUE OF :
SELLING ORDER AMOUNT $Q(S_k)$ — PURCHASING ORDER AMOUNT OF m PEOPLE $\sum_{k=1}^{m} Q(D_k)$
FOR n PEOPLE

NEGATIVE VALUE   ZERO   POSITIVE VALUE     POSITIVE VALUE   ZERO   NEGATIVE VALUE

**CONTRACT SALES TRANSACTION OF SUM**

$Q(Sx)$

WITH ALL PURCHASERS

*
INDIVIDUAL CONTRACT AMOUNT WITH PURCHASER Dy IS

$$\frac{Q(S_x) \times Q(D_y)}{\sum_{k=1}^{m} Q(D_k)}$$

**CONTRACT SALES TRANSACTION OF SUM**

$$\frac{\sum_{k=1}^{m} Q(D_k) \times Q(S_x)}{\sum_{k=1}^{n} Q(S_k)}$$

WITH ALL PURCHASERS

*
INDIVIDUAL CONTRACT AMOUNT WITH PURCHASER Dy IS

$$\frac{Q(S_x) \times Q(D_y)}{\sum_{k=1}^{n} Q(S_k)}$$

**CONTRACT PURCHASE TRANSACTION OF SUM**

$Q(Dy)$

WITH ALL SELLERS

*
INDIVIDUAL CONTRACT AMOUNT WITH SELLER Sx IS

$$\frac{Q(S_x) \times Q(D_y)}{\sum_{k=1}^{n} Q(S_k)}$$

**CONTRACT PURCHASE TRANSACTION OF SUM**

$$\frac{\sum_{k=1}^{n} Q(S_k) \times Q(D_y)}{\sum_{k=1}^{m} Q(D_k)}$$

WITH ALL SELLERS

*
INDIVIDUAL CONTRACT AMOUNT WITH SELLER Sx IS

$$\frac{Q(S_x) \times Q(D_y)}{\sum_{k=1}^{m} Q(D_k)}$$

END TRANSACTION

END TRANSACTION

DETERMINE CARRYOVER (UNSOLD) AMOUNT $Q(Sx)$ IN NEXT PERIOD =

$$\left(1 - \frac{\sum_{k=1}^{m} Q(D_k)}{\sum_{k=1}^{n} Q(S_k)}\right) Q(S_x)$$

DETERMINE CARRYOVER (UNBOUGHT) AMOUNT $Q(Dy)$ IN NEXT PERIOD =

$$\left(1 - \frac{\sum_{k=1}^{n} Q(S_k)}{\sum_{k=1}^{m} Q(D_k)}\right) Q(D_y)$$

PROCEED TO
"FROM SELLER IN FLOW B"
IN MAIN FLOWCHART

PROCEED TO
"FROM PURCHASER IN FLOW B"
IN MAIN FLOWCHART

FIG.30

FIG.31

FIG.32

| SELLER A | SELLER B | SELLER C | ... | PURCHA -SER X | PURCHA -SER Y | PURCHA -SER Z | ... | TRANS -MISSION /RECEPTION UNIT | PROCESSOR | STORAGE UNIT | | TRANS -ACTION DB |
|---|---|---|---|---|---|---|---|---|---|---|---|---|
| TERM -INAL | TERM -INAL | TERM -INAL | | TERM -INAL | TERM -INAL | TERM -INAL | | | | SELLER DB | PERCHA -SER DB | |

RECIEVE ← TRANSMIT ←

RECIEVE ← TRANSMIT ←

RECIEVE ← TRANSMIT ←

RECIEVE ← TRANSMIT ←

RECIEVE ← TRANSMIT ←

RECIEVE ← TRANSMIT ←

BASED ON PRIORITY ORDER AND POWER GENERATION/CONSUMPTION PERFORMANCE, REWRITE PAR AMOUNT AND HOLDER ID OF TRANSACTION TARGET NOTE IN WHICH TRADE CONDITION IS MATCHED ← ORDER DATA

POWER GENERATION /CONSUMPTION PERFORMANCE DATA

CANCELLATION OF UNCONTRACTED ORDER ←

TRANSACTION RECORD

NOTIFY TRANSACTION RESULT ←

65

FIG.33

FIG.34

## INTERNATIONAL SEARCH REPORT

| International application No. |
| --- |
| **PCT/JP2024/019709** |

**A. CLASSIFICATION OF SUBJECT MATTER**

*G06Q 50/06*(2024.01)i
FI: G06Q50/06

According to International Patent Classification (IPC) or to both national classification and IPC

**B. FIELDS SEARCHED**

Minimum documentation searched (classification system followed by classification symbols)

G06Q50/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2020-201712 A (SHIMIZU CONSTRUCTION CO., LTD.) 17 December 2020 (2020-12-17)<br>entire text, all drawings | 1-13 |
| P, A | JP 2023-180672 A (HITACHI, LTD.) 21 December 2023 (2023-12-21)<br>entire text, all drawings | 1-13 |
| P, A | JP 2024-22403 A (HITACHI, LTD.) 16 February 2024 (2024-02-16)<br>entire text, all drawings | 1-13 |

☐ Further documents are listed in the continuation of Box C.      ☑ See patent family annex.

| | |
| --- | --- |
| *      Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
| --- | --- |
| **21 June 2024** | **02 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/019709**

| Patent document cited in search report | | | Publication date (day/month/year) | Patent family member(s) | Publication date (day/month/year) |
|---|---|---|---|---|---|
| JP | 2020-201712 | A | 17 December 2020 | (Family: none) | |
| JP | 2023-180672 | A | 21 December 2023 | (Family: none) | |
| JP | 2024-22403 | A | 16 February 2024 | (Family: none) | |

Form PCT/ISA/210 (patent family annex) (July 2022)

## REFERENCES CITED IN THE DESCRIPTION

**Patent documents cited in the description**

- JP 2023098446 A